# EUROPÄISCHE PATENTSCHRIFT

(11) **EP 3 131 837 B1**
(45) Veröffentlichungstag und Bekanntmachung des Hinweises auf die Patenterteilung: **10.08.2022**
(21) Anmeldenummer: 14723322.5
(22) Anmeldetag: 14.04.2014
(51) Int. Cl.: B65G 1/04, B60S 5/06, B60K 1/04

(54) **BEDIENFAHRZEUG, VERFAHREN ZUM BEWEGEN EINES BEDIENFAHRZEUGS AN EINER LAGERREGAL-ANORDNUNG UND LAGERREGAL-ANORDNUNG**
OPERATING VEHICLE, METHOD FOR MOVING AN OPERATING VEHICLE AT A STORAGE RACK ARRANGEMENT, AND STORAGE RACK ARRANGEMENT
VÉHICULE DE COMMANDE, PROCÉDÉ SERVANT À DÉPLACER UN VÉHICULE DE COMMANDE AU NIVEAU D'UN ENSEMBLE DE RAYONNAGES DE STOCKAGE ET ENSEMBLE DE RAYONNAGES DE STOCKAGE

(30) Priorität: 12.04.2013 DE 102013006391
(43) Veröffentlichungstag der Anmeldung: 22.02.2017
(73) Patentinhaber: Fraunhofer-Gesellschaft zur Förderung der angewandten Forschung e.V., 80686 München (DE)
(72) Erfinder: SCHROER, Winfried, 44581 Castrop-Rauxel (DE)
(74) Vertreter: Schatt, Markus F.
(86) Internationale Anmeldenummer: PCT/EP2014/000998
(87) Internationale Veröffentlichungsnummer: WO 2014/166640

(56) Entgegenhaltungen:
- EP-A2- 0 933 314
- EP-A2- 1 607 295
- EP-A2- 2 463 162
- WO-A1-2011/128384
- DE-C- 957 200
- DE-U1-202007 003 447
- GB-A- 777 989
- JP-A- S62 205 819
- JP-A- 2005 314 077
- JP-A- 2013 049 515
- US-A- 3 283 924

## Beschreibung

Die Erfindung betrifft ein Bedienfahrzeug, ein Verfahren zum Bewegen des Bedienfahrzeugs und eine Lagerregal-Anordnung, welche das Bedienfahrzeug umfasst.

Aus dem allgemeinen Stand der Technik sind Bedienfahrzeuge bekannt, die zum Transport eines Lagerbehälters an einem Lagerregal einsetzbar sind.

Aus der JP 2013 049515 A, der DE 957 200 C, der GB 777 989 A, EP 0 933 314 A2, der WO 2011/128384 A1, der DE 10 2010 015 054 A1 und der DE 22 31 057 A1 sind Bedienfahrzeuge bekannt. Die DE 22 43 107 A und die DE 20 2007 003 447 U1 beschreiben Bediengeräte. Die JP 2013 049515 A offenbart ein Bedienfahrzeug nach dem Oberbegriff des Anspruchs 1.

Aus der JP 2005 314077 A und der US 2005 314077 A ist eine Lagerregal-Anordnung bekannt.

Eine Batterieaustausch-Vorrichtung und ein daran ankoppelbares Fahrzeug ist jeweils aus der EP 1 607 295 A2, EP 2 463 162 A2 und der JP S62 205819 A bekannt.

Der vorliegenden Erfindung liegt die Aufgabe zugrunde, ein Bedienfahrzeug zum Transport eines Lagerbehälters entlang eines Lagerregals, ein Verfahren zum Bewegen eines Bedienfahrzeugs sowie eine Lagerreregal-Anordnung bereitzustellen, jeweils mit dem auf wirtschaftliche Weise Lagerbehälter entlang eines Lagerregals eingelagert oder von diesem entnommen werden können.

Diese Aufgaben werden mit den Merkmalen der unabhängigen Ansprüche gelöst. Weitere Ausführungsformen der Erfindung sind in den auf diese jeweils rückbezogenen Unteransprüchen beschrieben.

Erfindungsgemäß ist ein Bedienfahrzeug nach Anspruch 1 zum Transport eines Lagerbehälters entlang eines Lagerregals mit einem Fahrzeugrahmen vorgesehen, der zwei zueinander entgegen gesetzt gelegene Längsseiten, quer dazu verlaufende Querseiten, einen Aufnahmeraum zur Aufnahme des Lagerbehälters sowie jeweils eine an zumindest einer der Längsseiten gelegene Durchgangsöffnung ausbildet, durch die ein Lagerbehälter in den Aufnahmeraum in einer Aufnahmeraum-Einführungsrichtung eingeführt und diesem in einer Aufnahmeraum-Entnahmerichtung entnommen werden kann. Das Bedienfahrzeug weist weiterhin auf: zwei Paare von sich entlang der Längsseiten erstreckenden Antriebsraupen zur Abstützung des Bedienfahrzeugs auf an dem Lagerregal angebrachten Abstützvorrichtungen, von denen jeweils ein Paar von Antriebsraupen an jeder Längsseite des Bedienfahrzeugs gelenkig angeordnet ist, wobei von jedem Paar jeweils eine Antriebsraupe an einer Querseite und jeweils eine Antriebsraupe an einer zweiten Querseite gelegen ist, wobei die Antriebsraupen jedes Paars von Antriebsraupen mit jeweils einer Drehvorrichtung mit einer Drehachse angelenkt sind und die Drehachsen entlang der Längsseiten gesehen -seitlich des Aufnahmeraums und/oder oberhalb oder unterhalb der Durchgangsöffnung gelegen sind.

Nach einer Ausführungsform des Bedienfahrzeugs ist weiterhin vorgesehen, dass das Bedienfahrzeug eine Fördervorrichtung mit zumindest einem mit einem Antriebsmotor gekoppelten Stellteil aufweist, das derart im Aufnahmeraum gelegen ist, dass dieses an einem im Aufnahmeraum gelegenen Lagerbehälter anliegt oder zur Anlage gebracht werden kann und das, wenn dieses von dem Antriebsmotor angetrieben ist, den im Aufnahmeraum gelegenen Lagerbehälter in der Aufnahmeraum-Einführungs- oder Entnahme-Richtung aus dem Aufnahmeraum heraus bewegt.

Nach einer Ausführungsform des Bedienfahrzeugs ist vorgesehen, dass die Fördervorrichtung zwei Fördervorrichtungen aufweist, von denen jeweils eine auf jeder Seite des Aufnahmeraums gelegen ist und die derart ausgebildet sind, dass ein Lagerbehälter von diesen auf entgegen gesetzt zueinander gelegenen Seiten durch die Durchgangsöffnungen in den Aufnahmeraum eingeführt und diesem entnommen werden kann.

Nach einer Ausführungsform des Bedienfahrzeugs ist vorgesehen, dass das Bedienfahrzeug eine Greifvorrichtung zum formschlüssigen Ergreifen eines Lagerbehälters aufweist, wobei die Greifvorrichtung eine Stellvorrichtung aufweist, mit der Lagerbehälter relativ zum Aufnahmeraum verschoben werden kann.

Generell kann das Bedienfahrzeug ohne weitere Hilfsmittel von der Fahrt im Regal auf eine Fahrt auf dem Boden wechseln und umgekehrt. Dies ist mit den Antriebsraupen nach der Erfindung auch dann möglich, wenn das Bedienfahrzeug ein am Fahrzeugrahmen angeordneten Bodenbetrieb-Fahrwerk aufweist oder nicht.

Nach einem weiteren Aspekt der Erfindung ist ein Verfahren nach Anspruch 5 zum Bewegen des erfindungsgemäßen Bedienfahrzeugs an einer Lagerregal-Anordnung in Richtung einer Längsrichtung des Bedienfahrzeugs vorgesehen, wobei das Verfahren alternativ zueinander eines der nachfolgenden Schrittkombinationen (A), (B) oder (C) aufweist: Schrittkombination (A):
- Ausrichtung von Antriebsraupen des Bedienfahrzeugs in die Längsrichtung des Bedienfahrzeugs, wobei jede der Antriebsraupen auf zumindest einem Stützteil eines Lagerregal-Anordnung aufliegt und wobei die Antriebsraupen des Bedienfahrzeugs auf jeder Längsseite auf Stützteilen verschiedener Lagerregale der Lagerregal-Anordnung aufliegt,
- Antreiben jeweils eines Antriebsriemen jeder der Antriebsraupen und dadurch Fortbewegen des Bedienfahrzeugs in die Längsrichtung desselben auf den Stützteilen zwischen den Lagerregalen.

Nach einer Ausführungsform des erfindungsgemäßen Verfahrens weist die Schrittkombination (A) die folgenden Schritte auf:
- ausgehend von einer Horizontalbetriebs-Stellung der Antriebsraupen, bei der sich diese in der Längsrichtung des Bedienfahrzeugs erstrecken und das Bedienfahrzeugs auf den Stützteilen entlang einer Horizontalbahn bewegt werden kann, gleichsinniges und gleichzeitiges Schwenken der Antriebsraupen um ihre jeweilige Drehachse in die Richtung einer Diagonalbahn des jeweiligen Lagerregals,
- Antreiben des jeweils einen Antriebsriemens jeder der Antriebsraupen und dadurch Bewegen des Bedienfahrzeug auf einer Diagonalbahn.

Es kann vorgesehen sein, dass das gleichsinnige und gleichzeitige Schwenken der Antriebsraupen während der Bewegung des Bedienfahrzeugs auf den Stützteilen erfolgt.

Schrittkombination (B): das erfindungsgemäße Bedienfahrzeug wechselt zwischen folgenden Betriebszuständen:
- einem Regalbetrieb-Zustand, bei dem das Fortbewegen des Bedienfahrzeug in die Längsrichtung desselben auf den Stützteilen zwischen den Lagerregalen erfolgt, wobei die Antriebsraupen auf Stützteilen gelegen sind, und
- einem Raupen-Bodenbetriebszustand, bei dem das Bedienfahrzeug auf den Antriebsraupen auf einem Boden fährt, auf dem die Lagerregale stehen, nachdem die Antriebsraupen in eine Boden-Fahrstellung unter Anheben des Fahrzeugrahmens vom Boden gedreht worden sind,
wobei sich das Bedienfahrzeug im Übergang vom Regalbetrieb-Zustand zum Raupen-Bodenbetriebszustand oder vom Raupen-Bodenbetriebszustand zum Regalbetrieb-Zustand in einem dritten Übergangs-Betriebszustand befindet, in dem ein an einer ersten Querseite des Bedienfahrzeugs angelenkte Antriebsraupen auf Stützteilen der Lagerregale gelegen sind und gleichzeitig an einer zweiten Querseite des Bedienfahrzeugs angelenkte Antriebsraupen auf dem Boden aufliegen und dabei den Fahrzeugrahmen relativ zum Boden positioniert.

Es kann vorgesehen sein, dass die Schrittkombination (B) nach Durchführung eines Lagerregalbetrieb-Zustands oder vor Durchführung eines Lagerregalbetrieb-Zustands erfolgt.

Schrittkombination (C):
- in einem ersten Schritt Fahren des Bedienfahrzeugs auf dem Boden in einem Fahrwerk-Bodenbetriebszustand auf einem am Fahrzeugrahmen angeordneten Bodenbetrieb-Fahrwerk in einer Richtung fährt, die quer zur Längsrichtung der Lagerregale verläuft, während die Antriebsraupen in einer Drehstellung befinden, bei der diese den Boden nicht berühren,
- anschließend in einem zweiten Schritt Fahren des Bedienfahrzeugs entlang der Längsrichtung der Lagerregale und zwischen den Lagerregalen in einem Raupen-Bodenbetriebszustand, bei dem das Bedienfahrzeug auf den Antriebsraupen auf einem Boden fährt, auf dem die Lagerregale stehen, nachdem die Antriebsraupen in eine Boden-Fahrstellung unter Anheben des Fahrzeugrahmens vom Boden gedreht worden sind.

Es kann vorgesehen sein, dass die Schrittkombination (C) nach Durchführung eines Lagerregalbetrieb-Zustands oder vor Durchführung eines Lagerregalbetrieb-Zustands erfolgt. Auch kann vorgesehen sein, dass die Schrittkombination (C) nach oder vor der Durchführung des Verfahrens erfolgt, bei dem ein Wechsel zwischen dem Regalbetrieb-Zustand und dem Raupen-Bodenbetriebszustand erfolgt.

Nach einem weiteren Aspekt der Erfindung ist eine Lagerregal-Anordnung nach Anspruch 8 mit zwei Lagerregalen und einem mit den Lagerregalen interagierenden erfindungsgemäßen Bedienfahrzeug vorgesehen.

Der Anspruch 9 offenbart eine Ausführungsform der Erfindung, in der das Bedienfahrzeug zusätzlich aufweist:
- einen Fahrzeugrahmen mit einer Ausnehmung an einer in die Längsrichtung weisenden Fahrzeug-Seite, die einen Batterie-Aufnahmebereich zur Aufnahme einer Batterie für die elektrische Versorgung von elektrischen Komponenten des Fahrzeugs bildet,
- eine Führungsvorrichtung mit einer Batterie-Führungsbahn, die quer zur Fahrzeug-Längsrichtung verläuft, so dass eine in die Batterie-Führungsbahn eingesetzte Batterie quer zur Fahrzeug-Längsrichtung des bewegbar ist,
- eine Kontaktierungsvorrichtung, die zwei entlang der Batterie-Führungsbahn gesehen hintereinander angeordnete Anschlussvorrichtungen und zumindest eine Kontakt-Haltevorrichtung zum Halten der Anschlussvorrichtungen aufweist, wobei die Anschlussvorrichtungen derart ausgeführt sind, dass diese jeweils mit einem Kontaktierungsabschnitt einer in die Batterie-Führungsbahn eingesetzten Batterie in Kontakt gebracht werden, wobei die Anschlussvorrichtungen jeweils eine Leitung aufweist, die die Anschlussvorrichtungen mit einer Energieversorgungs-Vorrichtung des Fahrzeugs elektrisch verbindet.

Weiterhin kann das Bedienfahrzeug der oben genannten Ausführungsform weiterhin aufweisen:
eine an dem Fahrzeugrahmen befestigte Haltevorrichtung zum Halten der Batterie an dem Fahrzeugrahmen, wobei die an dem Fahrzeugrahmen befestigte Haltevorrichtung zum Halten der Batterie an dem Fahrzeugrahmen derart ausgeführt ist, dass die Batterie entlang der Batterie-Führungsbahn bewegbar ist und von der Haltevorrichtung quer zu dieser gehalten wird.

Nach einem weiteren Aspekt der Erfindung ist eine Lagerregal-Anordnung nach Anspruch 11 mit zwei Lagerregalen vorgesehen, die sich entlang zueinander und jeweils entlang einer Längsrichtung und einer Tiefenrichtung erstrecken, einem mit den Lagerregalen interagierenden Bedienfahrzeug nach Anspruch 9, und eine Batterie-Austauschstation zum Andocken des Bedienfahrzeugs mit einer Batterie und zum Austausch der im Fahrzeug befindlichen Batterie durch eine in der Batterie-Austauschstation befindlichen Batterie, wobei die Batterie-Austauschstation eine Austausch-Führungsvorrichtung, die zwei Führungsbahn-Abschnitte mit jeweils einer Führungsbahn und eine Verbindungsvorrichtung, die die zwei Führungsbahn-Abschnitte aneinander befestigt, aufweist, und derart an den Lagerregalen befestigt ist, dass die Führungsbahnen sich quer zur Längsrichtung der Lagerregale erstrecken, wobei der als Ausnehmung ausgebildeten Andockabschnitt zwischen den Lagerregalen gelegen ist.

Der Ausdruck "entlang" kann hierin im Zusammenhang mit den hierin genannten Richtungsangaben, die den Verlauf einer Konturlinie oder einer Oberfläche betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von maximal 45 Grad und vorzugsweise von maximal 30 Grad von einer Bezugsrichtung oder Bezugsachse abweicht, auf die bzw. der die jeweilige Richtungsangabe bezogen ist.

Der Ausdruck "quer" kann hierin im Zusammenhang mit den hierin genannten Richtungsangaben, die den Verlauf einer Konturlinie oder einer Oberfläche betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von minimal 45 Grad und vorzugsweise von minimal 30 Grad von einer Bezugsrichtung oder Bezugsachse abweicht, auf die bzw. der die jeweilige Richtungsangabe bezogen ist. Im Folgenden werden Ausführungsformen der Erfindung an Hand der beiliegenden Figuren beschrieben, die zeigen:
- Figur 1 eine perspektivische Darstellung einer erfindungsgemäßen Lagerregal-Anordnung;
- Figur 2 eine Seitendarstellung der in der Figur 1 gezeigten Ausführungsform eines Lagerregals der Anordnung;
- Figur 3 eine perspektivische Darstellung eines Ausschnitts des Lagerregals nach der Figur 2 mit einer Ausführungsform eines Bedienfahrzeugs, wobei sich das Bedienfahrzeug in einem Horizontalbahn-Fahrbetrieb in einer Lagerregal-Anordnung von zwei Lagerregalen befindet, wobei nur ein Lagerregal gezeigt ist;
- Figur 4 eine perspektivische Darstellung eines Lagerregals mit einer Ausführungsform eines Bedienfahrzeugs, wobei sich das Bedienfahrzeug in einem Diagonalbahn-Fahrbetrieb in einer Lagerregal-Anordnung von zwei Lagerregalen befindet, wobei nur ein Lagerregal gezeigt ist;
- Figur 5 eine perspektivische Darstellung einer Ausführungsform eines Bedienfahrzeugs in einer Ausführungsform mit an Querseiten des Bedienfahrzeugs angelenkten Laufrädern, deren Achsen in die Längsrichtung des Fahrzeugs gerichtet sind, wobei das Bedienfahrzeug einen Aufnahmeraum zur Aufnahme des Lagerbehälters, vier Antriebsraupen, eine Fördervorrichtung und eine Greifvorrichtung aufweist, wobei die Antriebsraupen in einer ersten Stellung befinden;
- Figur 6 eine perspektivische Darstellung einer weiteren Ausführungsform eines Bedienfahrzeugs nach der Figur 5, die gegenüber der in der Figur 5 gezeigten Ausführungsform an der Bodenseite des Bedienfahrzeugs angelenkte Laufräder aufweist, deren Achsen in die Längsrichtung des Fahrzeugs gerichtet sind, wobei sich die Antriebsraupen in einer gegenüber der Darstellung der Figur 5 in einer weiteren Stellung befinden;
- Figur 7 eine Draufsicht auf die in der Figur 5 dargestellte Ausführungsform eines Bedienfahrzeugs;
- Figur 8 eine Seitendarstellung der in der Figur 5 dargestellte Ausführungsform eines Bedienfahrzeugs in einer Bodenbetriebs-Stellung durch an Querseiten des Bedienfahrzeugs angelenkten Laufrädern;
- Figur 9 eine Seitendarstellung der in der Figur 5 dargestellte Ausführungsform eines Bedienfahrzeugs in einer weiteren Bodenbetriebs-Stellung, bei der das Bedienfahrzeug durch die vier Antriebsraupen entlang seiner Längsrichtung bewegt werden kann;
- Figur 10 eine Seitendarstellung der in der Figur 5 dargestellte Ausführungsform eines Bedienfahrzeugs in einer Zwischenstellung für einen Übergang zwischen der Bodenbetriebs-Stellung nach der Figur 8 und der Bodenbetriebs-Stellung nach der Figur 9;
- Figur 11 eine perspektivische Schemadarstellung eines Ausschnitts einer Ausführungsform des Bedienfahrzeugs mit einer Ausführungsform einer Fördervorrichtung als Behälter-Stellvorrichtung, die aus zwei Riementrieben gebildet ist, von denen jeder jeweils auf einer von zwei einander gegenüber liegenden Außenseiten des Aufnahmeraums angeordnet ist,
- Figur 12 eine perspektivische Schemadarstellung eines Ausschnitts einer weiteren Ausführungsform einer Ausführungsform des Bedienfahrzeugs mit einer weiteren Ausführungsform einer Fördervorrichtung als Behälter-Stellvorrichtung, die aus einer Anordnung von Laufrollen gebildet ist, von denen jeweils eine auf jeder der zwei einander gegenüber liegenden Außenseiten des Aufnahmeraums angeordnet ist, wobei die Ausführungsform einer Fördervorrichtung auch als seitliche Führungsvorrichtung ausgeführt sein kann,
- Figur 13eine Draufsicht auf ein Bedienfahrzeug nach der Figur 6, in dem zwei Stellvorrichtungen jeweils mit gestrichelten Linien dargestellt sind, wobei eine erste Behälter-Stellvorrichtung eine Ausführungsform einer als Riementrieb-Vorrichtung realisierten Fördervorrichtung und eine zweite Behälter-Stellvorrichtung eine Ausführungsform einer Greifvorrichtung ist,
- Figur 14 eine Seitenansicht der in der Figur 13 dargestellten Ausführungsform des Bedienfahrzeugs,
- Figur 15 eine perspektivische Ansicht der in der Figur 13 dargestellten Ausführungsform des Bedienfahrzeugs,
- Figur 16 eine Schnittdarstellung der Ausführungsform als Greifvorrichtung ausgeführten zweiten Behälter-Stellvorrichtung nach der Figur 13,
- Figur 17 eine perspektivische Darstellung der Ausführungsform als Greifvorrichtung ausgeführten zweiten Behälter-Stellvorrichtung nach der Figur 13,
- Figur 18 eine perspektivische Darstellung der Ausführungsform der in den Figuren 16 und 17 dargestellten Greifvorrichtung in einem ersten eingefahrenen Betriebszustand, wobei zwei Lagerbehälter dargestellt sind, die jeweils in verschiedenen Lagerregalen einer Lagerregal-Anordnung gelegen sind,
- Figur 19 eine perspektivische Darstellung der Ausführungsform der in den Figuren 16 und 17 dargestellten Greifvorrichtung in einem in einer ersten StellRichtung ausgefahrenen Betriebszustand, um einen der Behälter aus dem Lagerregal zu ziehen,
- Figur 20 eine Seitendarstellung eines drehbaren Kopplungshakens der in den Figuren 16 und 17 dargestellten Greifvorrichtung in einer Stellung, die dieser in dem ersten eingefahrenen Betriebszustand und bis zum Erfassung eines Lagerbehälters einnimmt,
- Figur 21 eine perspektivische Darstellung der Ausführungsform der in den Figuren 16 und 17 dargestellten Greifvorrichtung in einem Betriebszustand, bei dem der Kopplungshaken eine Seitenwand eines Lagerbehälters hintergreift,
- Figur 22 eine perspektivische Darstellung der Ausführungsform der in den Figuren 16 und 17 dargestellten Greifvorrichtung in einem Betriebszustand, bei dem der Lagerbehälter durch den Kopplungshaken in eine Position in einen Aufnahmeraum eines Bedienfahrzeugs mit einer als Riementrieb-Vorrichtung realisierten Fördervorrichtung, in der der Lagerbehälter von der Fördervorrichtung erfasst ist,
- Figur 23 eine perspektivische Darstellung der Ausführungsform der in den Figuren 16 und 17 dargestellten Greifvorrichtung in einem Betriebszustand, bei dem sich der Kopplungshaken in einer Entkopplungsstellung inm Bezug auf den Lagerbehälter befindet,
- Figur 24 eine perspektivische Darstellung der Ausführungsform der in den Figuren 16 und 17 dargestellten Greifvorrichtung in einem Betriebszustand, bei dem der Lagerbehälter durch die Fördervorrichtung in den Aufnahmeraum eines Bedienfahrzeugs bewegt wird,
- Figur 25 eine perspektivische Darstellung der Ausführungsform der in den Figuren 16 und 17 dargestellten Greifvorrichtung in einem Betriebszustand, bei dem der Lagerbehälter durch die Fördervorrichtung vollständig in den Aufnahmeraum eines Bedienfahrzeugs bewegt worden ist,
- Figuren 26 bis 29 jeweils perspektivische Darstellungen der Ausführungsform der in den Figuren 16 und 17 dargestellten Greifvorrichtung und der Fördervorrichtung in Betriebszuständen, die bei dem Herausbewegen eines Lagerbehälters von dem Aufnahmeraum eines Bedienfahrzeugs in ein Lagerregal auftreten,
- Figur 30 eine Schnittdarstellung aufgrund der Linie L30-L30 in der Figur 5 einer Ausführungsform des Bedienfahrzeugs mit einer Fördervorrichtung, die aus zwei Riementrieben gebildet ist, und einer weiteren Ausführungsform einer Greifvorrichtung ausgeführten Stellvorrichtung, wobei die Fördervorrichtung und die Greifvorrichtung jeweils in einer eingefahrenen Stellung gezeigt sind;
- Figur 31 das in der Figur 30 dargestellte Bedienfahrzeug in der Darstellungsform der Figur 30 in einem Betriebszustand, in dem sich die Greifvorrichtung im Eingriff mit einer Seitenwand eines Lagerbehälters befindet und dabei den Lagerbehälter noch nicht gegenüber dem Lagerregal, in dem sich der Lagerbehälter befindet, bewegt hat;
- Figur 32 das in der Figur 30 dargestellte Bedienfahrzeug in der Darstellungsform der Figur 30 in einem Betriebszustand, in dem sich die Greifvorrichtung im Eingriff mit einer Seitenwand eines Lagerbehälters befindet und dabei den Lagerbehälter teilweise aus dem Lagerregal, in dem sich der Lagerbehälter befindet, in eine Position bewegt hat, in der der Lagerbehälter im Eingriff ist mit einer Fördervorrichtung;
- Figur 33 die Ausführungsform des Bedienfahrzeugs nach der Figur 30 in derselben Darstellungsweise, wobei die Greifvorrichtung in einer ausgefahrenen Stellung gezeigt ist, bei der die Greifvorrichtung mit einem Lagerbehälter im Eingriff ist, der eine gegenüber dem in den Figuren 30 bis 32 dargestellten Lagerbehälter eine andersartige Ausnahmevorrichtung zur Aufnahme des Kopplungshakens aufweist;
- Figur 34 die Ausführungsform des Bedienfahrzeugs und des Lagerbehälters nach der Figur 33 in der Darstellungsweise der Figur 33, wobei die Greifvorrichtung in einer gegenüber der in der Figur 33 dargestellten Stellung weiter eingefahrenen Stellung gezeigt ist, bei der die Greifvorrichtung mit dem Lagerbehälter im Eingriff ist;
- Figur 35 die Ausführungsform des Bedienfahrzeugs nach der Figur 30 in derselben Darstellungsweise, wobei die Fördervorrichtung in einer gegenüber der in den in den Figuren 33 und 34 dargestellten Stellung ausgefahrenen Stellung gezeigt ist, bei der sich die Fördervorrichtung in Anlage mit dem Lagerbehälter befindet, und wobei die Greifvorrichtung im eingefahrenen Zustand befindet;
- Figuren 36 bis 38 eine Draufsicht analog der Linie L30-L30 der Figur 5 einer weiteren Ausführungsform einer als Greifvorrichtung ausgeführten Stellvorrichtung, wobei die Greifvorrichtung jeweils in verschiedenen Stellungen gezeigt ist;

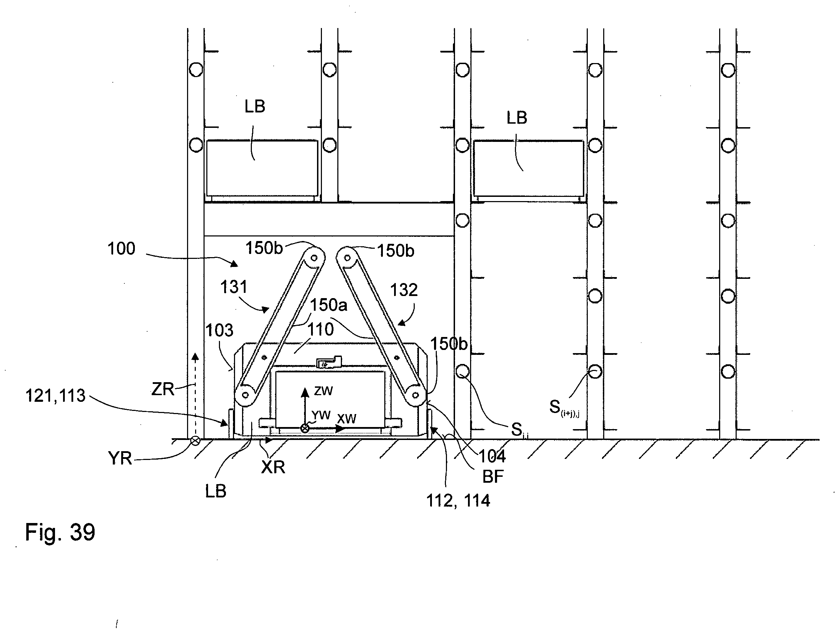

- Figuren 39 bis 41 verschiedene Zustände der Ausführungsform eines Bedienfahrzeugs nach der Figur 5, mit denen das Bedienfahrzeug von einem Boden-Fahrbetrieb in einen Regal- Fahrbetrieb übergeführt wird,
- Figur 42 eine perspektivische Darstellung einer weiteren Ausführungsform eines Bedienfahrzeugs, das gegenüber der in der Figur 5 dargestellten Ausführungsform desselben an jeder Längsseite zwei Paare von Raupenantrieben aufweist;
- Figur 43 eine weitere perspektivische Darstellung der Ausführungsform eines Bedienfahrzeugs nach der Figur 42;
- Figur 44 eine Seitendarstellung der Ausführungsform des Bedienfahrzeugs nach der Figur42, wobei sich die Paare von Antriebsraupen desselben in einer Zwischenstellung befinden;
- Figur 45 eine Seitendarstellung der Ausführungsform des Bedienfahrzeugs nach der Figur 42, wobei sich die Paare von Antriebsraupen desselben in einer Vertikal-Fahrbetriebssstellung befinden;
- Figur 46 eine Seitendarstellung der Ausführungsform des Bedienfahrzeugs nach der Figur 42 im Horizontalbahn-Fahrbetrieb an zwei Lagerregalen einer Lagerregat-Anordnung nach der Erfindung,
- Figur 47 die Ausführungsform des Bedienfahrzeugs nach der Figur 42 in der Darstellung nach der Figur 46 im Horizontalbahn-Fahrbetrieb, wobei sich das Bedienfahrzeug gegenüber der in der Figur 46 gezeigten Position relativ zum Lagerregal in horizontaler Richtung bewegt hat;
- Figur 48 eine Seitendarstellung der Ausführungsform des Bedienfahrzeugs nach der Figur 42 an zwei Lagerregalen einer Lagerregal-Anordnung nach der Erfindung, wobei sich die Paare von Antriebsraupen desselben in der Zwischenstellung gemäß Figur 44 befinden
- Figur 49 eine Seitendarstellung der Ausführungsform des Bedienfahrzeugs nach der Figur 42 im Vertikalbahn-Fahrbetrieb an zwei Lagerregalen einer Lagerregal-Anordnung nach der Erfindung.

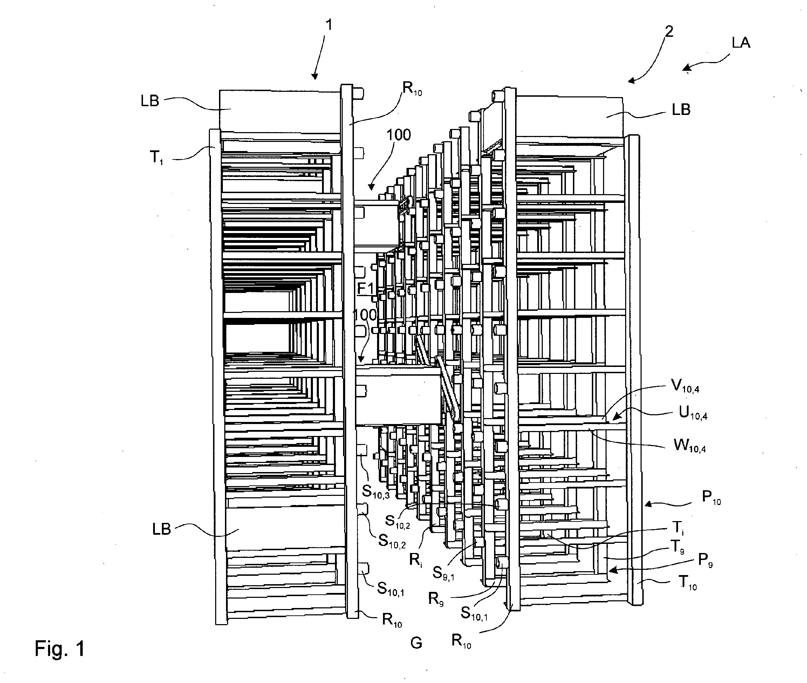

In der Figur 1 ist eine Lagerregal-Anordnung von zwei auf einem Boden G stehenden Lagerregalen 1,2 dargestellt. Jedes Lagerregal 1, 2 einer solchen Lagerregal-Anordnung LA ist jeweils zur Aufnahme eines Lagerbehälters LB und zum Lagern eine Lagerbehälters LB sowie zur Entnahme von Lagerbehältern LB ausgeführt.

Die Erfindung betrifft ein Bedienfahrzeug 100, das sich eigenständig, also automatisch, zwischen zwei Lagerregalen 1, 2 einer Anordnung von Lagerregalen 1, 2 bewegen kann.

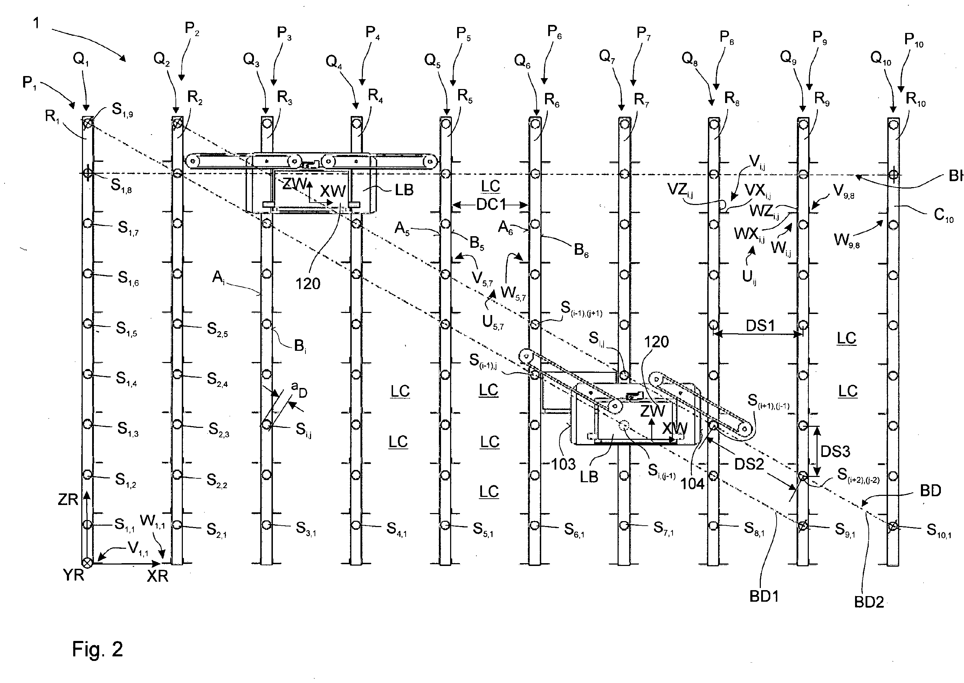

Die Beschreibung eines Lagerregals 1 erfolgt in Bezug auf ein in der Figur 2 eingetragenes Koordinatensystem KS1, das definiert ist durch: eine Koordinatenachse XR für eine Längsrichtung des Lagerregals 1, eine Koordinatenachse YR für eine Tiefenrichtung des Lagerregals 1 und eine Koordinatenachse ZR für eine Höhenrichtung des Lagerregals 1.

Das Lagerregal 1 in der Ausführungsform insbesondere nach den Figuren 1 bis 4 weist mehrere Gestellrahmen Pᵢ auf, die in einer Längsrichtung XR des Lagerregals 1 nebeneinander angeordnet sind. Bezugszeichen mit dem Index "i" bezeichnen hierin generell Teile, die zu einem i-ten Gestellrahmen gehören, wobei für "i" ein ganzzahliger Wert entsprechend der Position des jeweiligen Gestellrahmens entlang der Längsrichtung XR des Lagerregals 1. Der Gestellrahmen, an dem das Koordinatensystem KS1 eingetragen ist, ist als erster Gestellrahmen entlang der Längsrichtung XR des Lagerregals 1 konkret mit dem Bezugszeichen "Q₁" bezeichnet. Auf diesen folgen in der Längsrichtung XR des Lagerregals 1 konkret die Gestellrahmen "Q₁" bis "Q₁₀".

Jeder Gestellrahmen Qᵢ weist auf:
- eine vordere, sich in seiner Längsrichtung vertikal erstreckende Vertikalstange Rᵢ, wobei die Vertikalstange Rᵢ zwei zueinander entgegen gesetzt gelegene Seitenflächen oder Außenflächen Aᵢ und Bᵢ aufweist, die jeweils einer Vertikalstange Rᵢ eines in der Längsrichtung XR des Lagerregals 1 jeweils benachbarten Gestellrahmens zugewandt ist, und wobei die Vertikalstange Rᵢ eine entgegen der Tiefenrichtung des Lagerregals 1 orientierte Außenflächen Aᵢ;
- eine hintere, sich vertikal erstreckende Vertikalstange Tᵢ, die parallel zu der vorderen Vertikalstange Rᵢ desselben Gestellrahmens Qᵢ verläuft;
- eine Mehrzahl von an einer Frontfläche C_{i,j} der vorderen Vertikalstange Sᵢ angeordneten Stützteilen S_{i,j}, wobei die Stützteile S_{i,j} in der Längsrichtung der jeweiligen vorderen Vertikalstange Sᵢ bzw. der Höhenrichtung ZR des Lagerregals 1 in zueinander identischen Abständen angeordnet sind;
- eine Regalboden-Vorrichtung U_{i,j}, die sich flächig horizontal erstreckt und in der Tiefenrichtung YR des Lagerregals 1 verläuft, wobei insbesondere vorgesehen sein kann, dass die und dabei die Regalboden-Vorrichtung U_{i,j} zumindest die vordere Vertikalstange Rᵢ und die hintere Vertikalstange Tᵢ desselben Gestellrahmens Qᵢ verbindet.

Bei der dargestellten Ausführungsform der Abstand dxᵢ (z.B. der Abstand dx₅ ) zwischen einem Paar von ersten Vertikalstangen Rᵢ, Tᵢ (z.B. die Vertikalstangen R₅, T₅ ) und zweiten, zu dem jeweils ersten Paar von Vertikalstangen Rᵢ, Tᵢ in der Längsrichtung XR des Lagerregals 1 benachbarten Vertikalstangen Rᵢ₊₁, Tᵢ₊₁ (z.B. die Vertikalstangen R₆, T₆ ) jeweils konstant. Alternativ können jedoch solche Abstände zwischen jeweiligen Paaren von Vertikalstangen Rᵢ, Tᵢ und Rᵢ₊₁, Tᵢ₊₁, die an einem Lagerregal 1 in der

Längsrichtung XR des Lagerregals 1 hintereinander gelegen sind, unterschiedlich sein. Jeweils zwei zueinander in der Längsrichtung XR des Lagerregals 1 benachbarte Vertikalstangen Rᵢ und Rᵢ₊₁haben jeweils denselben Abstand dx1 zueinander. Dabei ist der Abstand dX₁ insbesondere der kürzeste Abstand zwischen den beiden Längsachsen der jeweils in der Längsrichtung XR des Lagerregals 1 benachbarten Vertikalstangen Rᵢ und Rᵢ₊₁.

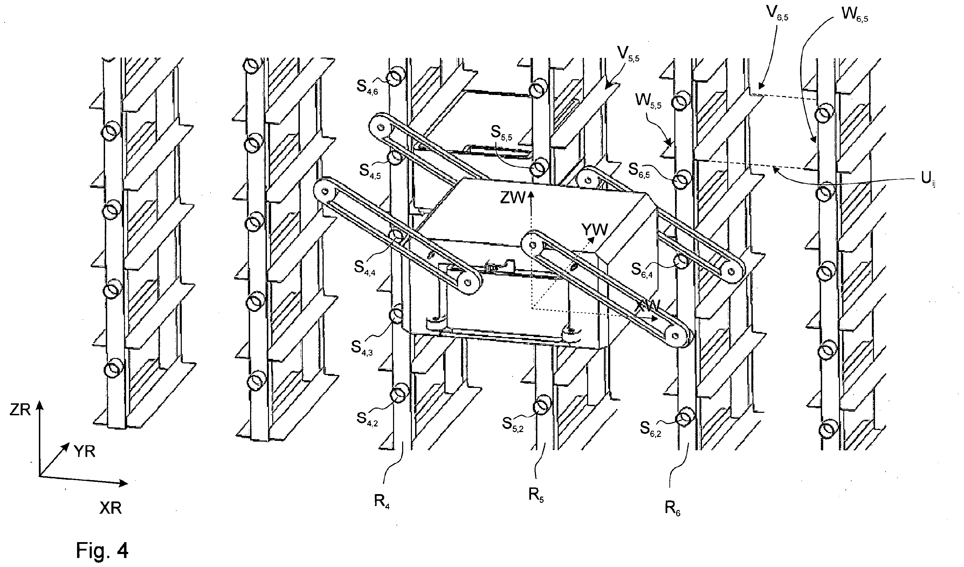

Die Regalboden-Vorrichtung U_{i,j} kann als benachbarte Gestellrahmen Qᵢ und Qᵢ₊₁ verbindende Platte realisiert sein und ist als solche in der Figur 4 als Beispiel andeutungsweise gestrichelt dargestellt.

In den Figuren ist die Regalboden-Vorrichtung U_{i,j} konkret als Ausführungsform mit jeweils einem Paar von zwei Winkelprofil-Trägern, einem Winkelprofil-Träger V_{i,j} und einem Winkelprofil-Träger W_{i,j} dargestellt, wobei die Winkelprofil-Träger V_{i,j} und einem Winkelprofil-Träger W_{i,j} an zwei benachbarten Gestellrahmen, einem Gestellrahmen Qᵢ und einem Gestellrahmen Qᵢ₊₁ angebracht. Zwischen jeweils zwei in der Höhenrichtung ZR gesehen hintereinander, also übereinander, angeordnete Regalboden-Vorrichtung U_{i,j} wird ein Lagerbehälter-Bereich LC bereitgestellt, der einen Lagerbehälter LB aufnehmen kann oder in den ein Lagerbehälter LB hinein bewegt werden kann. Dabei ist zur Bildung einer Regalboden-Vorrichtung U_{i,j} ein erster Winkelprofil-Träger V_{i,j} an einer zweiten Seitenfläche Bᵢ des jeweils ersten Gestellrahmens Qᵢ und ein zweiter Winkelprofil-Träger V_{(i+1),j} an einer ersten Seitenfläche Bᵢ₊₁ des jeweils zweiten Gestellrahmens Qᵢ₊₁ angebracht (Figur 2). Dabei ist ein Winkelprofil-Träger V_{i,j} aus einem plattenförmigen Halteschenkel VX_{i,j} zum Halten eines Lagerbehälters LB und einem im Querschnittprofil des Winkelprofil-Trägers V_{i,j} gesehen winklig an dem jeweiligen Halteschenkel VX_{i,j} angeordneten plattenförmigen Befestigungsschenkel VY_{i,j}. Der Befestigungsschenkel VY_{i,j} ist an jeweils der zweiten Seitenfläche Bⱼ, Dᵢ einer jeweils ersten vorderen und hinteren Vertikalstange Rᵢ bzw. Tᵢ und der Befestigungsschenkel VY₍ᵢ₊₁)_{,(j)} ist an jeweils der ersten Seitenfläche Bᵢ₊₁, Dᵢ₊₁ einer jeweils zweiten vorderen und hinteren Vertikalstange Rᵢ₊₁ bzw. Tᵢ₊₁ angebracht. Dabei erstrecken sich jeweils der Halteschenkel VX_{i,j} und der Halteschenkel VX_{(i+1,(j)} der beiden an zueinander benachbarten Gestellrahmen Qᵢ und Qᵢ₊₁ angebrachten Winkelprofil-Träger W_{i,j} bzw. V_{(i+1),j} von ihrem jeweiligen Befestigungsschenkel VY_{i,j} bzw. VY_{(i+1),(j)} aus aufeinander sich zu, um jeweils eine Regalboden-Vorrichtung U_{i,j} zu bilden.

Die Stützteile S_{i,j} können insbesondere zylindrische Gestalt haben und dabei derart an dem jeweiligen vordere Vertikalstange Rᵢ angeordnet sein, dass sich die Symmetrieachse des jeweiligen Stützteils S_{i,j} senkrecht, also in YR-Richtung, von der jeweiligen vorderen Vertikalstange Rᵢ absteht. Die Stützteile S_{i,j} können, wie es in der Figur 2 gezeigt ist, insbesondere als Hülse ausgeführt sein.

Alternativ können die Stützteile S_{i,j} an ihrer Außenseite geriffelt oder verzahnt ausgeführt sein, wobei die die Riffelung oder Verzahnung derart ausgebildet ist, dass diese sich die Riffelung oder Verzahnung in einem Querschnitt ergibt, der in bei einer Blickrichtung längs der Längsachse des jeweiligen Stützteils S_{i,j} entsteht.

Die jeweilige Vertikalstange Rᵢ mit an dieser angeordneten Stützteil S_{i,j} wird im Folgenden auch Stangenvorrichtung Pᵢ genannt.

Die hintere Vertikalstange Tᵢ weist ebenfalls zwei zueinander entgegen gesetzt gelegene Außenflächen Dᵢ und Eᵢ auf.

Nach einem Aspekt der Erfindung fährt ein erfindungsgemäßes Bedienfahrzeug zwischen zwei Lagerregalen der Anordnung von Lagerregalen, indem sich das Bedienfahrzeug an mehrere Stützteile eines ersten Lagerregals und an mehreren Stützteilen des jeweils anderen Lagerregals abstützt. Dabei sind die beiden Lagerregale, zwischen denen sich das Bedienfahrzeug fortbewegt derart aufgesellt, dass die jeweils vorderen Vertikalstangen mit ihrem Stützteil und mit ihrer Frontfläche einander zugewandt sind.

Für die weitere Beschreibung werden dieselben Bezugszeichen für zwei einander zugewandte Lagerregale 1, 2 verwendet, wobei die Bezeichnungen gleicher Komponenten aufgrund ein und derselben Blickrichtung, und zwar in der Darstellung der Figur 1 in der YR-Richtung indiziert werden (Figur 1).

Das Bedienfahrzeug 100 nach der Erfindung ist als Shuttle zum Transportieren eines Lagerbehälters LB entlang eines Lagerregals 1, 2 vorgesehen, das zwischen zwei Lagerregalen mit Stützteilen S_{i,j} an einander zugewandten Seiten der Lagerregale bewegbar ist. Die Lagerregale können jeweils insbesondere nach einer Ausführungsform des hierin offenbarten Lagerregals gestaltet sein. Auch kann vorgesehen sein, dass mittels einer Fördervorrichtung ein Lagerbehälter LB in einen Aufnahmeraum 120 des Bedienfahrzeugs 100 in einer Aufnahmeraum-Einführungsrichtung eingeführt und diesem in einer Aufnahmeraum-Entnahmerichtung entnommen werden kann. Eine solche Fördervorrichtung kann am Bedienfahrzeug 100 oder an einem Lagerregal angebracht sein.

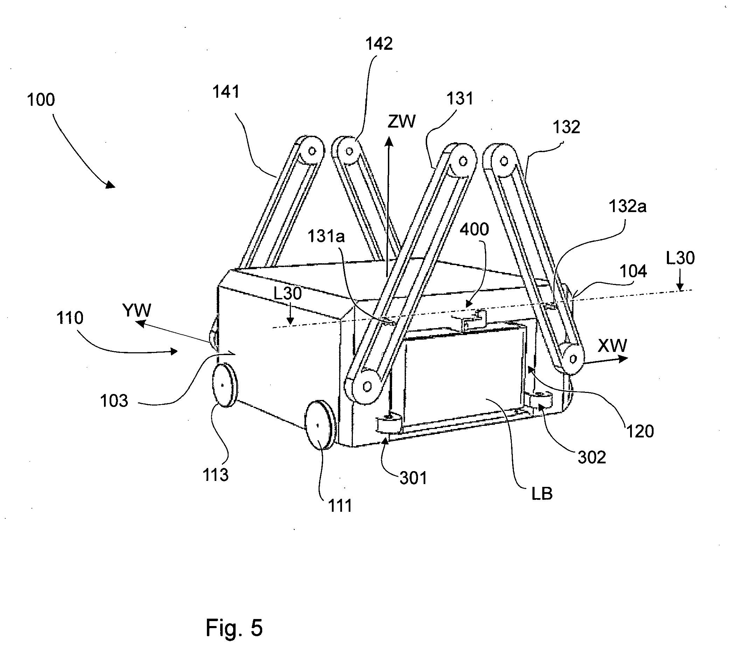

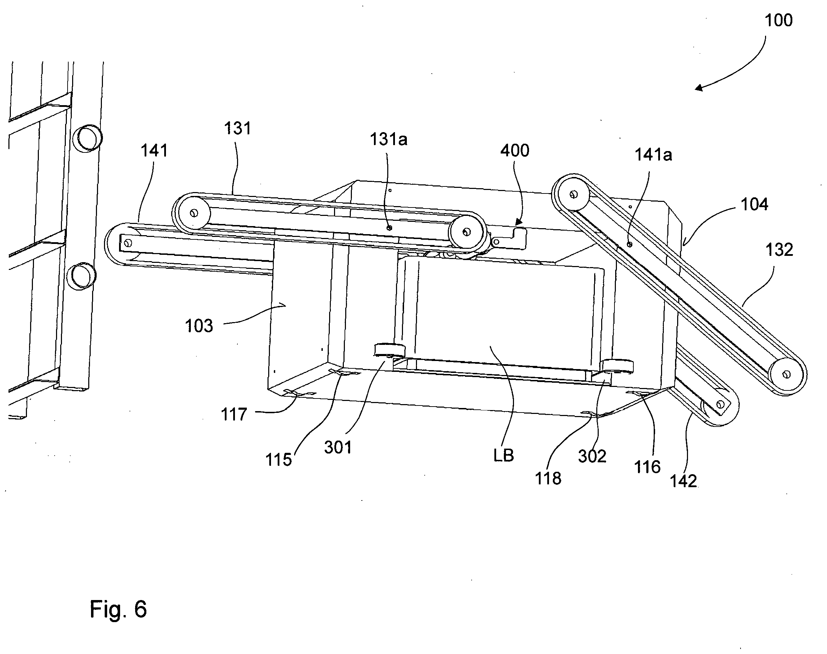

Zur weiteren Beschreibung von Ausführungsformen des erfindungsgemäßen Bedienfahrzeugs 100 ist in die Figuren 5 und 6 ein dem Bedienfahrzeug körperfest zugeordnetes Koordinatensystem eingetragen, das eine Längsrichtung XW, eine Querrichtung YW und eine Höhenrichtung oder Hochachse ZW bezeichnet. Die Längsrichtung XW sowie die Querrichtung YW sind dabei jeweils insbesondere derart definiert, dass diese in einer Ablagefläche 120a einer Bodenplatte des Aufnahmeraums verlaufen, wobei die Ablagefläche 120a zur Ablage eines Lagerbehälters LB vorgesehen ist. Der Ablagefläche 120a gegenüber und dieser zugewandt liegend weist das Bedienfahrzeug 100 eine Deckfläche 125 einer Deckplatte auf.

Alternativ oder zusätzlich kann die Längsrichtung XW des Bedienfahrzeugs 100 derart definiert sein, dass die Drehachsen der Drehvorrichtungen, mit denen die Antriebsraupen 131, 132, 141, 142 an dem Bedienfahrzeug 100 oder dem Fahrzeugrahmen 110 angelenkt sind, zumindest in der Höhenrichtung oder entgegen der Hochachse ZW gesehen senkrecht zur Längsrichtung XW des Bedienfahrzeugs 100 verlaufen. Dadurch, dass die Längserstreckung der Antriebsraupen 131, 132, 141, 142 entlang der Lagerregale 1, 2 erstreckt, kann eine Bewegung des Bedienfahrzeug 100 an den Stützteilen S_{i,j} entlang der Lagerregale 1, 2 erfolgen. Dabei müssen sich die Drehachsen nicht senkrecht zur Höhenachse ZW erstrecken; generell erstrecken sich die Drehachsen entlang der Höhenachse ZW. Das Bedienfahrzeug 100 weist generell einen Fahrzeugrahmen 110 auf, der ein Gehäuse oder ein Gerüst sein kann. Bei der in den Figuren gezeigten Ausführungsform des Bedienfahrzeugs 100 ist der Fahrzeugrahmen 110 als geschlossenes Gehäuse mit einer umlaufenden Wandung gebildet. Der Fahrzeugrahmen 110 bildet zwei zueinander entgegen gesetzt gelegene Längsseiten 101, 102, quer dazu verlaufende Querseiten 103, 104, den Aufnahmeraum 120 zur Aufnahme eines Lagerbehälters LB sowie zumindest eine an jeweils einer der Längsseitenwänden gelegene Durchgangsöffnung 121, 122 aus. Die umlaufende Wandung eines geschlossenen Gehäuses ist aus jeweils die Längsseiten 101, 102 bildenden Längsseiten-Außenflächen 101a bzw. 102a und jeweils die Querseiten 103, 104 bildenden Längsseiten-Außenflächen 103a bzw. 104a. Die Durchgangsöffnungen 121, 122 sind derart ausgeführt, dass durch diese ein Lagerbehälter LB in den Aufnahmeraum 120 in einer Aufnahmeraum-Einführungsrichtung eingeführt und diesem in einer Aufnahmeraum-Entnahmerichtung entnommen werden kann. Bei der Ausbildung des Fahrzeugrahmens 110 aus einem Gerüst werden die Längsseiten 101, 102 und die Querseiten 103, 104 jeweils aus den vom Aufnahmeraum 120 aus gesehen äußeren Außenflächen einer jeweiligen Anordnung von Stangen und/oder Platten des Gerüsts gebildet. In diesem Fall bilden die äußeren Außenflächen jeweiligen Anordnung von Stangen und/oder Platten des Gerüsts Außenflächen 101a, 102a der Längsseiten 101 bzw. 102.

Das Bedienfahrzeug 100 weist erfindungsgemäß weiterhin zwei Paare 130, 140 von Antriebsraupen 131, 132, 141, 142 auf, von denen jeweils ein Paar an jeder Längsseite 101, 102 des Bedienfahrzeugs 100 angeordnet ist. Dabei ist von jedem Paar 130, 140 jeweils eine Antriebsraupe 131, 141 an einer Querseite 103 und jeweils eine Antriebsraupen 132, 142 an einer zweiten Querseite 104 gelegen. Die Antriebsraupen 131, 132, 141, 142 jedes Paars von Antriebsraupen 131, 132 bzw. 141, 142 sind mit jeweils einer Drehvorrichtung mit einer Drehachse 131a bzw. 132a bzw. 133a bzw. 134a angelenkt. Die Drehachsen können insbesondere an den Längsseiten 101, 102 oder der Längsrichtung XW gesehen seitlich des Aufnahmeraums 120 gelegen sein. Dabei können die Drehachsen 131a und 132a an der ersten Längsseite 101 und benachbart zur ersten Querseite 103 bzw. zur zweiten Querseite 104 und die Drehachsen 141a und 142a an der ersten Längsseite 101 und benachbart zur ersten Querseite 103 bzw. zur zweiten Querseite 104 gelenkig angeordnet .sein. Die Drehachsen 131a, 132a, 141a, 142a können insbesondere in einer Seitenwand, die die Längsseiten 101, 102 ausbilden, und insbesondere in der Längsrichtung YW gesehen seitlich des Aufnahmeraums 120 gelegen sein.

Bei allen Ausführungsformen des Bedienfahrzeugs 100 nach der Erfindung kann vorgesehen sein, dass die Drehachsen der Antriebsraupen 131, 132, 141, 142 oberhalb der Durchgangsöffnung 121, 122 angeordnet. Dadurch ist insbesondere eine Aufnahme eines am Boden stehenden Lagerbehälters LB möglich, wenn das Bedienfahrzeug 100 am Boden steht. Auch ist eine Übergabe des Lagerbehälters LB in einen Lagerbehälter-Bereich LC eines Regals möglich, wenn die Höhe der Durchgangsöffnung 121, 122 des Bedienfahrzeugs 100 durch Änderung der Drehstellung der Antriebsraupen 131, 132, 141, 142 am Regal eingestellt werden kann. Auch ist im Regalbetrieb durch Einstellung der Drehstellung der Antriebsraupen 131, 132, 141, 142 möglich, dass der Durchgangsöffnung 121, 122 relativ zum Lagerbehälter-Bereich LC eingestellt wird.

Alternativ dazu können die Drehachsen der Antriebsraupen 131, 132, 141, 142 unterhalb der Durchgangsöffnung 121, 122 angeordnet sein. Auch dabei ist es im Regalbetrieb durch Einstellung der Drehstellung der Antriebsraupen 131, 132, 141, 142 möglich, dass der Durchgangsöffnung 121, 122 relativ zum Lagerbehälter-Bereich LC eingestellt wird.

Gemäß Anspruch 5 ist ein Verfahren zum Bewegen des Bedienfahrzeugs 100 vorgesehen, wobei das Bedienfahrzeug 100 zwischen folgenden Betriebszuständen wechselt:
- einem Regalbetrieb-Zustand, bei dem das Fortbewegen des Bedienfahrzeug 100 in die Längsrichtung XW desselben auf den Stützteilen S_{i,j} zwischen den Lagerregalen 1, 2 erfolgt, wobei die Antriebsraupen 131, 132, 141, 142 auf Stützteilen S_{i,j} gelegen sind, und
- einem Raupen-Bodenbetriebszustand, bei dem das Bedienfahrzeug 100 auf den Antriebsraupen 131, 132, 141, 142 auf einem Boden G fährt, auf dem die Lagerregale 1, 2 stehen, nachdem die Antriebsraupen 131, 132, 141, 142 in eine Boden-Fahrstellung unter Anheben des Fahrzeugrahmens 110 vom Boden G gedreht worden sind,
wobei sich das Bedienfahrzeug 100 im Übergang vom Regalbetrieb-Zustand zum Raupen-Bodenbetriebszustand oder vom Raupen-Bodenbetriebszustand zum Regalbetrieb-Zustand in einem dritten Übergangs-Betriebszustand befindet, in dem ein an einer ersten Querseite 103 des Bedienfahrzeugs 100 angelenkte Antriebsraupen 131, 141 auf Stützteilen S_{i,j} der Lagerregale 1, 2 gelegen sind und gleichzeitig an einer zweiten Querseite 104 des Bedienfahrzeugs 100 angelenkte Antriebsraupen 132, 142 auf dem Boden aufliegen und dabei den Fahrzeugrahmen 110 relativ zum Boden G positioniert.

Weiterhin ist nach Anspruch 5 ein Verfahren zum Bewegen eines Bedienfahrzeugs 100vorgesehen, wobei
- in einem ersten Schritt Fahren des Bedienfahrzeugs 100 auf dem Boden G in einem Fahrwerk-Bodenbetriebszustand auf einem am Fahrzeugrahmen 110 angeordneten Bodenbetrieb-Fahrwerk in einer Richtung fährt, die quer zur Längsrichtung XR der Lagerregale 1, 2 verläuft, während die Antriebsraupen 131, 132, 141, 142 in einer Drehstellung befinden, bei der diese den Boden G nicht berühren,
- anschließend in einem zweiten Schritt Fahren des Bedienfahrzeugs 100 entlang der Längsrichtung XR der Lagerregale 1, 2 und zwischen den Lagerregalen 1, 2 in einem Raupen-Bodenbetriebszustand, bei dem das Bedienfahrzeug 100 auf den Antriebsraupen 131, 132, 141, 142 auf einem Boden G fährt, auf dem die Lagerregale 1, 2 stehen, nachdem die Antriebsraupen 131, 132, 141, 142 in eine Boden-Fahrstellung unter Anheben des Fahrzeugrahmens 110 vom Boden G gedreht worden sind.

Nach einer Ausführungsform des Bedienfahrzeugs 100 ist vorgesehen, dass die Drehachsen 131a und 141a, die auf verschiedenen Längsseiten 101, 102 ausgebildet sind, zueinander koaxial verlaufen, also auf derselben Gerade liegen, und dass auch die Drehachsen 132a und 142a, die auf verschiedenen Längsseiten 101, 102 ausgebildet sind, zueinander koaxial verlaufen, also auf derselben Gerade liegen. Dieser Verlauf der Drehachsen kann bei allen Ausführungsformen des Bedienfahrzeugs 100 vorgesehen sein. Bei dieser Ausführungsform ist das fahrzeugfeste Koordinatensystem derart definiert, dass die Querrichtung YW parallel zu den Drehachsen 131a bzw. 132a bzw. 141a bzw. 142a und die Längsrichtung XW vertikal zu den Drehachsen 131a bzw. 132a bzw. 141a bzw. 142a verläuft, wobei der Ursprung des Koordinatensystems auf dem Boden 120a des Aufnahmeraums 120 des Bedienfahrzeugs 100 liegt.

An jede Drehvorrichtung der Antriebsraupen 131, 132, 141, 142 mit der Drehachse 131a bzw. 132a bzw. 133a bzw. 134a ist jeweils ein Antriebsmotor (nicht gezeigt) gekoppelt, mit dem jeweils jede Antriebsraupen 131, 132, 141, 142 aufgrund von Ansteuerungskommandos einer Steuerungseinrichtung 510; die mit jedem der Antriebsmotoren über eine Ansteuerungsleitung funktional verbunden ist, gedreht werden kann. Auf diese Weise können durch die Steuerungseinrichtung 510 die Antriebsmotoren jeder Antriebsraupe 131, 132, 141, 142 unabhängig voneinander angesteuert werden und dadurch an jeder Antriebsraupe 131, 132, 141, 142 eine vorbestimmte Bewegungsrichtung sowie Geschwindigkeit jeder der Umlenkrollen derselben und somit des jeweiligen Antriebsriemens eingestellt werden. Auf diese Weise kann durch die Steuerungseinrichtung 510 weiterhin eine durch diese vorbestimmte Drehstellung jeder der Antriebsraupen 131, 132, 141, 142 eingestellt werden, um z.B. den Horizontalbahn-Fahrbetrieb oder den Diagonalbahn-Fahrbetrieb einzustellen oder diesen jeweils auszuführen.

Generell kann die jeweilige Ausführungsform des Fahrzeugs eine Energieversorgungs-Vorrichtung aufweisen, die elektrisch mit elektrisch betriebenen Komponenten der jeweiligen Ausführungsform des Fahrzeugs verbunden ist, um diese mit Energie zu versorgen. Die Energieversorgungs-Vorrichtung kann selbst eine Batterie aufweisen oder elektrisch mit einer Batterie des Fahrzeugs verbunden sein.

Dadurch, dass die Antriebsraupen 131, 132, 141, 142 von der Längsseiten-Außenfläche 103a bzw. 104a, an der diese jeweils angeordnet sind, abstehen, ist es möglich, dass die Antriebsraupen 131, 132, 141, 142 auf dem jeweiligen Stützteil S_{i,j} aufliegen können, während die jeweils dem jeweiligen

Stützteil S_{i,j} zugewandte Außenfläche 103a bzw. 104a an diesem vorbei bewegt werden kann, wenn das Bedienfahrzeug 100 angetrieben wird und zwischen zwei Lagerregal 1, 2 fort bewegt wird (Figuren 1 und 6).

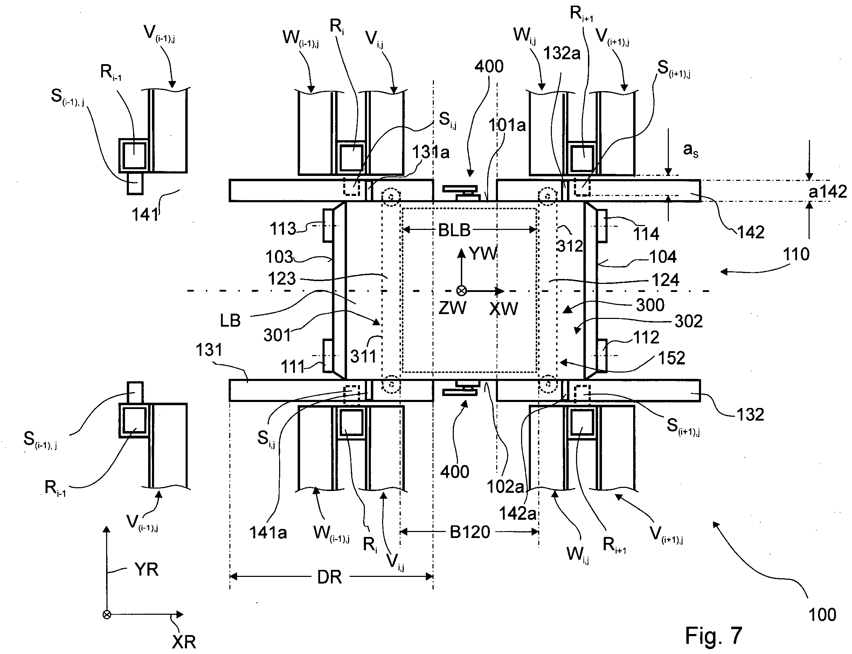

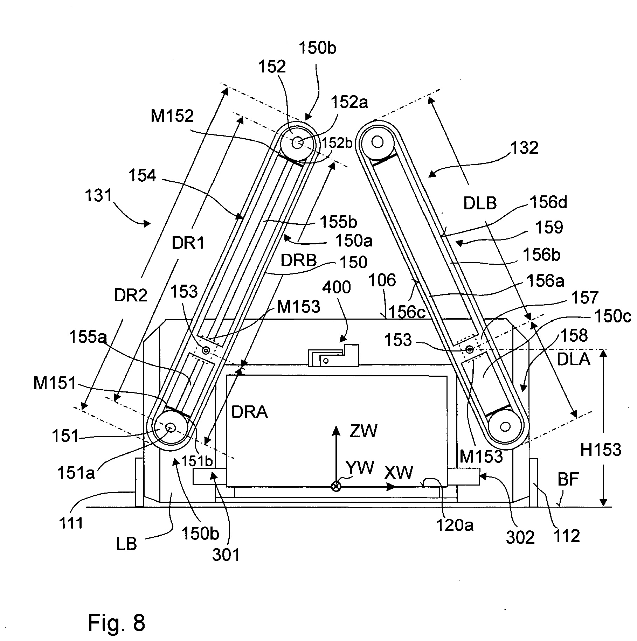

Jede Antriebsraupe 131, 132, 141, 142 kann insbesondere als Riemenantrieb mit einem Antriebsriemen 150 ausgebildet sein. Dabei weist jede Antriebsraupe 131, 132, 141, 142 einen Antriebsriemen 150 auf, der zwischen einer ersten und einer zweiten Umlenkrolle 151, 152 aufgespannt ist. Jede Antriebsraupe 131, 132, 141, 142 weist weiterhin, wie am Beispiel der Antriebsraupe 141 in der Figur 8 gezeigt, jeweils auf:
- ein mittleres Drehlager 153 zur Aufnahme einer Drehachse 131a, 132a, 141a, 142a, mit der die jeweilige Antriebsraupe 131, 132, 141, 142 an dem Fahrzeugrahmen 110 angelenkt ist (Figur 7),
- eine Tragvorrichtung 154, nach einer ersten Alternative für die Gestaltung der Antriebsraupen (linke Antriebsraupe in Figur 8) mit einem ersten Tragarm 155a, der sich zwischen dem mittleren Drehlager 153 und einem ersten äußeren Drehlager 151a, an dem die erste Umlenkrolle 151 gelagert ist, erstreckt, und einem zweiten Tragarm 155b, der sich zwischen dem mittleren Drehlager 153 und einem zweiten äußeren Drehlager 152a, an dem die zweite Umlenkrolle 152 gelagert ist, erstreckt, wobei.

Somit hat der Antriebsriemen 150 einen kurvigen Abschnitt 150b in einem Bereich, in dem der Antriebsriemen 150 an einer jeweiligen Umlenkrolle 151, 152 anliegt, und einen geraden Abschnitt 150a, der sich zwischen zwei kurvigen Abschnitten 150b erstreckt (Figur 8).

Die äußeren Drehlager 151a, 152a mit den Umlenkrollen 151, 152 sind jeweils auf Endabschnitten oder Plattenabschnitten 151b bzw. 152b integriert.

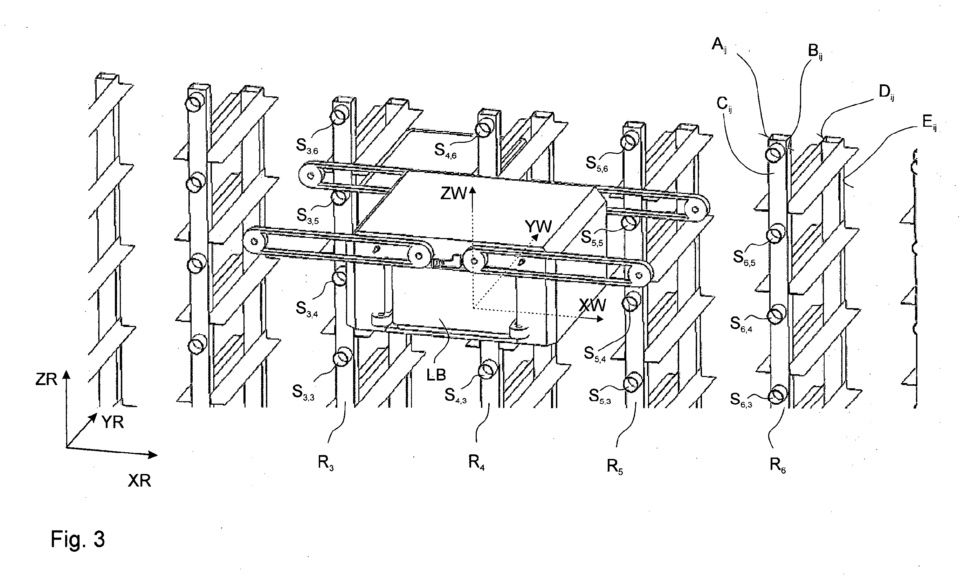

Zumindest eine der Umlenkrollen 151, 152 jeder der Antriebsraupen 131, 132, 141, 142 ist jeweils an einen Antriebsmotor M151, M152 gekoppelt, mit dem der Antriebsriemen 150 in eine umlaufende Bewegung gebracht werden kann. Jeder der Antriebsmotoren M151, M152 der Antriebsraupen 131, 132, 141, 142 ist jeweils über eine Ansteuerungsleitung (nicht dargestellt) funktional mit einer Steuerungseinrichtung 510 (Figur 3) verbunden, so dass der Antriebsriemen 150 jeder der Antriebsraupen 131, 132, 141, 142 aufgrund von Ansteuerungskommandos der Steuerungseinrichtung 510 gedreht werden kann. Auf diese Weise kann durch die Steuerungseinrichtung 510 ein durch diese vorbestimmte Drehgeschwindigkeit jeder der Umlenkrollen 151, 152 eingestellt werden.

Jede Antriebsraupe 131, 132, 141, 142 kann oder einige der Antriebsraupen können nach einer zweiten Alternative für die Gestaltung der Antriebsraupen (rechter Antriebsraupe in der Figur 8) zwei Stützarme 156a, 156b aufweisen, die quer zur Dickenrichtung der jeweiligen Antriebsraupe 131, 132, 141, 142 beabstandet verlaufen und mit ihren Enden und Außenseiten 156c bzw. 156d benachbart zu den Umfangsflächen der Umlenkrollen 151 bzw. 152 liegen, so dass der Antriebsriemen 150 an den Außenseiten 156c bzw. 156d der Stützarme 156a, 156b anliegen und sich zwischen den Umlenkrollen 151 bzw. 152 abstützen. Dabei kann vorgesehen sein, dass die Stützarme 156a, 156b über ein Verbindungsstück 157, in dem das Drehlager 153 gelegen ist, befestigt sind. Die Stützarme 156a, 156b legen die Lage der Antriebsriemen 150 über die Länge DR1 fest, so dass ein auf Stützteilen S_{i,j} liegendes Bedienfahrzeug 100 genau vor einem Lagerbehälter-Bereich LC positioniert werden kann. Auch werden dadurch Schwingungsneigung des Bedienfahrzeugs 100 reduziert.

Alternativ oder zusätzlich zu den Stützarmen 156a, 156b können die Endabschnitte der Antriebsraupen 131, 132, 141, 142 an Stützstangen 155a, 155b befestigt sein, die an dem Verbindungsstück 157 befestigt sind. In der Figur 8 sind beispielhaft beide Ausführungsformen der Befestigung der Endabschnitte am Verbindungsstück 157 an der Antriebsraupe 131 und im Vergleich dazu an der Antriebsraupe 132 dargestellt, Vorzugsweise sind die Antriebsraupen 131, 132, 141, 142 an einem Bedienfahrzeug 100 gleichartig oder identisch gestaltet.

Der Abstand zwischen den Drehachsen der beiden jeweils äußeren Drehlager 151a, 152a für die Umlenkrollen ist als Länge DR1 definiert. Die Länge DR1 ergibt sich somit als die Summe einer ersten Armlänge 155a und einer zweiten Armlänge 156a, wobei die erste Armlänge 155a die Länge des ersten Tragarms 155 als Abstand zwischen dem mittleren Drehlager 153 dem äußeren Drehlager 151a und die zweite Armlänge 156a die Länge des zweiten Tragarms 156 als Abstand zwischen dem mittleren Drehlager 153 und dem äußeren Drehlager 152a ist. Jede Antriebsraupe 131, 132, 141, 142 weist insgesamt eine Länge DR2 auf (Figur 8), die gleich der Abstand zwischen den zwei äußersten, auf der Verbindungsgerade zwischen den Drehachsen der äußeren Drehlager 151a, 152a gelegenen Punkten ist. Daraus ergeben sich die Längenabschnitte DLA, DLB, die zusammen die Länge DR2 ergeben, wobei DLA als Länge zwischen der Drehachse des mittleren Drehlagers 153 und der Drehachse des äußeren Drehlagers 151a und DLA als Länge zwischen der Drehachse des mittleren Drehlagers 153 und der Drehachse des äußeren Drehlagers 152a definiert ist.

Nach einer Ausführungsform der Erfindung ist der Diagonal-Abstand DS2 zwischen Stützteilen, also zwischen einem Stützteil S_{i,j} und einem Stützteil S_{(i+1),(j-1)} größer als die größere Länge der Längen DLA oder DLB zuzüglich dem größten Durchmesser dS aller Stützteile S_{i,j}.

Nach einer Ausführungsform des Bedienfahrzeugs 100 ist die Drehachse des mittleren Drehlagers 153 auf der Verbindungslinie zwischen den äußeren Drehlagern 151a, 151b gelegen.

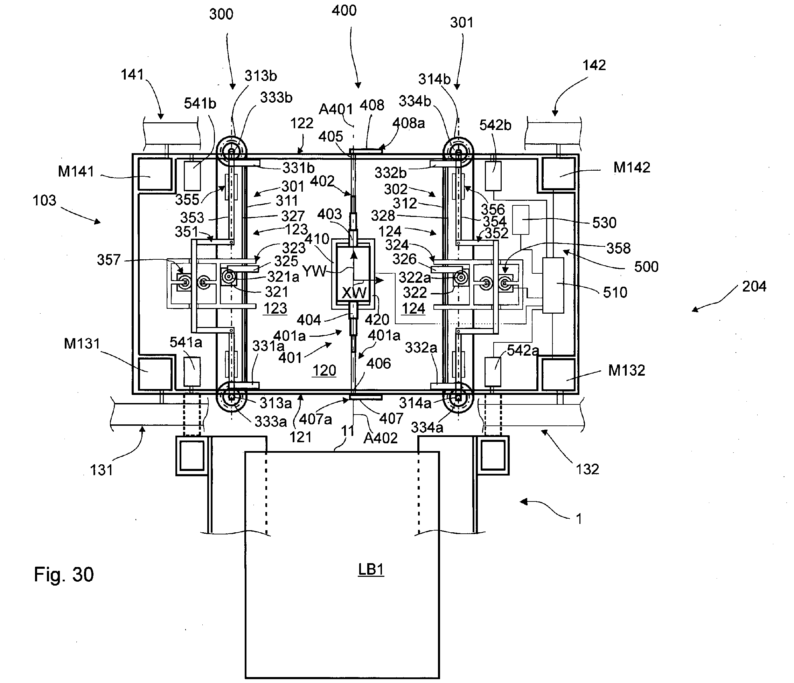

Bei der Verwendung des Bedienfahrzeugs 100 zwischen zwei Lagerregalen 1 oder 2, bei der das Bedienfahrzeugs 100 mit seinen Antriebsraupen 131, 132, 141, 142 auf den jeweiligen Stützteil S_{i,j} bewegt wird, ist vorgesehen, dass die Antriebsraupen-Länge DR1 mindestens der Abstand DS2 (Figur 2) zwischen zwei in der XR-Richtung aufeinander folgenden und in der ZR-Richtung nebeneinander angeordnet sind. In der allgemeinen Bezeichnungsweise bedeutet dies gemäß der Darstellung in der Figur 2, dass - Bezug nehmend auf einen Stützteil S_{i,j} - die Verbindungslinie z.B. zwischen den wirksamen und insbesondere geometrischen Mittelpunkten der Stützteil S_{(i+1),j} und Stützteil S_{(i+1),(j-i)} betragsmäßig kleiner sein muss als die Antriebsraupen-Länge DR1 der Antriebsraupen 131, 132, 141, 142, das es sonst in der Fahrstellung des Bedienfahrzeugs 100, die in der Figur 30 gezeigt ist, einen Bewegungsabschnitt geben würde, in dem eine der Raupen genau zwischen zwei benachbarten und höhenversetzten Stützteil liegt und nicht von einem Stützteil S_{i,j} gehalten werden kann. Die Antriebsraupen 131, 132, 141, 142 sind also jeweils mit einer Antriebsraupen-Länge DR1 versehen, bei der das Bedienfahrzeug 100 insbesondere in der in der Figur 2 gezeigten Fahrstellung je Längsseite an jeder Querseite 103, 104 auf zumindest einem Pin gestützt wird. Nach einer Ausführungsform des Bedienfahrzeugs 100 betragen die Antriebsraupen-Längen DR1 der Antriebsraupen 131, 132, 141, 142 zumindest das 1,5fache der Breite 120 des Aufnahmeraums 120, also die einem Lagerbehälter LB im Aufnahmeraum 120 zur Verfügung gestellte Breite.

Mit den Antriebsraupen 131, 132, 141, 142 ist es möglich, dass das Bedienfahrzeug 100 in einem Fahrbereich F1 zwischen zwei mit ihren Stützteilen S_{i,j} einander zugewandten Lagerregalen 1, 2 eine Horizontalbahn BH oder eine Diagonalbahn BD abfährt. Eine Horizontalbahn BH und eine Diagonalbahn BD ist in der Figur 2 jeweils mit strichpunktierten Linien dargestellt. Jede strichpunktierte Linie ergibt sich als Verbindungslinie derjenigen Stützteile S_{i,j}, auf denen sich das Bedienfahrzeug 100 beim Fahren einer Horizontalbahn BH oder einer Diagonalbahn BD abstützt.

Generell erfolgt zur Bewegung des Bedienfahrzeugs 100:
- eine Ausrichtung von Antriebsraupen 131, 132, 141, 142 des Bedienfahrzeugs 100 in die Längsrichtung XW des Bedienfahrzeugs 100, wobei jede der Antriebsraupen 131, 132, 141, 142 auf zumindest einem Stützteil S_{i,j} eines Lagerregal-Anordnung LA aufliegt und wobei die Antriebsraupen 131, 132, 141, 142 des Bedienfahrzeugs 100 auf jeder Längsseite 101, 102 auf Stützteilen S_{i,j} verschiedener Lagerregale 1, 2 der Lagerregal-Anordnung LA aufliegt, und
- ein Antreiben jeweils eines Antriebsriemen 150 jeder der Antriebsraupen 131, 132, 141, 142 und dadurch Fortbewegen des Bedienfahrzeugs 100 in die Längsrichtung XW desselben auf den Stützteilen S_{i,j} zwischen den Lagerregalen 1, 2, z.B. auf einer Horizontalbahn BH oder einer Diagonalbahn BD.

Nach einer Ausführungsform der Erfindung ragen die Stützteile S_{i,j} von der Oberfläche in der YR-Richtung von der Frontfläche C_{i,j} der vorderen Vertikalstange Sᵢ mit einem Abstand aₛ weg, der geringer ist als der Abstand a142, in dem die Antriebsraupen 131, 132, 141, 142 von der Längsseiten-Oberfläche 101a bzw. 102a entfernt liegen (Figur 7).

In den Figuren 3 und 4 ist in zwei Schritten gezeigt, wie das Bedienfahrzeug 100 von einem Horizontalbetrieb (Figur 3), bei der das Bedienfahrzeug 100 entlang einer Horizontalbahn BH fährt, in einen Diagonalbetrieb (Figur 4), bei dem bei der das Bedienfahrzeug 100 entlang einer Diagonalbahn BD fährt, übergeht.

Eine Veränderung des Horizontalbetriebs (Figur 3) in den Diagonalbetrieb (Figur 4), geht aus von einer Horizontalbahn-Stellung der Antriebsraupen 131, 132, 141, 142, bei sich diese in der Längsrichtung XW des Bedienfahrzeugs 100 erstrecken und bei dem jede Antriebsraupe 131, 132, 141, 142 auf zumindest einem Stützteil S_{i,j} liegt. Der Ausdruck "Erstrecken der Antriebsraupen 131, 132, 141, 142 in der Längsrichtung XW" meint hierin, dass die Verbindungsgerade der jeweiligen Zentren der Drehlager 151a, 152a einer Antriebsraupen 131, 132, 141, 142 in Richtung der Längsrichtung XW des Bedienfahrzeug 100 verläuft. Durch gleichsinniges und gleichzeitiges Schwenken der Antriebsraupen 131, 132, 141, 142 um ihre jeweilige Drehachse 131a bzw. 132a bzw. 141a bzw. 142a in die Richtung einer Diagonalbahn BD des jeweiligen Lagerregals 1, 2, das durch die Positionen der Stützteile der benachbarten und jeweils einer zugewandten Lagerregale 1, 2 definiert ist, also z.B. gemäß der Darstellung der Figur 2 durch die Verbindungslinie der jeweiligen geometrischen Zentren des Stützteils S_{i,j} und des Stützteils S(i+1),(j-1). Durch Antreiben des jeweils einen Antriebsriemens 150 jeder der Antriebsraupen 131, 132, 141, 142 bewegt sich das Bedienfahrzeug 100 auf einer Diagonalbahn BD in einem Diagonalbahn-Fahrbetrieb. Das gleichsinnige und gleichzeitige Schwenken der Antriebsraupen 131, 132, 141, 142 kann während der Bewegung des Bedienfahrzeugs 100 auf den Stützteilen S_{i,j} erfolgen oder bei auf den Stützteilen S_{i,j} stehendem Bedienfahrzeug 100.

In analoger Weise kann umgekehrt vorgesehen sein, dass - ausgehend von einer winkligen oder Diagonalbahn-Stellung der Antriebsraupen 131, 132, 141, 142 - ein gleichsinniges und gleichzeitiges Schwenken der Antriebsraupen 131, 132, 141, 142 um ihre jeweilige Drehachse 131a bzw. 132a bzw. 141a bzw. 142a in die Richtung der Horizontalbahn BH des jeweiligen Lagerregals 1, 2 erfolgt, um das Bedienfahrzeug 100 in den Horizontalbahn-Fahrbetrieb (Figur 3) zu versetzen.

Das Bedienfahrzeug 100 kann auch ein Bodenbetrieb-Fahrwerk, das an dem Fahrzeugrahmen 110 angeordnet sein kann, aufweisen. Mit dem Bodenbetrieb-Fahrwerk kann das Bedienfahrzeug 100 in einem Fahrwerk-Bodenbetriebszustand auf dem Boden G fahren, während sich die Antriebsraupen 131, 132, 141, 142 in einer Drehstellung befinden, bei der diese den Boden G nicht berühren. Dieser Fahrwerk-Bodenbetriebszustand ist z.B. in der Figur 5 dargestellt. Nach einer weiteren Ausführungsform des Bedienfahrzeugs 100 weist dieses eine Lenkvorrichtung auf, mit der die Laufräder am Fahrzeugrahmen 110 um eine Achse drehbar sind, die quer zur - Drehachse der Räder verläuft. Auf diese Weise sind die Laufräder lenkbar gegenüber dem Fahrzeugrahmen 110 an diesem angeordnet sind, so dass das Bedienfahrzeug 100 auch in gesteuerter Weise kurvige Fahrstrecken fahren kann.

Insbesondere kann das Bodenbetrieb-Fahrwerk für den Fahrwerk-Bodenbetriebszustand durch Laufräder 111, 112, 113, 114 (Figur 5) realisiert sein, deren Drehachsen entlang der XW-Achse oder insbesondere parallel zur XW-Achse des Bedienfahrzeugs 100 verläuft. Bei einer Ausführungsform, bei der solche Laufräder 111, 112, 113, 114 lenkbar am Fahrzeugrahmen 110 angeordnet sind, ist eine Ausrichtung der Drehachsen der Laufräder 111, 112, 113, 114 in dieser Weise möglich. Mit diesen Laufrädern 111, 112, 113, 114 kann das Bedienfahrzeug 100 insbesondere in einer Richtung fahren, die quer zur Längsrichtung XR der Lagerregale 1, 2 verläuft, insbesondere wenn das Bedienfahrzeug 100 von diesem Fahrwerk-Bodenbetriebszustand in einen Regalbetrieb-Zustand oder umgekehrt übergehen soll. Auch ist ein Übergang zwischen einem solchen Fahrwerk-Bodenbetriebszustand und einem Raupen-Bodenbetriebszustand und umgekehrt möglich, bei dem das Bedienfahrzeug 100 auf den Antriebsraupen 131, 132, 141, 142 auf einem Boden G fährt, auf dem die Lagerregale 1, 2 stehen, nachdem die Antriebsraupen 131, 132, 141, 142 in eine Boden-Fahrstellung unter Anheben des Fahrzeugrahmens 110 vom Boden G gedreht worden sind. In den dargestellten Ausführungsformen des Bedienfahrzeugs 100 sind die Laufräder 111, 112 an der Außenseite oder Querseite 103 und die Laufräder 113, 114 an der Außenseite oder Querseite 104 angelenkt. Jedes der Laufräder 111, 112, 113, 114 des Bedienfahrzeugs 100 ist derart angeordnet, dass das Fahren des Bedienfahrzeugs 100 auf dem Boden quer zur Ausrichtung von Antriebsraupen 131, 132, 141, 142 des Bedienfahrzeugs 100 liegt. Insbesondere sind die Laufräder 111, 112, 113, 114 derart angeordnet, dass die die Drehachse der Laufräder 111, 112, 113, 114 senkrecht zur Ausrichtung von Antriebsraupen 131, 132, 141, 142 des Bedienfahrzeugs 100 oder der Längsrichtung XW des Bedienfahrzeugs 100 liegt (Figur 7). Das Fahrzeug weist bei der Ausführungsform mit Laufrädern 111, 112, 113, 114 einen Antriebsmotor und eine Kopplungsvorrichtung auf, mit der der Antriebsmotor an zumindest zwei der Laufräder 111, 112, 113, 114 gekoppelt ist, um das Bedienfahrzeug 100 auf einer Bodenfläche BF_fortzubewegen.

Alternativ oder zusätzlich kann das Bodenbetrieb-Fahrwerk mit Laufrädem 115, 116, 117, 118 (Figur 6) realisiert sein, deren Drehachsen entlang der YW-Achse oder insbesondere parallel zur YW-Achse des Bedienfahrzeugs 100 verläuft. Bei einer Ausführungsform, bei der solche Laufräder 115, 116, 117, 118 lenkbar am Fahrzeugrahmen 110 angeordnet sind, ist eine Ausrichtung der Drehachsen der Laufräder 115, 116, 117, 118 in dieser Weise möglich. Mit diesen Laufrädern 115, 116, 117, 118 kann das Bedienfahrzeug 100 insbesondere in einer Richtung fahren, die in der Längsrichtung XR der Lagerregale 1, 2 verläuft, wenn das Bedienfahrzeug 100 von diesem Fahrwerk-Bodenbetriebszustand in einen Regalbetrieb-Zustand oder umgekehrt übergehen soll. Auch ist ein Übergang zwischen einem solchen Fahrwerk-Bodenbetriebszustand und einem Raupen-Bodenbetriebszustand und umgekehrt möglich, bei dem das Bedienfahrzeug 100 auf den Antriebsraupen 131, 132, 141, 142 auf einem Boden G fährt, auf dem die Lagerregale 1, 2 stehen, nachdem die Antriebsraupen 131, 132, 141, 142 in eine Boden-Fahrstellung unter Anheben des Fahrzeugrahmens 110 vom Boden G gedreht worden sind.

Die Figur 8 zeigt die Stellung der Antriebsraupen 131, 132, 141, 142 im Boden-Fahrbetrieb des Bedienfahrzeugs 100, also wenn dieses auf den Laufräder 111, 112, 113, 114 auf einer Bodenfläche BF fährt. Dabei ist das Bedienfahrzeug 100 derart ausgeführt, dass die Antriebsraupen 131, 132, 141, 142 jeweils einen längeren vom Drehgelenk 153 ausgehenden Abschnitt 158 mit der Länge DLA und einen kürzeren vom Drehgelenk 153 ausgehenden Abschnitt 158 mit der Länge DLB aufweisen. Die Abschnitte 158, 159 definieren sich jeweils in der Längsrichtung der jeweiligen Antriebsraupe vom Drehgelenk 153 bis zum jeweiligen äußersten Ende der jeweiligen Antriebsraupe, wobei die Längsrichtung die Verbindungsgerade zwischen den Drehgelenken 151a, 152a ist. Bei der Ausführung eines Bedienfahrzeugs 100 mit Laufrädern 111, 112, 113, 114 weist der kürzere Abschnitt 158 eine Länge DLA auf, die kürzer ist als die Höhe H153 zwischen der Bodenfläche BF und dem Drehpunkt 153, wobei insbesondere vorgesehen sein kann, das die Länge DLA zumindest um den Faktor 0,9 kürzer ist als die Höhe H153. Die Länge DLB des längeren Abschnitts 159 kann um den Faktor 1,5 länger als die Länge DLA des kürzeren Abschnitts 158 der Antriebsraupen 131, 132, 141, 142. Für den Fahrbetrieb auf der Bodenfläche BF sind die Antriebsraupen 131, 132, 141, 142 in eine Drehstellung gebracht, bei der der kürzere Abschnitt 158 der Antriebsraupen 131, 132, 141, 142 in Bezug auf die Höhenrichtung ZW unten liegt (Figur 8).

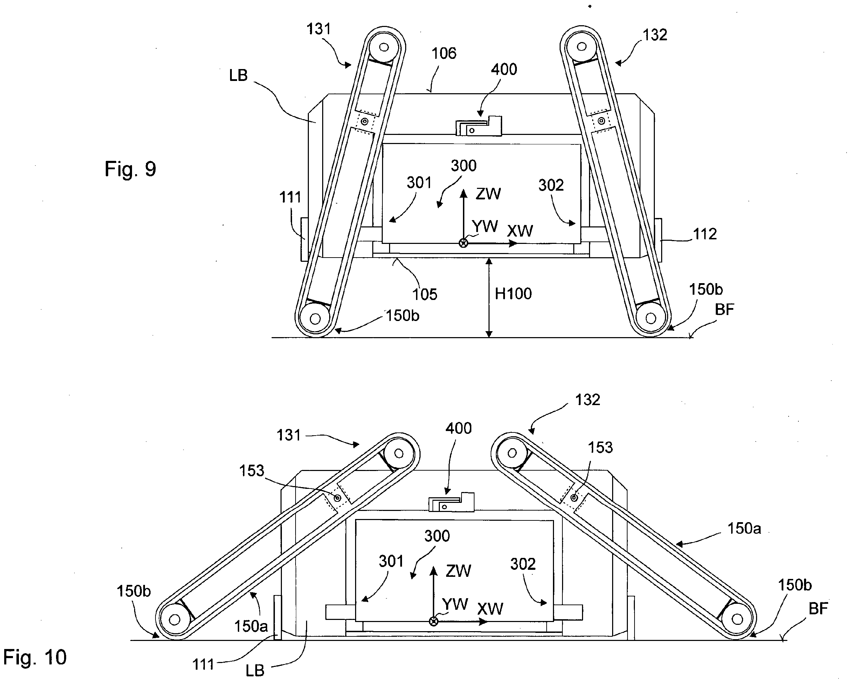

Dabei kann in einer weiteren Ausführungsform des Bedienfahrzeugs 100 vorgesehen sein, dass die Länge DLB des längeren Abschnitts 159 eine Länge hat, bei der in einem bestimmten Drehstellungsbereich der Antriebsraupen 131, 132, 141, 142 eine Unterseite 105 des Bedienfahrzeugs 100 einen Abstand H100 von der Bodenfläche BF hat, bei der die Laufräder 111, 112, 113, 114 von der Bodenfläche BF abgehoben sind (Figur 10). Insbesondere kann bei dieser Ausführungsform des Bedienfahrzeugs 100 die Länge DLB des längeren Abschnitts 159 einer Antriebsraupe 131, 132, 141, 142 um zumindest den Faktor 1,05 größer sein als der Abstand H153 zwischen dem Drehpunkt 153 der jeweiligen Antriebsraupe 131, 132, 141, 142 und dem untersten Punkt der Laufräder, die an derjenigen Querseite 103, 194 liegen, an der die betreffenden Antriebsraupen 131, 132, 141, 142 angeordnet sind. Diese Ausführungsform des Bedienfahrzeugs 100 erlaubt einen weiteren Boden-Fahrbetrieb: bei einem entsprechenden Antrieb der Antriebsraupen 131, 132, 141, 142 kann das Bedienfahrzeug 100 auf den kurvigen Abschnitten 150b der Antriebsraupen 131, 132, 141, 142 fahren, wobei das Bedienfahrzeug 100 dabei in einer Richtung führt, die quer und insbesondere senkrecht zu der Fahrtrichtung verläuft, in der das Bedienfahrzeug 100 mit den Laufrädern 111, 112, 113, 114 fahren kann.

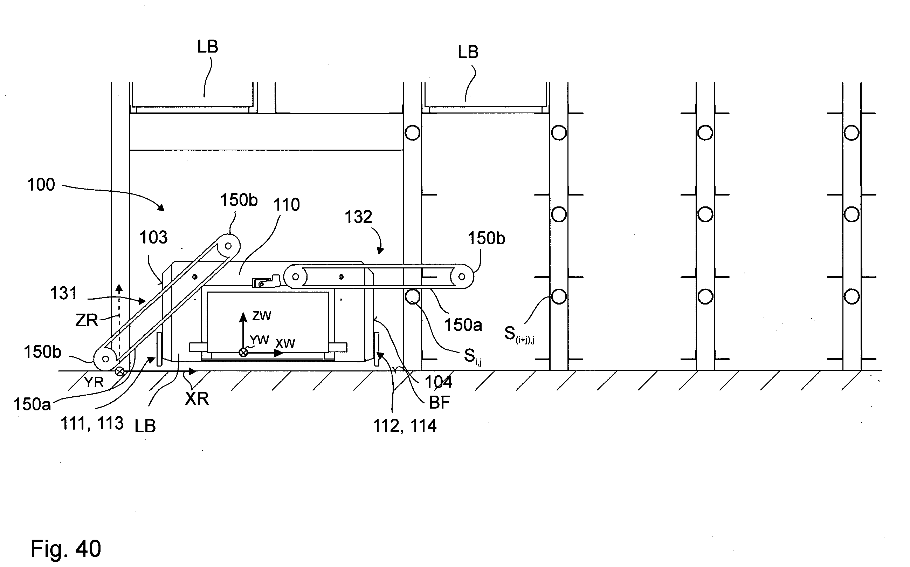

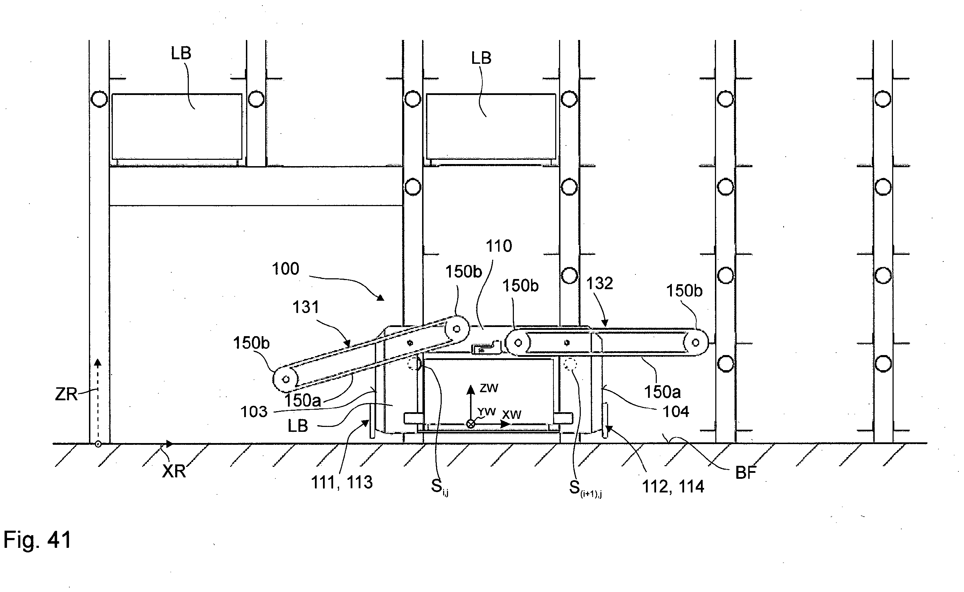

Bei dieser Ausführungsform des Bedienfahrzeugs 100 ist es möglich, dass das Bedienfahrzeug 100 selbstständig und durch die entsprechende Drehung der Antriebsraupen 131, 132, 141, 142 vom Boden-Fahrbetrieb gemäß der Darstellung der Figur 5 oder der Figur 8 in einen Regal-Fahrbetrieb (Figuren 1 bis 3) gebracht werden kann: Mit den jeweils längeren Abschnitten 159 von an einer ersten der Querseiten 103, 104, im Beispiel der Figur 5 die an der Querseite 104, angeordneten Antriebsraupen (im Beispiel die Antriebsraupen 132 und 142) wird die jeweils erste Querseite an einem ersten Stützteil S_{i,j} angehoben, so dass sich die an der jeweils ersten Querseite (im Beispiel der Querseite 104) angeordneten Laufräder von der Bodenfläche BF abheben (Figur 40). Diejenigen Antriebsraupen (im Beispiel die Antriebsraupen 131 und 141), die sich an der entgegen gesetzt zu einer jeweils ersten Querseite gelegenen zweiten Querseite gelegen sind (im Beispiel der Querseite 103) haben mit dem kurvigen Abschnitt 150b des Antriebsriemens 150 Kontakt mit der Bodenfläche BF und sind in einer Drehstellung, bei der die an der jeweils zweiten Querseite (im Beispiel der Querseite 103) gelegenen Laufräder (im Beispiel die Laufräder 111, 113) mit etwa demselben Abstand von der Bodenfläche BF angehoben sind, wie die Laufräder an der ersten Querseite. Dies ist der in der Figur 40 gezeigte Zustand. In dieser Stellung kann das Bedienfahrzeug 100 in der XR-Richtung gefahren werden, indem die Antriebsriemen 150 der Antriebsraupen 131, 132, 141, 142 entsprechender Richtung und Geschwindigkeit bewegt werden. Nach einer bestimmten Fahrtstrecke in der XR-Richtung kommen die an der ersten Querseite gelegenen Antriebsraupen (im Beispiel die Antriebsraupen 131 und 141) in Kontakt mit dem jeweils ersten Stützteil S_{i,j}, während die jeweils an der ersten Querseite gelegenen Antriebsraupen bereits auf einem in der XR-Richtung gesehen weiter vorne liegenden Stützteil S_{(i+1),j} aufliegen. Damit befindet sich das Bedienfahrzeug 100 im Regal-Fahrbetrieb, in dem das Bedienfahrzeug 100 in den Horizontalbahn-Fahrbetrieb (Figur 2 oben und Figuren 3 und 41) oder den Diagonalbahn-Fahrbetrieb gebracht werden kann (Figur 2 Mitte). Somit sind die Stützteile S_{i,j} oder Abstützelemente und die Antriebsraupe 131, 132, 141, 142 so angeordnet, dass das Bedienfahrzeug ohne weitere Hilfsmittel von der Fahrt im Regal auf eine Fahrt auf dem Boden wechseln kann und umgekehrt.

Hierzu ist insbesondere vorgesehen, dass die Drehachsen der Antriebsraupen 131, 132, 141, 142 oberhalb der Durchgangsöffnung 121, 122 angeordnet sind.

Im Bodenbetrieb kann insbesondere mittels einer Fördervorrichtung des Bedienfahrzeugs 100 eine Bodenaufnahme erfolgen, also eine Aufnahme eines
- Lagerbehälters in den Aufnahmeraum 120 des Bedienfahrzeugs 100, wenn sich das Bedienfahrzeugs 100 im Bodenbetrieb befindet. Dies kann insbesondere dann erfolgen, wenn die Drehachsen der Antriebsraupen 131, 132, 141, 142 oberhalb der Durchgangsöffnung 121, 122 angeordnet sind. Der Schwenkmechanismus der Antriebsraupen 131, 132, 141, 142 kann als Hubmechanismus benutzt werden, um eine Lastübergabe in unterschiedlichen Höhen durchzuführen, und auch eine Lastübergabe direkt auf dem Fußboden ist möglich.

Alternativ dazu können die Drehachsen der Antriebsraupen 131, 132, 141, 142 unterhalb der Durchgangsöffnung 121, 122 angeordnet sein. Bei dieser Ausführungsform des Bedienfahrzeugs 100 kann dieses derart ausgeführt sein, dass eine Bodenaufnahme oder der beschriebene Wechsel von Bodenbetrieb in Regalbetrieb nicht erfolgen, jedoch der Regalbetrieb kann.

Der Kontakt der Antriebsraupen 131, 132, 141, 142 des Bedienfahrzeugs zu den Stützteilen S_{i,j} oder Fahrnasen kann sowohl reibschlüssig über entsprechend beschichtete Umlauftriebe erfolgen als auch formschlüssig über entsprechend gestaltete Umlauftriebe, die z. B. mit einer Außenverzahnung in passende Verzahnungen der Stützteile S_{i,j} oder Fahrnasen eingreifen.

Zur Aufnahme und Abgabe eines Lagerbehälters im Boden-Fahrbetrieb oder Regal-Fahrbetrieb kann das Bedienfahrzeug 100 weiterhin zumindest ein Stellsystem aufweisen, die derart ausgeführt ist, dass diese einen Lagerbehälter LB durch die Durchgangsöffnungen 121, 122 in den Aufnahmeraum 120 einführen und von diesem herausbewegen kann. Generell weist das Stellsystem zumindest ein Stellteil auf, das derart im Aufnahmeraum 120 gelegen ist, dass dieses an einem Lagerbehälter LB anliegt oder zur Anlage gebracht werden kann. Dabei wird das Stellteil von einem Antriebsmotor derart an einer Stelle im Inneren des Aufnahmeraums 120 bewegt oder von einer Stelle im Inneren des Aufnahmeraums 120 aus in YW-Richtung zu der jeweiligen Öffnung 121, 122 hin bewegt, so dass ein Lagerbehälter LB, der an dem Stellteil anliegt, durch das Stellteil aus der jeweiligen Öffnung herausbewegt und in einen Lagerbereich LC eines Lagerregals 1, 2 hinein bewegt werden kann.

Das Stellsystem kann aus einer oder zwei oder auch mehr als zwei Stellvorrichtungen gebildet sein. Im Folgenden werden Behälter-Stellvorrichtungen beschreiben, die jeweils einzeln oder in Kombination für ein Bedienfahrzeug 100 nach der Erfindung eingesetzt sein können oder in ein andersartiges Bedienfahrzeug einsetzbar sind.

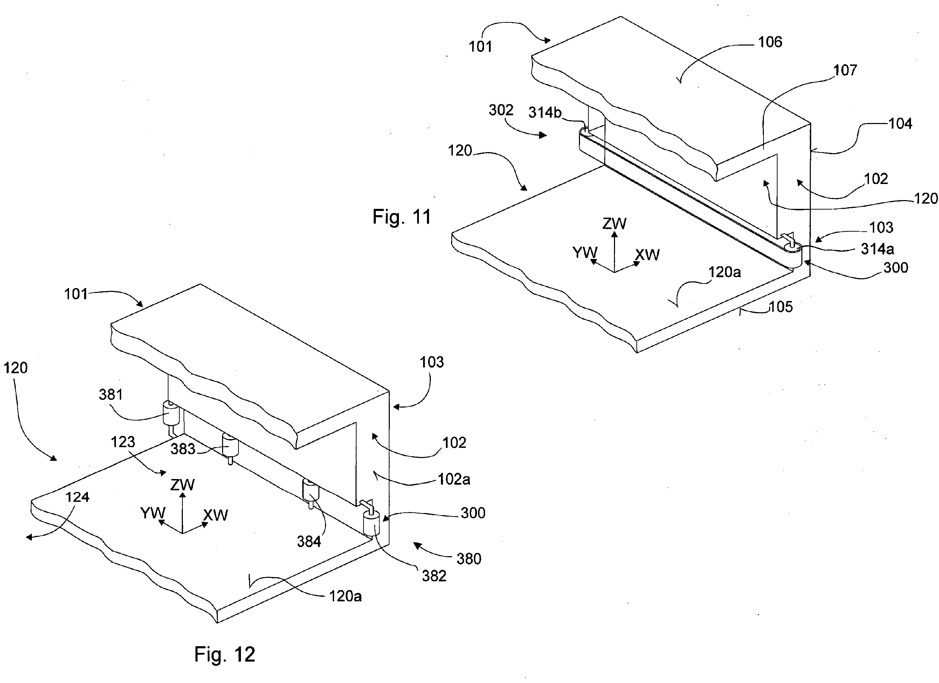

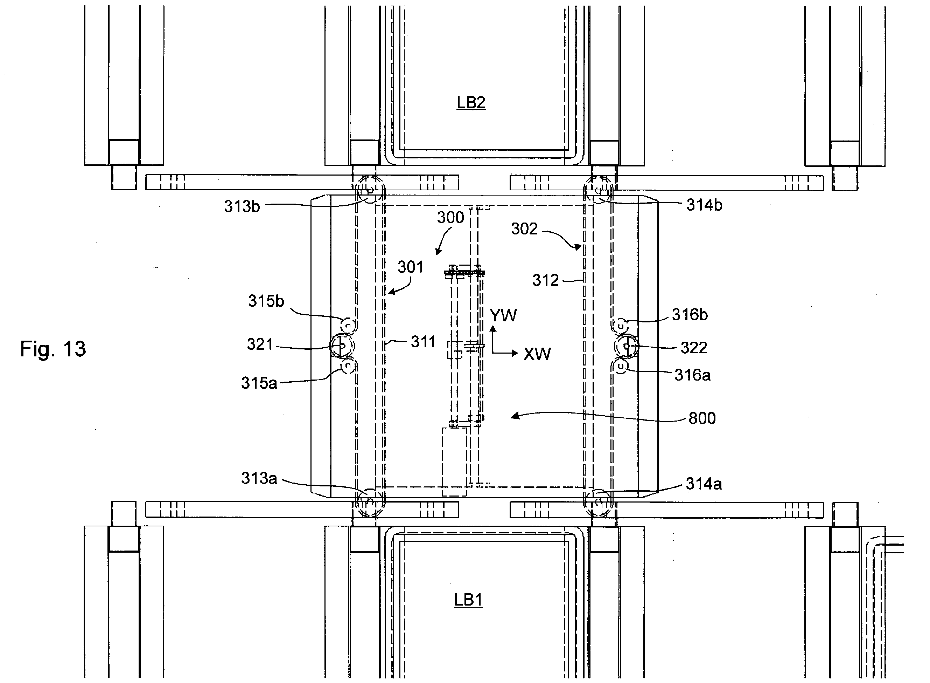

Das Stellsystem kann insbesondere aus Stellvorrichtungen gebildet sein, wobei eine der Behälter-Stellvorrichtungen zwei Fördervorrichtungen aufweist, die-wie es z.B. in den Figuren 11 und 13 dargestellt ist -jeweils einen Riementrieb aufweist, die jeweils auf einer von zwei einander gegenüber liegenden Außenseiten des Aufnahmeraums 120 angeordnet sind. Bei der Integration der Fördervorrichtungen in ein Bedienfahrzeug 100 ist jede Fördervorrichtung derart ausgebildet, dass diese in Anlage mit jeweils einer der zueinander entgegen gesetzt gelegenen Seitenflächen eines Lagerbehälters LB entsprechender Größe stehen und bei Betätigung derselben den Lagerbehälter LB durch eine der Durchgangsöffnungen in den Aufnahmeraum 120 einführen oder von diesem herausbewegen.

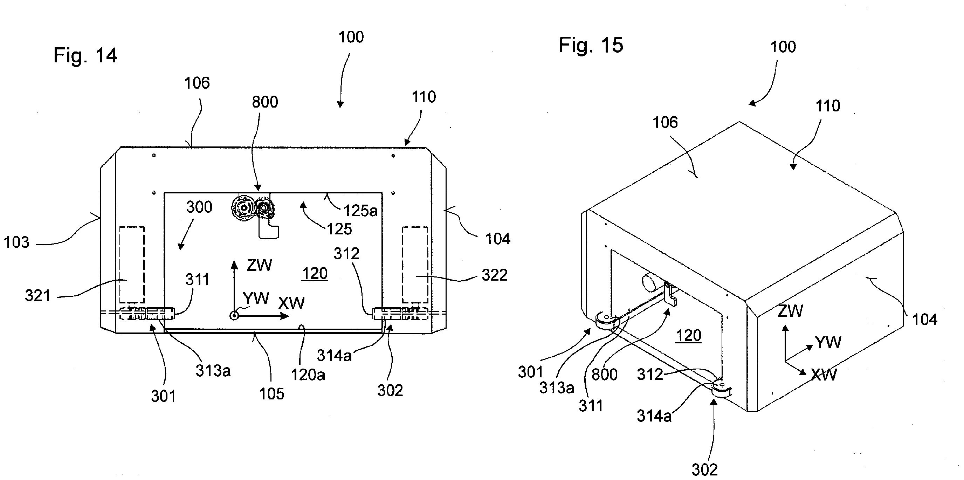

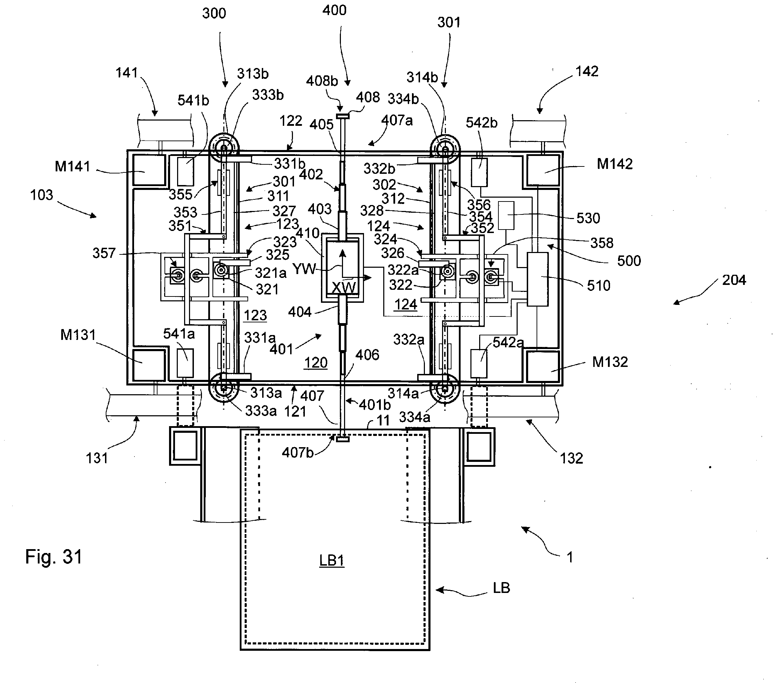

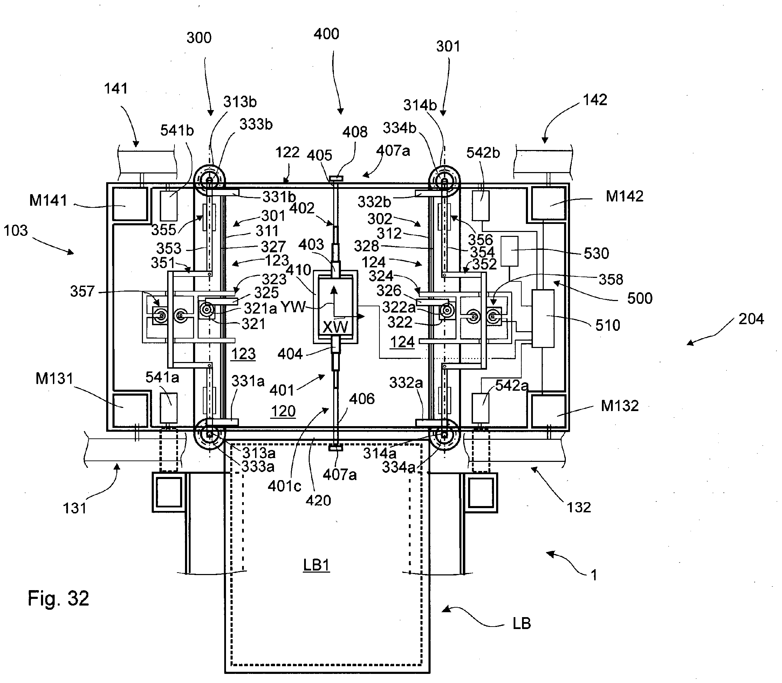

Bei den in den Figuren 7, 11 und 13 bis 15, 17 sowie 30 bis 35 dargestellten Ausführungsformen des Bedienfahrzeugs 100 ist dieses mit einer Stellvorrichtung in Form einer Fördervorrichtung 300 aus zwei Riementrieben 301, 302 gebildet, von denen jeder jeweils auf einer der beiden gegenüber liegenden Außenseiten 123, 124 des Aufnahmeraums 120 angeordnet ist. Dabei weist weiterhin jeder Riementrieb 301, 302 einen Antriebsriemen 311 bzw. 312 und zwei Umlenkrollen 313a, 313b bzw. 314a, 314b auf. Die Umlenkrollen 313a, 313b bzw. 314a, 314b können insbesondere als Antriebsrollen ausgeführt sein. Bei dieser Ausführungsform ist vorgesehen:
- ein mit einer Steuerungsvorrichtung 510 funktional verbundener Antriebsmotor 321 bzw. 322,
- eine Übertragungsmechanik 323 bzw. 324 insbesondere in Form eines Ritzels zur Übertragung eines Ausgangs-Drehmoments des Antriebsmotors 321 bzw. 322 auf die beiden Umlenkrollen.

Bei einer Ausführungsform der Fördervorrichtung 300 mit zwei Riementrieben 301, 302 kann in der Querrichtung YW des Bedienfahrzeugs 100 gesehen vor und hinter dem Ausgangsritzel 321a, 322a des jeweiligen Antriebsmotors 321 bzw. 322 jeweils eine Umlenkrolle 315a bzw. 315b derart benachbart zu dem jeweiligen Ausgangsritzel 321a, 322a gelegen sein, dass der jeweilige Antriebsriemen 311 bzw. 312 an ein jeweiliges Ausgangsritzel 321a, 322a des jeweiligen Antriebsmotors 321 bzw. 322 angedrückt wird.

Die Übertragungsmechanik 323 bzw. 324 ist bei der in der Figur 30 gezeigten Ausführungsform realisiert mit einem Antriebsritzel 325 bzw. 326, das mit einer Ausgangswelle des Antriebsmotors 321 bzw. 322 gekoppelt ist, und mit einer Übertragungswelle 327 bzw. 328, mit drehfest mit der Übertragungswelle 327 bzw. 328 verbundene Ritzel 321a, 321b bzw. 322a, 322b, das jeweils mit einem Antriebsritzel 333a, 333b bzw. 334a, 334b gekoppelt ist, um die jeweils an diesem gekoppelte Umlenkrolle 313a, 313b bzw. 314a, 314b in der entsprechenden Drehrichtung anzutreiben.

Nach einer Ausführungsform, die in der Figur 30 dargestellt ist, erstreckt sich jeder Riementrieb 310 in der Querrichtung YW über den Aufnahmeraum 120 hindurch und, als Option, ragt jeweils mit einem Endabschnitt 311a, 311b über die Oberflächen 101a, 102a der Längsseiten 101 bzw. 102 hinaus. Dabei kann insbesondere vorgesehen sein, dass die Endabschnitte 311a, 311b nicht weiter über die jeweilige Oberfläche 101a, 102a der jeweiligen Längsseite 101 bzw. 102 hinaus ragen, als der Abstand a142 (Figur 7) des in der YW-Richtung gesehen seitlichen Außenrands der jeweiligen Antriebsraupe 131, 132, 141, 142 an der Stelle des Riementriebs 301, 302 beträgt.

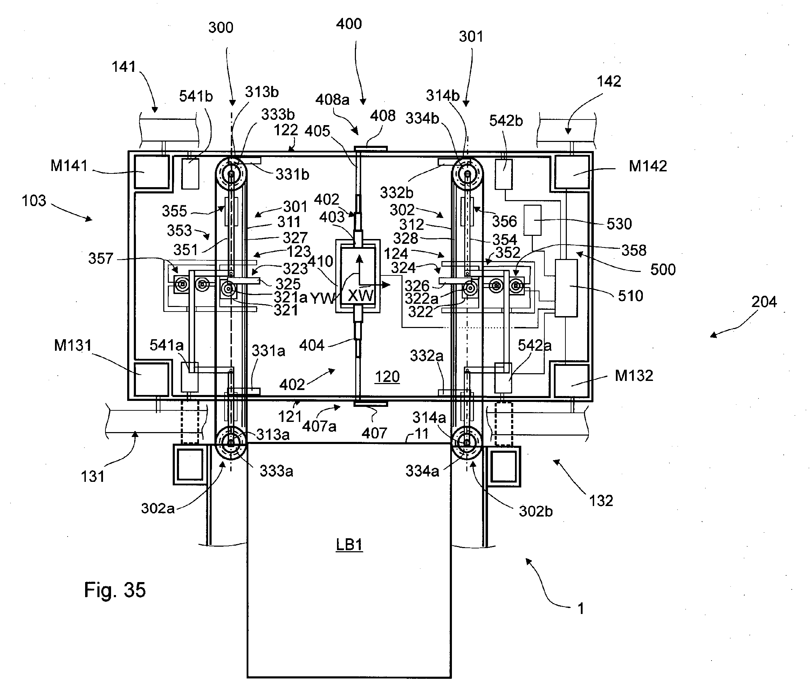

Nach der in der Figur 30 dargestellten Ausführungsform der Fördervorrichtung 300 ist zusätzlich eine Riementrieb-Stellvorrichtung 351, 352 vorgesehen, mit der ein jeweiliger Riementrieb aus dem Aufnahmeraum 120 abschnittsweise herausgefahren werden kann (Zustand 302b in Figur 35). Die Riementrieb-Stellvorrichtung 351, 352 ist gebildet aus:
- einer Trägervorrichtung 353 bzw. 354, an deren Endabschnitten jeweils eine der Umlangrollen gelagert sind,
- einer Führungsvorrichtung 355 bzw. 356, an der die Trägervorrichtung 353 bzw. 354 in der YW-Richtung verschiebbar gelagert ist,
- eine mit der Trägervorrichtung 353 bzw. 354 in Anlage oder im Eingriff befindliche Antriebsvorrichtung 357 bzw. 358, die funktional mit der Steuerungsvorrichtung 510 verbunden ist und die bei entsprechender Betätigung eine Verschiebung der Trägervorrichtung 353 bzw. 354 vornimmt

Die Steuerungsvorrichtung 510 kann insbesondere auch mit den Motoren M131, M132, - M141, M142 verbunden sind, von denen jeweils eine mit einer der Antriebsraupen 131, 132, 141, 142 gekoppelt ist, um diese jeweils drehen und somit in vorbestimmte Drehstellungen bringen zu können.

Weiterhin ist nach der Erfindung auch ein Steuerungssystem 500 vorgesehen, das bei jeden der hierin beschriebenen Ausführungsformen verwendet werden kann und das aufweist:
- die Steuerungsvorrichtung 510,
- eine Lagesensor-Vorrichtung 530 und
- Positionssensoren 541a, 541b, 542a, 542b, die insbesondere an den Längsseiten 101, 102 angeordnet sein können.

Generell kann ein Steuerungssystem 500 für jeweils eine Stellvorrichtung vorgesehen und an diese angeschlossen sein. Es kann jedoch auch vorgesehen sein, dass für mehrere Stellvorrichtungen eines Bedienfahrzeugs 100 insgesamt ein Steuerungssystem 500 an diese funktional angeschlossen ist.

Die Lagesensor-Vorrichtung 530 ist funktional mit der Steuerungsvorrichtung 510 verbunden. In der Steuerungsvorrichtung 510 kann eine Regelungsfunktion implementiert sein, die eine Verstellung der Antriebsraupen 131, 132, 141, 142 zwischen einem Horizontal-Fahrbetrieb und einem Diagonal-Fahrbetrieb bei konstant bleibender räumlicher Lage des Fahrzeugrahmens 110 erlaubt. Weiterhin kann in der Steuerungsvorrichtung 510 eine Identifikationsfunktion implementiert oder enthalten sein, mit der durch die Sensoren erfassten Informationen Angaben über die Position des Bedienfahrzeugs 100 an einem Lagerregal und z.B. an einem Stützteil S_{i,j} oder einer Vertikalstange Rᵢ, oder die jeweils aktuelle Differenz zu einem zu erreichenden Lagerbehälter-Bereich LC ermittelt und angezeigt werden kann. Auf dieser Weise kann das Bedienfahrzeug 100 an vorbestimmte Stellen des Lagerregals 1, 2 fahren. Hierfür kann vorgesehen eine, das an der vertikalen Stange eines Lagerregals 1, 2 an jedem Lagerbehälter-Bereich LC ein Identifkationszeichen für den jeweiligen Lagerbehälter-Bereich LC wie z.B. eine Code-Darstellung angebracht sein kann, so dass bei Erkennung ein solchen Zeichens die Steuerungsvorrichtung 510.annimmt, dass das Bedienfahrzeug 100 eine Sollposition an einen Lagerregal 1, 2 erreicht hat.

In den Figuren sind die Funktionsleitungen von der Steuerungsvorrichtung 510 zu den in den Figuren 1 bis 15 von dieser aus gesehen jenseits der Antriebsvorrichtung 410 gelegene Komponenten aus Übersichtlichkeit nicht dargestellt.

Generell kann die Fördervorrichtung 300 aus einem Stellteil gebildet sein, das mit einer Außenfläche des Lagerbehälters LB in Anlage gebracht werden kann. Dann kann der Lagerbehälter LB von dem Stellteil, das von einem an dem Stellteil gekoppelten Antriebsmotor angetrieben und entlang der Aufnahmeraum-Einführungs- oder Entnahme-Richtung und aus dem Aufnahmeraum 120 heraus und in einen Lagerbereich C hinein bewegt werden. Das Stellteil kann ein Schieber sein, der an einen Stellmotor wie einen -Linearmotor gekoppelt ist. Auch kann das Stellteil durch eine drehbar seitlich des Aufnahmeraums 120 gelagerte Antriebsrolle realisiert sein, die zur Erzeugung einer rotatorischen Stellbewegung an einen Stellmotor gekoppelt ist, um in Anlage mit einem Lagerbereich C diesen aus dem Aufnahmeraum 120 heraus und in einen Lagerbereich C hinein bewegen zu können.

Bei der in der Figur 12 dargestellten Ausführungsform des Bedienfahrzeugs 100 ist die Fördervorrichtung 300 aus zwei Anordnungen 380 von Führungsrollen gebildet, die von denen jeder jeweils auf einer der beiden gegenüber liegenden Außenseiten 123, 124 des Aufnahmeraums 120 angeordnet ist. Bei der dargestellten Ausführungsform der Anordnungen 380 von Führungsrollen ist jede Anordnung aus zwei äußeren Führungsrollen 381, 382 und zwei mittleren Führungsrollen 383, 384 gebildet. Die Führungsrollen sind derart drehbar gelagert, dass deren Drehachsen in der Höhenrichtung ZW oder entlang der Höhenrichtung verlaufen. Wie in der Figur 30 gezeigt, können die beiden äußeren-Führungsrollen 381, 382 außerhalb des Aufnahmeraums 120 drehbar gelagert sein. Diese hat den Vorteil, dass ein Lagerbehälter beim Herausfahren aus dem Aufnahmeraum 120 oder dem Hineinbewegen in den Aufnahmeraum 120 über die jeweilige seitliche Oberfläche 101a, 102a hinaus geführt werden kann. Jeweils eine Anordnung von Führungsrollen 381, 382, 383, 384 ist auf jeder der beiden gegenüber liegenden Außenseiten 123, 124 des Aufnahmeraums 120 angeordnet. Dadurch sind die Anordnungen 380 von Führungsrollen derart gelegen, dass diese einen im Aufnahmeraum 120 gelegenen Lagerbehälters LB seitlich führen können, wenn dieser in oder entlang der YR-Richtung aus dem Lagerbehälters LB herausbewegt oder in dem Aufnahmeraums 120 hinein bewegt wird.

An einer oder mehreren der Führungsrollen 381, 382, 383, 384 kann ein mit der Steuerungsvorrichtung 510 funktional verbundene Antriebsmotor angekoppelt sein, mit der die jeweilige Führungsrollen 381, 382, 383, 384 angetrieben, also in Drehung versetzt werden können. Auf diese Weise, können jeweils angetriebene Führungsrollen 381, 382, 383, 384 in der zusätzlichen Funktion als Antriebsrollen bei Anliegen derselben an den Oberflächen von jeweils auf entgegen gesetzten Seiten des Lagerbehälters LB diesen Lagerbehälter LB aus dem Aufnahmeraum 120 herausbewegen und somit heraus fördern oder mittels der äußeren Führungsrollen, wenn diese bereits an Längsseiten eines Lagerbehälter LB anliegen, in den Aufnahmeraum 120 des Bedienfahrzeugs 100 hineinzuziehen.

Weiterhin kann das Bedienfahrzeug 100 eine weitere als Greifvorrichtung mit einem Stellteil ausgeführte Stellvorrichtung aufweisen, mit dem ein Lagerbehälter LB gegriffen oder das mit einem Lagerbehälter LB in Anlage gebracht werden kann und durch Ausführung von Stellbewegungen der Lagerbehälter LB relativ zum Bedienfahrzeug 100 bewegt werden kann.

An Hand der Figuren 13 bis 29 wird im Folgenden eine Ausführungsform einer solchen Greifvorrichtung beschrieben, die dort mit dem Bezugszeichen 600 bezeichnet ist:
Die Greifvorrichtung 800 kann an einer oberen Oberfläche 125a einer oberen Wand 125 des Fahrzeugrahmens 110, das den Aufnahmeraum 120 des Bedienfahrzeugs 100 in Richtung der Hochachse ZW begrenzt, angebracht sein. Die Greifvorrichtung 800 weist eine Stellantriebsvorrichtung 801 auf, die mittels einer Signalleitung 801a mit einer Steuerungsvorrichtung 510 funktional verbunden ist (Figur 30). Weiterhin weist die Greifvorrichtung 800 eine Antriebsspindel 803, die an einen Spindelantriebsmotor (nicht eigens dargestellt) der Stellantriebsvorrichtung 801 angeschlossen ist, und eine Stellstange oder Fingerachse 830 auf. Die Steuerungsvorrichtung 510 kann Spindel-Betätigungssignale erzeugen und an die Stellantriebsvorrichtung 801 übermitteln, wobei die Stellantriebsvorrichtung 801 derart ausgeführt ist, dass diese aufgrund je eines Spindel-Betätigungssignals die Antriebsspindel 803 in eine von zwei entgegen gesetzt zueinander gerichteten Drehrichtungen versetzt und dabei in beide der Drehrichtungen versetzen kann. Die Antriebsspindel 803 ist am Fahrzeugrahmen 110 drehbar gelagert und kann hierzu insbesondere mit einem ersten Endabschnitt 803a in einer am Fahrzeugrahmen 110 angebrachten ersten Lagerungsvorrichtung 804 und einem zweiten, entgegen gesetzt zu dem ersten Endabschnitt 803a gelegenen zweiten Endabschnitt 803b in einer am Fahrzeugrahmen 110 angebrachten zweiten Lagerungsvorrichtung 805 drehbar gelagert sein. Mit der Antriebsspindel 803 ist eine Spindelmutter 810 im Eingriff, die somit entlang der Längsachse A803 der Antriebsspindel 803 verschiebbar angeordnet ist.

Die Fingerachse 830 ist entlang ihrer Längsachse A803 längsverschiebbar und drehbar am Fahrzeugrahmen 110 gelagert und kann dabei insbesondere in der ersten Lagerungsvorrichtung 804 und der zweiten Lagerungsvorrichtung 805 längsverschiebbar und drehbar gelagert sein. Die Längsachse A830 der Fingerachse 830 verläuft dabei parallel zu der Längsachse A803 der Antriebsspindel 803. An der Spindelmutter 810 ist ein Schieberteil 811 angebracht, das insbesondere einstückig mit der Spindelmutter 810 ausgeführt oder Teil der Spindelmutter 810 sein kann. Das Schieberteil 811 weist eine Gelenkaufnahme 814 zur gelenkigen Aufnahme eines Gelenkteils 832 einer Stellscheibe 831 auf, so dass die Gelenkaufnahme 814 und das Gelenkteil 832 zusammen eine Drehgelenkvorrichtung 815 mit einer Drehachse 815a ausbilden. Die Drehachse 815a verläuft parallel zu der Längsachse A803 der Antriebsspindel 803.

Die Stellscheibe 831 ist drehfest mit der Fingerachse 830 verbunden und kann insbesondere einstückig mit dieser gebildet sein. Dabei ist die Stellscheibe 831 derart an der Fingerachse 830 angeordnet, dass die Stellscheibe 831 mit einem Randabschnitt an dem Schieberteil 811 angelenkt ist. Auch ist die Stellscheibe 831 mit einem Randabschnitt an einer Mitnehmerstange 840 angebracht, die sich parallel zur Fingerachse 830 erstreckt. Die Stellscheibe 831 weist eine Längsführung 831a insbesondere in Form eine Durchgangsbohrung auf, in der die Mitnehmerstange 840 längsverschiebbar gegenüber der Stellscheibe 831 und somit der Fingerachse 830 geführt wird. Die Stellscheibe 831 bildet einen Hebelarm aus, der eine Bewegung der Mitnehmerstange 840 in Umfangsrichtung der Fingerachse 830 um diese herum in eine Drehbewegung der Stellscheibe 831 und somit eine Drehung der Fingerachse 830 um ihre Längsachse A830 bewirkt. Hierzu ist die Mitnehmerstange 840 mit einem ersten Abschnitt und insbesondere einem ersten Endabschnitt 840a in einem ersten Lagerteil 847 gelagert oder befestigt und mit einem zweiten Abschnitt und insbesondere einem entgegen gesetzt zu dem ersten Endabschnitt 840a gelegenen zweiten Endabschnitt 840b in einem zweiten Lagerteil 848 gelagert oder befestigt. Das erste Lagerteil 847 und das zweite Lagerteil 848 weist jeweils eine Lagervorrichtung 847a bzw. 848a auf, mit der das erste Lagerteil 847 und das zweite Lagerteil 848 jeweils auf der Fingerachse 830 drehbar und längsverschiebbar gelagert sind. Mit einer Verschiebung der Fingerachse 830 mittels der Spindelmutter 810 relativ zu der ersten Lagerungsvorrichtung 804 und der zweiten Lagerungsvorrichtung 805 verschieben sich das erste Lagerteil 847 und das zweite Lagerteil 848 relativ zur Fingerachse 830, da das erste Lagerteil 847 und das zweite Lagerteil 848 durch die Mitnehmerstange 840 auf einem konstanten Abstand gehalten werden und die Mitnehmerstange 840 in der Längsführung 831a relativ zur Stellscheibe 831 verschoben wird, da das erste Lagerteil 847 und das zweite Lagerteil 848 verschiebbar auf der Fingerachse 830 geführt sind. Der Bewegungsbereich des ersten Lagerteils 847 und des zweiten Lagerteils 848 wird dabei von den einander zugewandten Oberflächen der ersten Lagerungsvorrichtung 804 und der zweiten Lagerungsvorrichtung 805 begrenzt.

An einem ersten Endabschnitt 830a der Fingerachse 830 ist drehfest an der Fingerachse 830 ein Haken oder ein Finger 837 befestigt. Weiterhin ist an einem entgegen gesetzt zu dem ersten Endabschnitt 830a gelegenen zweiten Endabschnitt 830b der Fingerachse 830 drehfest an der Fingerachse 830 ein Haken oder ein Finger 838 befestigt. Die Haken 837, 838 weisen auf: ein Anschlussteil 837a bzw. 838a, das im Bereich des Anschlusses des jeweiligen Hakens 837 bzw. 838 an der Fingerachse 830 gelegen ist und vorzugsweise eine Bohrung 837b bzw. 838b zur Aufnahme und Befestigung der Fingerachse 830 aufweist, sowie einen Hakenabschnitt 837c bzw. 838c, der von dem radial von der Längsachse A830 absteht. Somit bewirkt eine Drehung der Fingerachse 830 um ihre Längsachse A830 eine Drehung der Haken 837 und 838 und ein Verschwenken der Einrastabschnitte 837a bzw. 838a.

An dem zweiten Endabschnitt 803b der Antriebsspindel 803 ist ein Kupplungsteil 850 drehfest angebracht, das einen Elektromagneten aufweist, der elektrisch mit der Steuerungsvorrichtung 510 verbunden ist. Weiterhin ist an dem zweiten Endabschnitt 803b der Antriebsspindel 803 ist ein erstes Ritzel 851 drehbar und längsverschiebbar gelagert. Das erste Ritzel 851 ist benachbart an dem Kupplungsteil 850 gelegen. Das erste Ritzel 851 steht im Eingriff mit einem zweiten Ritzel 852, das drehbar auf der Fingerachse 830 gelagert und drehfest mit dem zweiten Lagerteil 848 verbunden ist.

Die Stellantriebsvorrichtung 801 kann eine Magnetkupplungs-Ansteuerungsvorrichtung aufweisen, die auf ein von der Steuerungsvorrichtung 510 erzeugtes Magnetkupplungs-Aktivierungssignal ein entsprechendes Magnetkupplungs-Betätigungssignal erzeugt und über eine nicht dargestellte Signalleitung an den Elektromagnet übermittelt. Alternativ kann die Magnetkupplungs-Ansteuerungsvorrichtung Teil der Steuerungsvorrichtung 1510 sein, so dass die Steuerungsvorrichtung 510 auch das Magnetkupplungs-Betätigungssignal erzeugt. Der Elektromagnet ist derart ausgebildet, dass aufgrund des Empfangs eines Magnetkupplungs-Betätigungssignals aufgrund der dadurch erzeugten Magnetkraft das erste Ritzel 851, das längsverschiebbar auf der Antriebsspindel 803 gelagert ist, anzieht und in Drehrichtung koppelt. Das erste Ritzel 851 steht im Eingriff mit einem zweiten Ritzel 852, das drehbar auf der Fingerachse 830 gelagert ist und drehfest mit dem zweiten Lagerteil 848 verbunden ist.

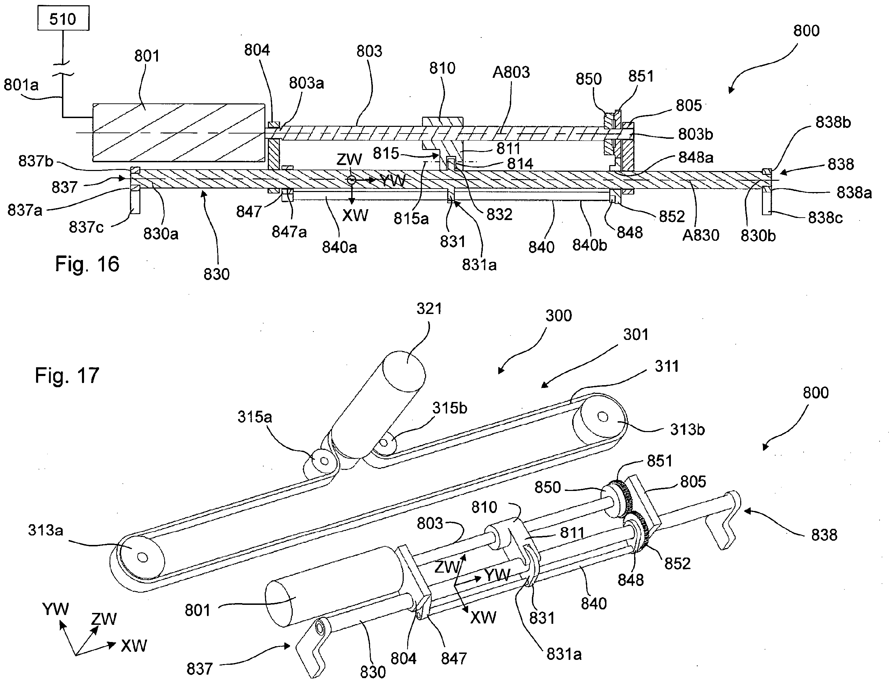

Die Funktionsweise der Greifvorrichtung 800 ist wie folgt:
In einer Ausgangsstellung, die in der Figur 17 gezeigt ist, befindet sich die Fingerachse 830 relativ zu der Antriebsspindel 803 in einer Neutralstellung. Aufgrund der Erzeugung eines Spindel-Betätigungssignals wird die Antriebsspindel 803 in Drehung versetzt und dabei die Fingerachse 830 mittels der Spindelmutter 810 relativ zu der Antriebsspindel 803 verschoben. Wenn dabei kein Magnetkupplungs-Betätigungssignal an den Elektromagnet des Kupplungsteils 850 übermittelt wurde, wird das erste Ritzel 851 nicht mit der Antriebsspindel 803 gedreht und wird allenfalls nur unwesentlich in Drehung versetzt. Wenn das Kupplungsteil 850 mit dem ersten Ritzel 851 aufgrund eines Magnetkupplungs-Aktivierungssignals drehgekoppelt wird und die Antriebsspindel 803 sich in Drehung befindet oder in Drehung versetzt wird, wird die Drehbewegung des ersten Ritzels 851 auf das mit diesem im Eingriff befindliche zweite Ritzel 852 übertragen. Durch die Drehung des zweiten Ritzels 852 wird über die Mitnehmerstange 840 und die Stellscheibe 831 die Fingerachse 830 und dadurch die Finger 837, 838 gedreht. Bei der Drehung der Finger 837, 838 erfolgt gleichzeitig eine Drehung der Antriebsspindel 803 und somit auch eine Vorschubbewegung der Fingerachse 830 mit den Fingern 837, 838, die jedoch vernachlässigbar ist, wenn sich die jeweils durchzuführende Drehbewegung der Finger 837, 838 über etwa eine Vierteldrehung der Antriebsspindel 803 erstreckt.

Wenn die Greifvorrichtung 800 in ein Bedienfahrzeug 100 eingebaut ist, kann auf diese Weise die Fingerachse 830 in der Fahrzeug-Querrichtung YW und - bei einem Betrieb des Bedienfahrzeug 100 in einer Lagerregal-Anordnung LA - relativ zu einem Behälter LB in einem Lagerregal 1 der Lagerregal-Anordnung LA verstellt und positioniert werden. Zusätzlich können bei jeder Stellung der Fingerachse 830 die Finger 837, 838 gedreht und insbesondere in einen Lagerbehälter LB oder eine daran angebrachten Vorrichtung eingehakt werden, um den jeweiligen Lagerbehälter LB relativ zum Lagerregal 1 zu bewegen, wenn die Fingerachse 830 durch entsprechende Drehung der Antriebsspindel 803 bewegt wird.

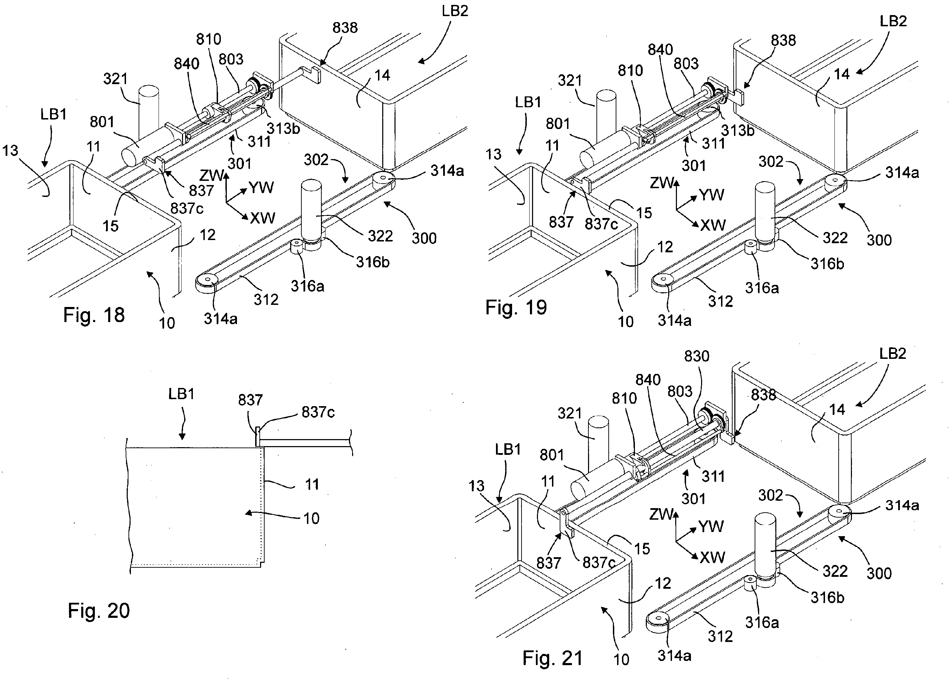

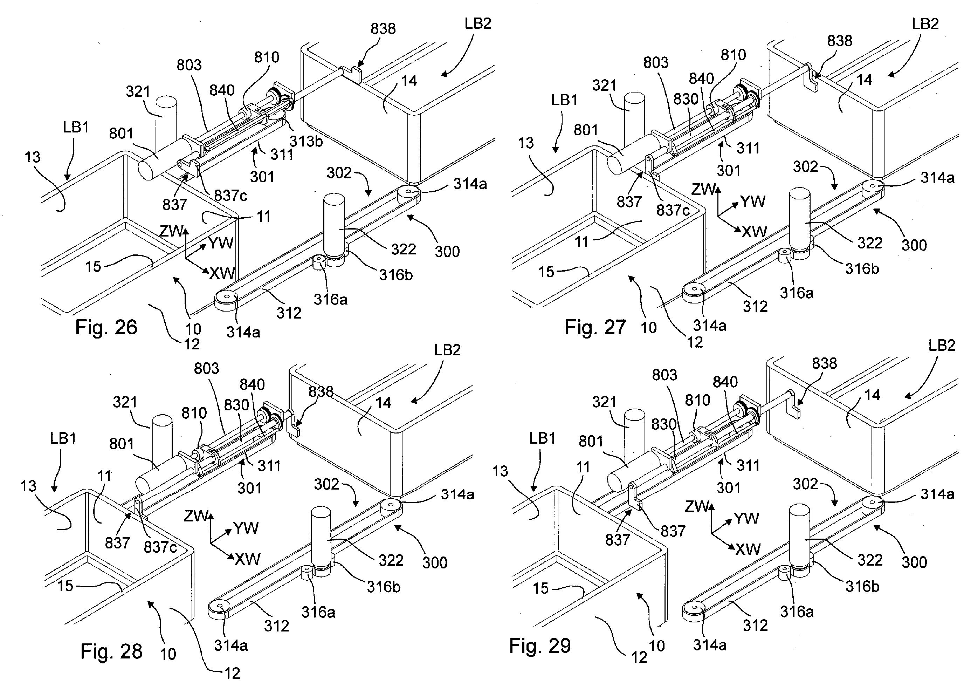

Im Folgenden wird an Hand der Figuren 18 bis 25 beschrieben, wie mittels einer Greifvorrichtung 800 gemäß Figur 16 an einem in einer Lagerregal-Anordnung LA fahrenden Bedienfahrzeug (z.B. das Bedienfahrzeug 100) ein in einem Lagerregal 1 der Lagerregal-Anordnung LA befindlichen Lagerbehälter LB, der in den Figuren 18 bis 29 mit dem Bezugszeichen 10 versehen ist, in das Bedienfahrzeug bewegt wird. In den Figuren 26 bis 29 beschrieben, wie mittels einer Greifvorrichtung 800 gemäß Figur 16, die an einem in einer Lagerregal-Anordnung LA fahrenden Bedienfahrzeug angebracht ist, ein in dem Bedienfahrzeug befindlicher Lagerbehälter LB in ein Lagerregal 1 z.B. - der Lagerregal-Anordnung LA bewegt wird. Die Lagerbehälter sind in den Figuren 18 bis 29 auch generell mit dem Bezugszeichen 10 versehen. Dabei kann das Bedienfahrzeug, wie es in den Figuren 18 bis 25 dargestellt ist, eine zusätzliche Stellvorrichtung insbesondere in der Form der Fördereinrichtung 300 aufweisen. Jedoch würde das Verfahren mit der Greifvorrichtung 800 oder mit einer Variante der Greifvorrichtung 800 allein, also auch ohne der speziell in der Figur 16 dargestellten Greifvorrichtung 800 durchführbar sein. Die Greifvorrichtung 800 kann auch in einem andersartigen Bedienfahrzeug als einem Bedienfahrzeug eingebaut werden, das nach der Erfindung ausgeführt ist. Die Lagerbehälter sind in den Figuren 18 bis 29 auch generell mit dem Bezugszeichen 10 und deren Seitenwände mit den Bezugszeichen 11, 12, 13, 14 versehen.

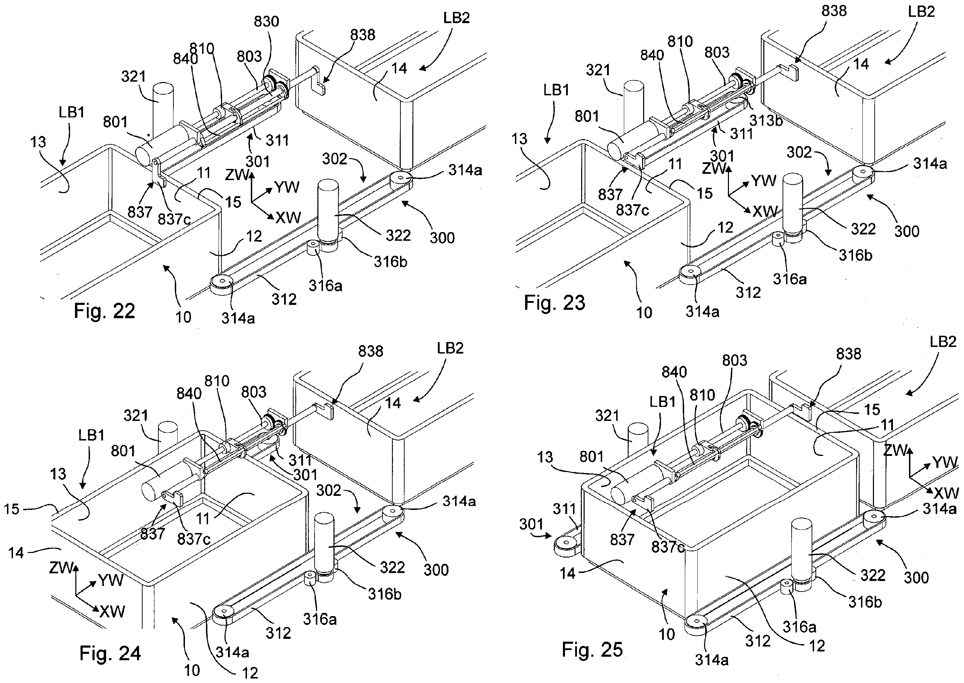

Zum Herausbewegen eines Lagerbehälters 10 aus einem Lagerregal 1 bei einer in der Figur 18 gezeigten Ausgangssituation, bei der sich die Fingerachse 830 der Greifvorrichtung 800 in einer Neutralstellung befindet, wird die-Fingerachse 830 aufgrund eines Spindel-Betätigungssignals entlang der Fahrzeug-Querrichtung YW, im dargestellten Beispiel entgegen der Fahrzeug-Querrichtung YW, bewegt, bis der Finger 837 über die am Fahrzeug gelegene Seitenwand 11 des Lagerbehälters 10 hineinreicht. Dieser Zustand ist in der Figur 19 perspektivisch und in der Figur 20 ausschnittsweise in einer Seitenansicht dargestellt. Bei dieser Bewegung und in dieser Stellung ist der Finger 837 in einer Stellung bei der der Hakenabschnitt 837c sich zur Seite, also in der ZY-Richtung, oder nach oben, also in ZW-Richtung, und nicht nach unten erstreckt. In diesem Zustand wird aufgrund eines Magnetkupplungs-Aktivierungssignals sowie eines Spindel-Betätigungssignals die Fingerachse 830 nach unten (entgegen die ZW-Richtung) und in eine Stellung gedreht, bei der der Hakenabschnitt 837c die Seitenwand 11 des Lagerbehälters 10 hintergreift (Figur 21), In dieser Stellung wird die Fingerachse 830 aufgrund eines entsprechenden Spindel-Betätigungssignals entlang der Fahrzeug-Querrichtung YW, im dargestellten Beispiel entgegen der Fahrzeug-Querrichtung YW, bewegt, bis der Lagerbehälter 10 in Eingriff mit der Fördervorrichtung 300 gelangt, also die Förderbänder 311, 312 an den Seitenwänden 12, 13 des Lagerbehälters 10 anliegen. In dieser Situation werden die Motoren 321, 322 der Fördervorrichtung 300 derart betätigt, dass die Förderbänder 311, 312 den Lagerbehälter 10 vollständig in den Aufnahmeraums 120 des jeweiligen Bedienfahrzeugs hinein bewegen (Figuren 24 und 25). Vorher oder während dieser Bewegung wird aufgrund eines Magnetkupplungs-Aktivierungssignals sowie eines Spindel-Betätigungssignals die Fingerachse 830 in eine Stellung gedreht, bei der sich der Hakenabschnitt 837c sich zur Seite, also in der ZY-Richtung, oder nach oben, also in ZW-Richtung, und nicht nach unten erstreckt (Figur 23).

Beim Herausbewegen eines Lagerbehälters 10 aus dem Aufnahmeraum 120 des jeweiligen Bedienfahrzeugs werden in der Situation der Figur 25 die Motoren 321, 322 der Fördervorrichtung 300 derart betätigt, dass die Förderbänder 311, 312 den Lagerbehälter 10 aus dem Aufnahmeraum 120 des jeweiligen Bedienfahrzeugs heraus bewegen bis die in der Bewegungsrichtung gesehen hintere Seitenwand 11 unter dem Finger 837 hindurch bewegt worden ist (Figur 26). Anschließend wird aufgrund eines Magnetkupplungs-Aktivierungssignals sowie eines Spindel-Betätigungssignals die Fingerachse 830 in eine Stellung gedreht, bei der sich der Hakenabschnitt 837c nach unten erstreckt (Figur 27). Anschließend wird die Übermittlung eines Magnetkupplungs-Aktivierungssignals beendet, so dass das Kupplungsteil 850 und das erste Ritzel 851 entkoppelt sind, und daraufhin aufgrund eines Spindel-Betätigungssignals die Fingerachse 830 in Richtung zu demjenigen Lagerregal 1, 2 bewegt, in das der Lagerbehälter 10 hineinbewegt werden soll, bis sich der Lagerbehälter 10 vollständig im jeweiligen Lagerregal 1, 2 befindet (Figur 28).

Eine weitere Ausführungsform einer Greifvorrichtung 400 ist in der Figur 30 gezeigt. Die Greifvorrichtung 400 weist eine erste, sich in der YW-Richtung erstreckende Teleskopstange 401, die von einem eingefahrenen Zustand in der YW-Richtung ausgefahren werden kann, und eine zweite, sich in der YW-Richtung erstreckende Teleskopstange 402 auf, die von einem eingefahrenen Zustand entgegen der YW-Richtung ausgefahren werden kann. Jede Teleskopstange 401, 402 hat jeweils eine Längsachse A401 bzw. A402 und ist mit einem jeweils ersten Ende 403 bzw. 404 an einer Lagerungsvorrichtung 420 befestigt. Die Lagerungsvorrichtung 420 kann in einer alternativen Ausführungsform auch in jeder YW-Richtung verschiebbar an der inneren Oberfläche der oberen Wand 107 gelagert oder außerhalb des Aufnahmeraums 120 des Bedienfahrzeugs 100 gelegen sein.

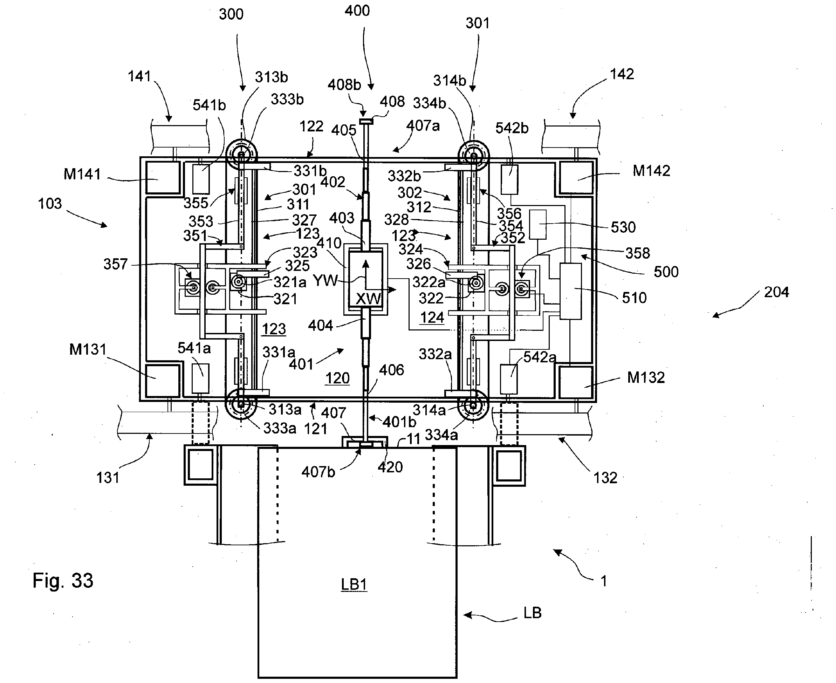

Die Greifvorrichtung 400 weist weiterhin eine Antriebsvorrichtung 410 auf. Weiterhin weist jede Teleskopstange 401, 402 eine Aus- und Einfahr-Vorrichtung zum Aus- und Einfahren der jeweiligen Teleskopstange 401, 402 auf. Die Antriebsvorrichtung 410 ist einerseits mit jeder der Teleskopstange 401, 402 angekoppelt und derart ausgeführt, dass die jeweilige Teleskopstange 401, 402 durch Aktivierung aus oder eingefahren werden kann. Weiterhin weist die Greifvorrichtung 400 eine Drehantriebs-Vorrichtung, die in der Lagerungsvorrichtung 420 integriert sein kann, auf, mit der jeder der Finger oder Haken oder Funktionshaken 407 bzw. 408 insbesondere zwischen zwei Endstellungen um eine in der YW-Richtung verlaufende Drehachse gedreht werden kann. Bei einer Ausführungsform kann insbesondere vorgesehen sein, dass die Funktionshaken 407 bzw. 408 zwischen einer in der Figur 30 gezeigten Drehstellung 407a, 408a und einer in der Figur 33 gezeigten Drehstellung 408a und 408b um eine in der YW-Richtung verlaufenden Drehachse gedreht werden kann.

Die Antriebsvorrichtung oder Stellantriebsvorrichtung 410 der Greifvorrichtung 400 ist funktional über Steuerleitungen mit der Steuerungsvorrichtung 510 (Figuren 12 bis 15) verbunden. Aufgrund eines in der Steuerungsvorrichtung 510 implementierten Ablaufprogramms für eine vorbestimmte Aufnahme eines Lagerbehälters LB in den Aufnahmeraum 120 des Bedienfahrzeugs 100 oder für eine vorbestimmte Abgabe eines Lagerbehälters LB in einen Lagerbereich LC in einem Lagerregal 1, 2 wird dabei die Antriebsvorrichtung 410 betätigt.

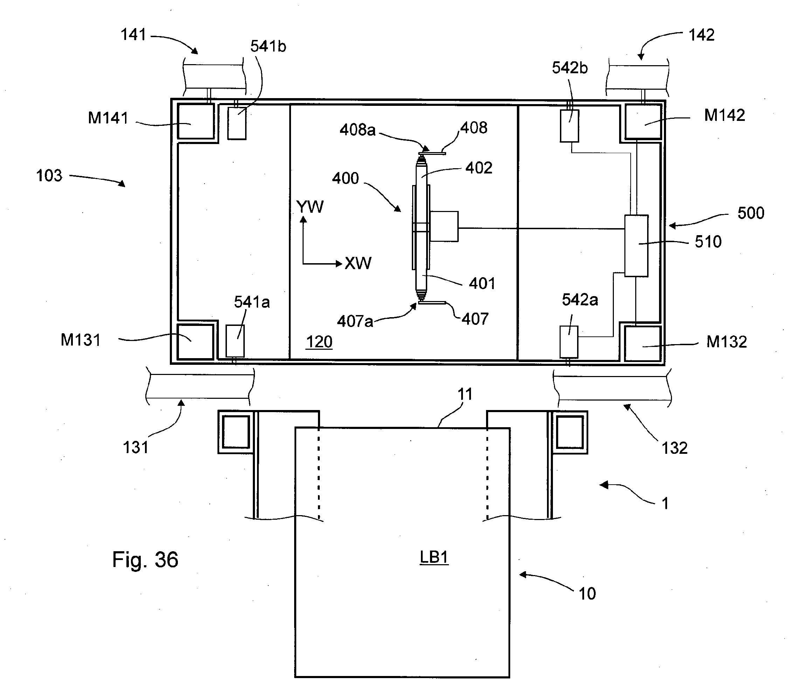

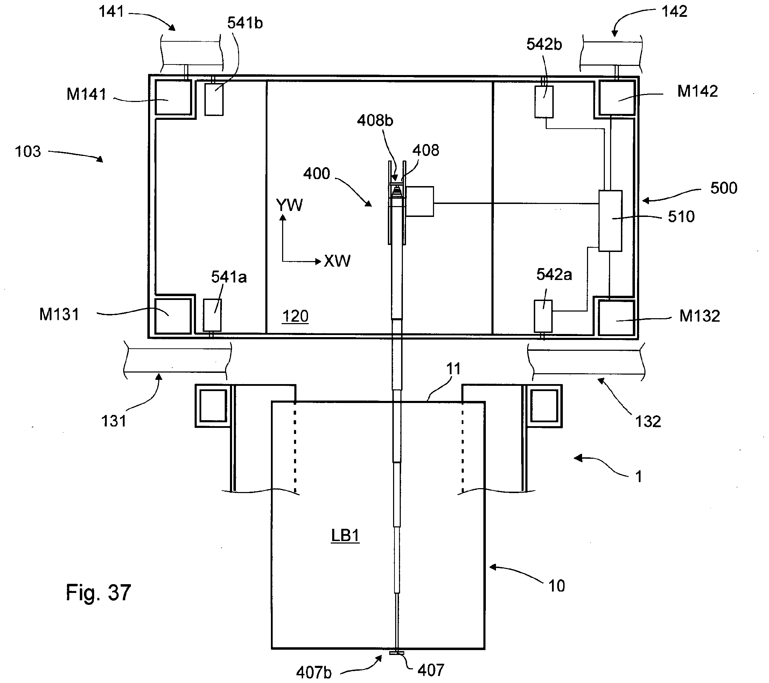

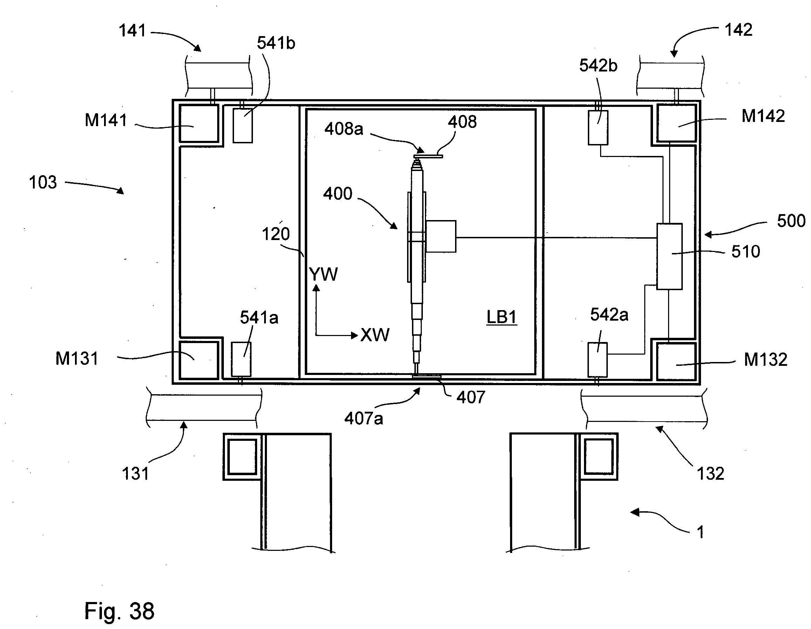

Die Ausführungsform der Greifvorrichtung 400 nach den Figuren 36 bis 38 ist derart ausgeführt, dass diese Greifvorrichtung 400 in einem Bedienfahrzeug und insbesondere einem erfindungsgemäßen Bedienfahrzeug 100 als einzige Stellvorrichtung Ablieferung oder Einholung eines Lagerbehälters LB1 eingesetzt sein kann, die ohne weitere Stellvorrichtung, also ohne insbesondere einer Fördervorrichtung 300 (Figuren 17 und 30 bis 35) einen vollständig im Aufnahmeraum 120 befindlichen Lagerbehälter LB
- aus dem jeweiligen Bedienfahrzeug herausbewegen und vollständig in ein Lagerregal 1, 2 hineinbewegen kann, und
- einen vollständig in einem Lagerregal 1, 2 befindlichen Lagerbehälter LB nach entsprechendem Ausfahren der Teleskopstange und Hintergreifen des Lagerbehälters LB sowie Drehen des Fingers 407 in eine Eingriffsstellung mit dem Lagerbehälter LB (Figur 37) denselben aus den Lagerregal 1, 2 herausziehen und vollständig in den Aufnahmeraum 120 hinein bewegen kann (Figur 38).

In den Figuren 30 bis 35 ist ein Bedienfahrzeug mit einer weiteren Ausführungsform eine Greifvorrichtung 400 dargestellt. Aufgrund einer solchen Steuerungsvorrichtung 510 kann zur Aufnahme eines Lagerbehälters LB aus einem Lagerbereich LC in einem Lagerregal 1, 2 zunächst vorgesehen sein, dass z.B. die Teleskopstange 401 von einem eingefahrenen Zustand 401a (Figur 30) in einen ausgefahrenen Zustand 401b (Figur 33) gefahren wird, bei dem der Finger oder Funktionshaken 407 bzw. 408 im Bereich einer Hakenaufnahme-Vorrichtung 420 wie ein Bügel eines in den Aufnahmeraum 120 des Bedienfahrzeugs 100 einzufahrenden Lagerbehälters LB liegt (Zustand LB1 in der Figur 33). In diesem Zustand 401b wird z.B. der Funktionshaken 407 um die Längsrichtung A401 in eine Eingriffstellung 407b gedreht (Figur 33). Wie schematisch in der Figur 33 dargestellt, kann dieses insbesondere durch eine 90 Grad-Drehung des Funktionshakens 408 erreicht werden. Dadurch ist der Funktionshaken 407 im Eingriff mit der Hakenaufnahme-Vorrichtung 420, der insbesondere ein Bügel, eine Öse oder generell eine Ausnehmung sein kann.

Bei den Ausführungsformen der Greifvorrichtung 400, 800 insbesondere nach den Figuren 16, 30, 36 wird somit ein an einer Stellstange angeordneter Haken oder Funktionshaken derselben in einem ausgefahrenen Zustand der Greifvorrichtung 400, 800 von einer Aufnahmestellung um eine Längsachse A401, A402, A830 in eine Eingriffsstellung gedreht, um einen in das Bedienfahrzeug 100 zu bewegenden Lagebehälter zu erfassen, so dass der Haken oder Funktionshaken in dieser Stellung den Lagebehälter in das Bedienfahrzeug 100 ziehen kann.

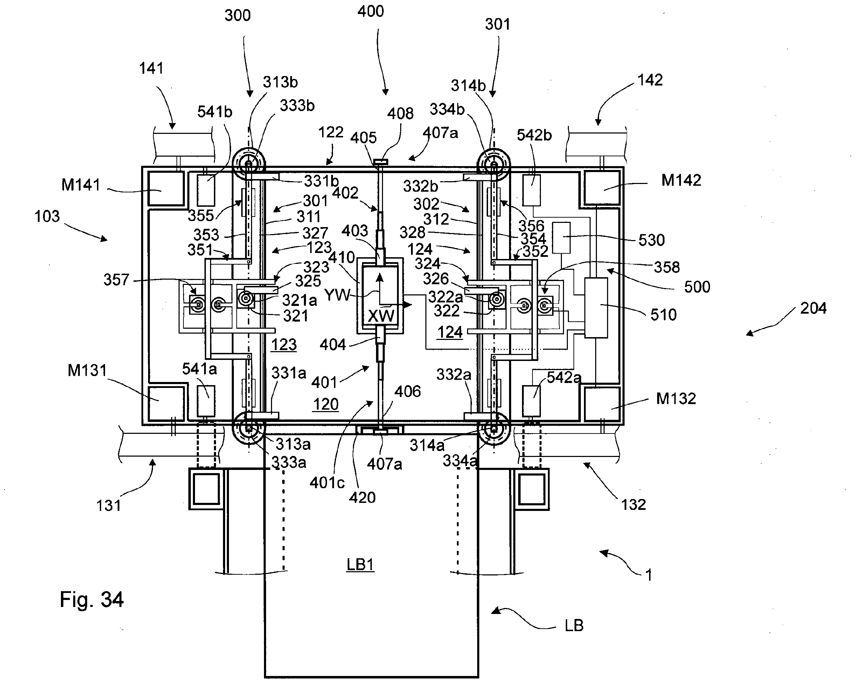

In einem nächsten Schritt wird die jeweiligen Teleskopstange 401 bzw. 402 aus der Stellung 401b in eine Stellung 402c (Figur 34) soweit eingefahren bis sich der Lagerbehälter LB mit einem Anlageabschnitt in Anlage mit einem Stellteil der Fördervorrichtung 300 und insbesondere mit einem Antriebsriemen 311 und 312 der Fördervorrichtung 300 befindet. Dieser Zustand ist in der Figur 34 mit dem Bezugszeichen LB3 bezeichnet. Vor oder nach Erreichen dieses Zustands wird die Fördervorrichtung 300 durch Bewegung der Antriebsriemen 311 bzw. 312 aktiviert, und zwar derart, dass durch die Fördervorrichtung 300 ein Lagerbehälter LB, der sich mit der Fördervorrichtung 300 derart in Kontakt befindet, in den Aufnahmeraum 120 des Bedienfahrzeugs 100 hinein gezogen wird. Der jeweilige Funktionshaken wird in die Stellung 407a gedreht und die Teleskopstange, im Beispiel die Teleskopstange 407, vollständig eingefahren. Dieser Zustand ist in der Figur 35 dargestellt. Wenn der Lagerbehälter LB eine Soll-Position im Aufnahmeraum 120 des

Bedienfahrzeugs 100 erreicht hat, wird die Betätigung der Fördervorrichtung 300 gestoppt. Dadurch ist der Vorgang zur Entnahme eines Lagerbehälters LB aus einem Lagerregal (im Beispiel das Lagerregal 1) abgeschlossen.

Bei diesem Verfahren ergibt-sich somit eine kombinierte Betätigung der Fördervorrichtung 300 und der Greifvorrichtung 400.

Zur Ablage eines Lagerbehälters LB in einen -Lagerbereich LC eines Lagerregals 1, 2 wird ein Abgabe-Programm in der Steuerungsvorrichtung 510 gestartet. Dabei wird die Fördervorrichtung 300 derart angesteuert, dass diese die Antriebsriemen 311 bzw. 312 derart betätigt und in Bewegung versetzt, dass ein Lagerbehälter LB, der sich im Aufnahmeraum 120 des Bedienfahrzeugs 100 befindet und seitlich in Anlage mit den Antriebsriemen 311 und 312 ist, vom Aufnahmeraum 120 des Bedienfahrzeugs 100 in Richtung zum Lagerbereich LC des jeweiligen Lagerregals 1, 2 bewegt wird. Bei oder nach Erreichen des Zustands LB3 des Lagerbehälters LB (vgl. Figur 34), bei der der Lagerbehälter LB gerade noch an den Antriebsriemen 311 und 312 der Fördervorrichtung 300 anliegt, wird der Funktionshaken 407 durch Ausfahren der jeweiligen Teleskopstange 401 bzw. 402 an die Seitenwand des Lagerbehälters LB bewegt, die dem Funktionshaken 407 zugewandt ist, und anschließend der Funktionshaken 407 durch Drehung in die Stellung 407b (Figur 33) in Eingriff mit der Hakenaufnahme-Vorrichtung 420 gebracht. Danach kann durch Kommandierung durch die Antriebsvorrichtung 410 die Teleskopstange 401 soweit ausgefahren werden, dass der Lagerbehälter LB in einer Soll-Position im jeweiligen Lagerregal 1,2 liegt. Dabei muss allerdings nicht vorgesehen sein, dass zuvor der Haken in die Drehstellung 407b gebracht wird.

Diese Verfahrensabläufe können in analoger Weise auch an einem Lagerregal ausgeführt werden, das an der weiteren Längsseite 102 des Bedienfahrzeugs 100 gelegen ist.

Die eine Greifvorrichtung 400 kann insbesondere auch in Kombination mit einer Fördervorrichtung 300 realisiert sein, die aus zwei Anordnungen 380 von Führungsrollen nach der Figur 12 realisiert ist. Nach einer Ausführungsform des Bedienfahrzeugs 100 kann in diesem Fall vorgesehen sein, dass die Fördervorrichtung 300 mit Führungsrollen ausgeführt ist, wobei die Führungsrollen nicht von einem Motor angetrieben werden und somit ein reine Führungsfunktion bei Herausfahren eines Lagerbehälters LB aus dem Aufnahmeraum 120 des Bedienfahrzeugs 100 erfüllen.

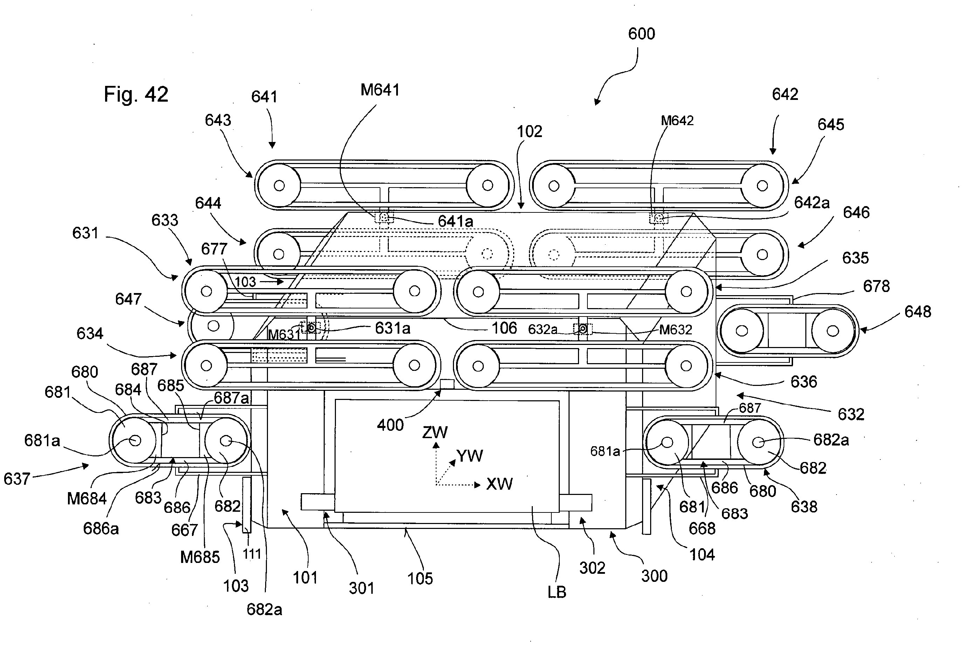

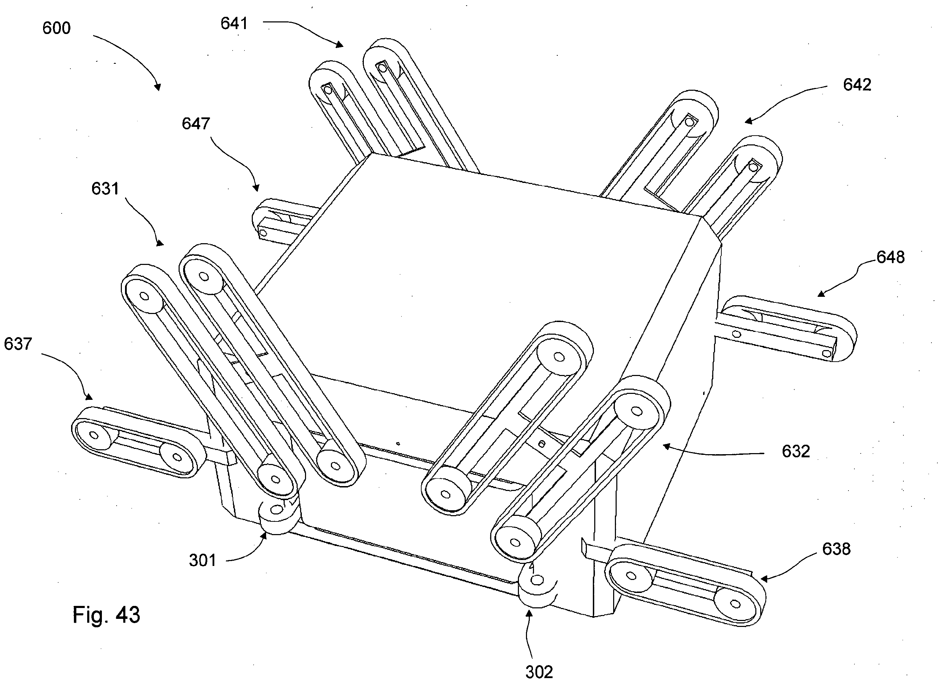

In den Figuren 42 bis 45 ist eine weitere Ausführungsform des Bedienfahrzeugs dargestellt, das in diesen Figuren mit dem Bezugszeichen 600 versehen ist. Bei dieser Ausführungsform des Bedienfahrzeugs 600 ist an jeder Drehachse 631a, 632a, 641a, 642a jeweils ein Paar von Antriebsraupen angelenkt, so dass sich die Paare 631 bzw. 632 bzw. 641 bzw. 642 von Antriebsraupen ergeben. Somit ist
- das Paar 631 von Antriebsraupen aus den Antriebsraupen 633, 634,
- das Paar 632 von Antriebsraupen aus den Antriebsraupen 635, 636,
- das Paar 641 von Antriebsraupen aus den Antriebsraupen 643, 644,
- das Paar 642 von Antriebsraupen aus den Antriebsraupen 645, 646,
gebildet. Dabei ist das Paar 631 von Antriebsraupen 633, 634 an der ersten Längsseite 101 und benachbart zur ersten Querseite 103 gelenkig angeordnet und ist das Paar 632 von Antriebsraupen 635, 636 an der zweiten Längsseite 102 und benachbart zur zweiten Querseite 104 gelenkig angeordnet. Weiterhin ist das Paar 631 von Antriebsraupen 633, 634 an der ersten Längsseite 101 und benachbart zur ersten Querseite 103 gelenkig angeordnet und ist das Paar 632 von Antriebsraupen 635, 636 an der zweiten Längsseite 102 und benachbart zur zweiten Querseite 104 gelenkig angeordnet. Die Drehachsen 631a, 632a, 641a, 642a können insbesondere in einer Seitenwand, die jeweils die Längsseiten 101, 102 ausbilden, und insbesondere in der Längsrichtung XW gesehen seitlich des Aufnahmeraums 120 gelegen sein.

An die Gelenkvorrichtung, die die Drehachsen 631a, 632a, 641a, 642a jeweils ausbilden, kann jeweils ein Motor M631 bzw. M632 bzw. M641 bzw. M642 angeschlossen sein, die das jeweilige Antriebsraupen-Paar, zu dem jeweilige Drehachse gehört, rotatorisch bewegen können. Die Motoren M631, M632, M641, M642 sind jeweils mit der Steuerungsvorrichtung 510 funktional verbunden. Auf diese Weise kann durch die Steuerungseinrichtung 510 weiterhin eine durch diese vorbestimmte Drehstellung jeder der Antriebsraupen eingestellt werden, um z.B. den Horizontalbahn-Fahrbetrieb oder den Diagonalbahn-Fahrbetrieb oder Vertikalbahn-Fahrbetrieb einzustellen oder diesen jeweils auszuführen.

Nach einer Ausführungsform des Bedienfahrzeugs 600 ist vorgesehen, dass die Drehachsen 631a und 641a, die auf verschiedenen Längsseiten 101, 102 ausgebildet sind, zueinander koaxial verlaufen, also auf derselben Gerade liegen, und dass auch die Drehachsen 632a und 642a, die auf verschiedenen Längsseiten 101, 102 ausgebildet sind, zueinander koaxial verlaufen, also auf derselben Gerade liegen. Dieser Verlauf der Drehachsen kann bei allen Ausführungsformen des Bedienfahrzeugs 600 vorgesehen sein. Bei dieser Ausführungsform ist das fahrzeugfeste Koordinatensystem derart definiert, dass die Querrichtung YW parallel zu den Drehachsen 631a bzw. 632a bzw. 641a bzw. 642a und die Längsrichtung XW vertikal zu den Drehachsen 631a bzw. 632a bzw. 641a bzw. 642a verläuft, wobei der Ursprung des Koordinatensystems auf dem Boden 120a des Aufnahmeraums 120 des -Bedienfahrzeugs 600 liegt.

Dabei kann insbesondere vorgesehen sein, dass die
Drehachsen 631a, 632a, 641a, 642a oberhalb der Durchgangsöffnung angeordnet sind. Alternativ dazu können die Drehachsen 631a, 632a, 641a, 642a unterhalb der Durchgangsöffnung angeordnet sein.

Das Bedienfahrzeug 600 unterscheidet sich von dem Bedienfahrzeug 100 durch die Antriebsraupen und die zugehörigen Betriebsfunktionen. Weiterhin weist das Bedienfahrzeug 600 auf:
- eine Zusatz-Antriebsraupe 637, die an der ersten Längsseite 101 und benachbart zur ersten Querseite 103 oder an der ersten Querseite 103 und benachbart zur ersten Längsseite 101 mittels einer Halterung 667 starr, d.h. nicht gelenkig angeordnet ist,
- eine Zusatz-Antriebsraupe 638, die an der ersten Längsseite 101 und benachbart zur zweiten Querseite 104 oder an der zweiten Querseite 104 und benachbart zur ersten Längsseite 101 mittels einer Halterung 668 starr, d.h. nicht gelenkig angeordnet ist,

- eine Zusatz-Antriebsraupe 647, die an der zweiten Längsseite 102 und benachbart zur ersten Querseite 103 oder an der ersten Querseite 103 und benachbart zur zweiten Längsseite 102 mittels einer Halterung 677 starr, d.h. nicht gelenkig angeordnet ist,
- eine Zusatz-Antriebsraupe 648, die an der zweiten Längsseite 102 und benachbart zur zweiten Querseite 104 oder an der zweiten Querseite 104 und benachbart zur zweiten Längsseite 102 mittels einer Halterung 678 starr, d.h. nicht gelenkig angeordnet ist.

Die Zusatz-Antriebsraupen 637, 638, 647, 648 werden im Folgenden an Hand der in der Figur 42 dargestellten Zusatz-Antriebsraupe 637 beschrieben:
Jede Zusatz-Antriebsraupe 637, 638, 647, 648 weist einen Antriebsriemen 680 auf, der auf einer ersten und einer zweiten Umlenkrolle 681, 682 gelagert ist und insbesondere von den Umlenkrollen 681, 682 aufgespannt sein kann.

Jede Zusatz-Antriebsraupe 637, 638,647, 648 weist weiterhin eine Tragvorrichtung 683 mit zwei Drehlagern 681a bzw. 682a auf, an denen die zwei Umlenkrollen 681, 682 gelagert sind. Als Längsrichtung der jeweiligen Zusatz-Antriebsraupe 637, 638, 647, 648 wird hierin die Richtung der Verbindungslinie der Drehachsen angesehen, die durch die Drehlager 681a bzw. 682a bereit gestellt werden.

Bei der dargestellten Ausführungsform ist die Tragvorrichtung 683 gebildet aus zwei Endstücken 684, 685 mit zwei Drehlagern 681a bzw. 682a, an denen jeweils eine der Umlenkrolle 681, 682 gelagert ist, und aus zwei Stützarme oder Verbindungsstücken 686 und 687, die jeweils die Endstücken 684, 685 miteinander verbinden. Die zwei Stützarme oder Verbindungsstücken 686 und 687 verlaufen jeweils in der Längsrichtung und quer zur Dickenrichtung der jeweiligen Zusatz-Antriebsraupe 637, 638, 647, 648 beabstandet verlaufen und mit ihren Enden und Außenseiten 686a bzw. 687a benachbart zu den Umfangsflächen der Umlenkrollen 681 bzw. 682 liegen und sich an diese kontinuierlich anschließen, so dass der Antriebsriemen 680 an den Außenseiten 686a bzw. 687a der Stützarme 686, 687 anliegen und sich zwischen den Umlenkrollen 681 bzw. 682 abstützen.

An jedem der Endstücke oder an einer anderen Stelle der jeweiligen Zusatz-Antriebsraupe 637, 638, 647, 648 sind Antriebsmotoren M684, M685 angebracht, die mit jeweils einem der Umlenkrollen 681, 682 gekoppelt sind. Alternativ kann vorgesehen sein, dass nur ein Antriebsmotor M684, M685 an der Tragvorrichtung 683 angebracht ist. Jeder des zumindest einen Antriebsmotors M684, M685 jeweiligen Zusatz-Antriebsraupe 637, 638, 647, 648 ist jeweils über eine Ansteuerungsleitung (nicht dargestellt) funktional mit einer Steuerungseinrichtung 510 (Figur 30) verbunden, so dass der Antriebsriemen 680 aufgrund von Ansteuerungskommandos der Steuerungseinrichtung 510 gedreht werden kann. Auf diese Weise können durch die Steuerungseinrichtung 510 die Antriebsmotoren M684, M685 jeder Zusatz-Antriebsraupe 637, 638, 647, 648 unabhängig voneinander angesteuert werden und dadurch an jeder Antriebsraupe 637, 638, 647, 648 eine vorbestimmte Bewegungsrichtung sowie Geschwindigkeit jeder der Umlenkrollen 681 bzw. 682 und somit des jeweiligen Antriebsriemens eingestellt werden.

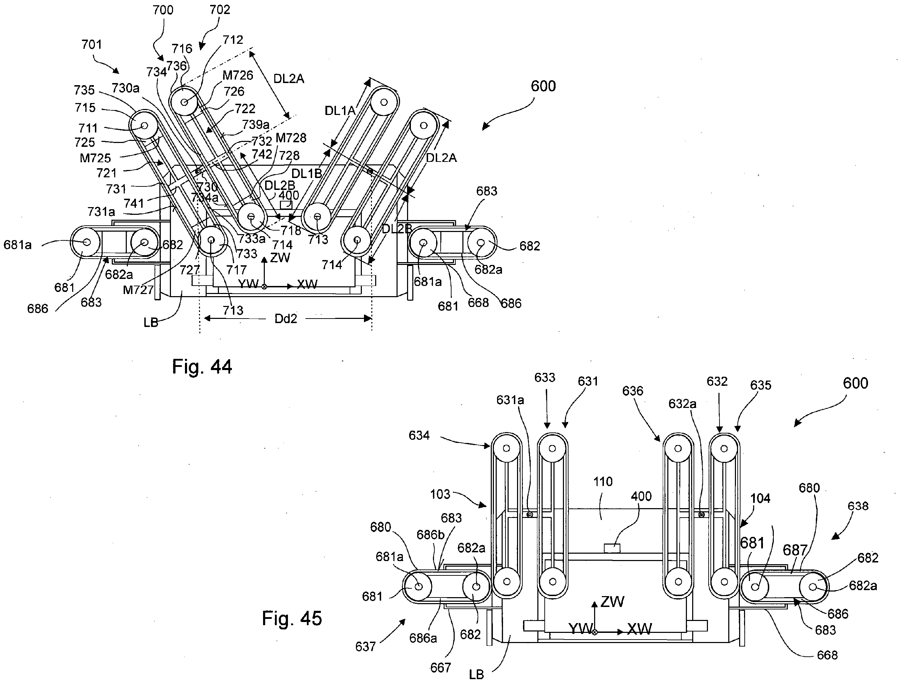

Die Paare von Antriebsraupen werden im Folgenden beschrieben, wobei die Antriebsraupen 633, 634, 635, 636, 643, 644, 645, 646, die zu jeweils einem Paar 631 bzw. 632 bzw. 641 bzw. 642 von Antriebsraupen gehören, mit denselben Bezugzeichen versehen sind. Die Paare 631, 632, 641, 642 von Antriebsraupen des Bedienfahrzeugs 600 werden an Hand des Antriebsraupen-Paars 631 der Figur 44 beschrieben, wobei das Antriebsraupen-Paar auch mit dem generellen Bezugzeichen 700 und eine erste Antriebsraupe desselben mit dem Bezugszeichen 701 und ein zweite Antriebsraupe desselben mit dem Bezugszeichen 702 bezeichnet ist.

Die erste Antriebsraupe 701 und die zweite Antriebsraupe 702 weisen jeweils eine Tragvorrichtung 721 bzw. 722 auf, jeweils aufweisend:
- einen äußeren Stützarm 731 bzw. 732 und einen inneren Stützarm 733 bzw. 734, wobei die inneren Stützarme 733 bzw. 734 einander benachbarte Stützarme des Antriebsraupen-Paars 700 sind und einander zugewandte Außenflächen 733a bzw. 734a aufweisen und wobei die äußeren Stützarme 731 bzw. 732 entgegen gesetzt zueinander gelegene Außenflächen 731a bzw. 732a bilden,
- zwei voneinander beabstandete Endstücke 725 bzw. 726 und 727 bzw. 728, die mit den Stützarmen an entgegen gesetzt zueinander gelegenen Enden derselben verbunden und von diesen gehalten sind, wobei in den Endstücke 725 bzw. 726 und 727 bzw. 728 jeweils ein Drehgelenk 711 bzw. 712 und 713 bzw. 714 realisiert ist,
- Umlenkrollen 715 bzw. 516 und 717 bzw. 718 von denen jeweils eine in jedem der Endstücke 725 bzw. 726 und 727 bzw. 728,
- einen Antriebsriemen 735 bzw. 736,
- ein Verbindungsteil 730, das die Tragvorrichtung 721 und die Tragvorrichtung 722 miteinander verbindet und an dem das jeweilige Drehgelenk des Antriebsraupen-Paars 700 realisiert ist, mit dem das Antriebsraupen-Paar 700 als starres Gebilde drehbar an der Rahmenvorrichtung 110 des Bedienfahrzeugs 600 .

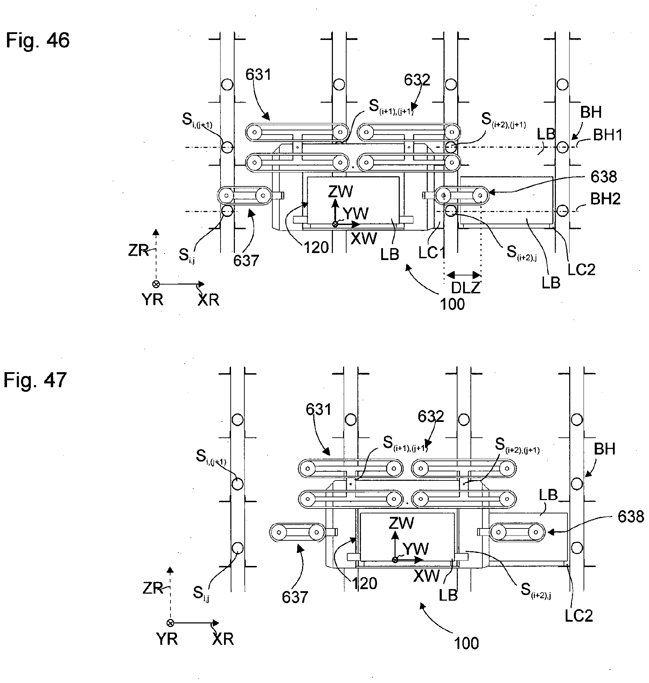

Der Abstand zwischen den jeweiligen inneren Stützarmen 733 bzw. 734 ist mindestens so groß, dass zwischen den einander zugewandten Oberflächen 733a und 734a ein Stützteil S_{i,j} sowie die auf den Oberflächen 733a und 734a jeweils gelegenen Antriebsriemen liegen kann, so dass das Fahren des Bedienfahrzeugs 600 entlang der Lagerregale dadurch erfolgen kann, dass das Stützteil S_{i,j} zwischen den auf den einander zugewandte Oberflächen 733a und 734a liegenden Antriebsriemen anliegt (Figuren 46 bis 49). Dadurch kann bei einer entsprechenden Bewegung der Antriebsriemen aufgrund einer Betätigung durch die Steuerungsvorrichtung 510 eine Bewegung des jeweiligen Antriebsraupen-Paars gegenüber dem jeweils an diesem anliegenden Stützteil S_{i,j} erfolgen.

Nach einer Ausführungsform des Bedienfahrzeugs 600 weist dieses keinen Motor an der Drehachse 730a auf, um ein jeweiliges Antriebsraupen-Paar in Drehung zu versetzen: Wenn beispielsweise an einem Antriebsraupen-Paar 700 Abschnitte der Antriebsriemen, die an dem Stützteil S_{i,j} anliegen, in Richtung der Drehachse 730a gesehen in zueinander entgegensetzen Richtungen bewegt werden, erfolgt eine Drehung des jeweiligen Antriebsraupen-Paars relativ zum Stützteil S_{i,j} . Wenn dagegen an dem Stützteil S_{i,j} anliegende Abschnitte in Richtung der Drehachse 730a gesehen in derselben Richtung bewegt werden, erfolgt eine lineare Bewegung des jeweiligen Antriebsraupen-Paars relativ zum Stützteil S_{i,j} .

Als Längsrichtung einer Antriebsraupe eines Antriebsraupen-Paar ist die Verbindungslinie zwischen Drehachsen, also zwischen Zentren der Drehgelenke 711, 713 bzw. 712, 714 definiert. Dadurch ergibt sich an jeder Antriebsraupe eines Antriebsraupen-Paars eine sich in der In der Längsrichtung erstreckende Halblänge DL2A zwischen Drehgelenk 630a und dem äußersten Punkt am Antriebsriemen am Drehgelenk 711 bzw. 712 und eine Halblänge DL2B zwischen dem Drehgelenk 630a und und dem äußersten Punkt am Antriebsriemen am Drehgelenk 713 bzw. 714. Die Längen DL1A, DL1 sind maximal derart vorgesehen,
- dass die beiden an einer Längsseite 101 oder 102 angeordneten Antriebsraupen-Paare aneinander vorbeischwenken können und
- dass die von dem Drehgelenk 730a aus gesehen äußersten Enden eines Antriebsraupen-Paars an einem Stützteil S_{i,(j+1)} vorbeigeschwenkt werden können, wenn ein Stützteil S_{i,j} koaxial mit dem Drehgelenk 730a liegt (Figuren 23 und 24).

Nach einer Aüsführungsform des Bedienfahrzeugs 600 ist das Drehgelenk 730a eines Antriebsraupen-Paars 700 jeweils auf einer Mittelinie gelegen, die die geometrische Mittellinie zwischen den beiden Verbindungslinien der Drehachsen der Drehgelenke 711, 712, 713, 714 der Umlenkrollen jeweils einer Antriebsraupe 701, 702 eines Antriebsraupen-Paars 700 ist. Insbesondere können die Drehachsen der Drehgelenke 711, 712, 713, 714 eines Antriebsraupen-Paars 700 derart ausgeführt sein, dass die beiden Drehachsen der Drehgelenke 711, 712, 713, 714 verschiedener Antriebsraupen 701, 702 achsensymmetrisch zueinander in Bezug auf die Mittellinie zwischen den beiden Verbindungslinien der Drehachsen der Drehgelenke 711, 712, 713, 714 als Symmetrieachse liegen.

Dabei kann insbesondere vorgesehen sein, dass der Vertikalabstand DS3 der jeweils benachbarten Stützteile S_{i,j} um mindestens den Faktor 1,05 größer ist wie der größerer Wert von DL2A oder DL2B.

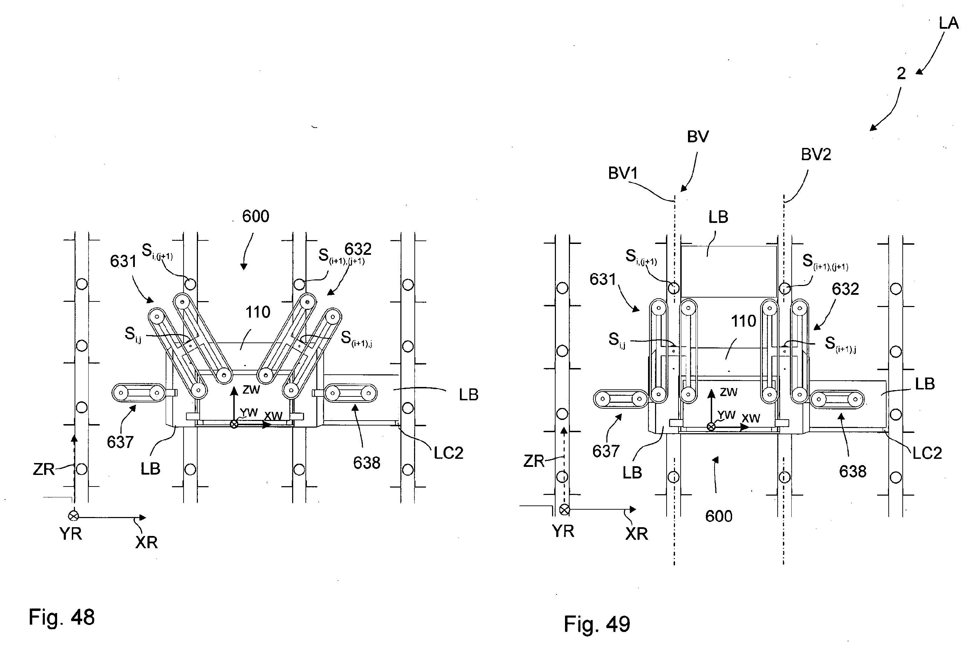

Mit dem Bedienfahrzeug 600 ist es daher möglich, neben einer Diagonalbahn BD und einer Horizontalbahn BH zusätzlich eine Vertikalbahn BV zu fahren. Eine solche Vertikalbahn BV ist in der Figur 49 mit den Fahrspuren BV1 und BV2 dargestellt, die die Verbindungslinien der Stützteile S_{i,j} sind, entlang derer das Bedienfahrzeug 600 bei Fahren einer Vertikalbahn BV, also im Vertikalbahn-Fahrbetrieb, fährt.

Im Horizontalbahn-Fahrbetrieb, also beim Abfahren einer Horizontalbahn BH, verlaufen die Längsrichtungen der Antriebsraupen-Paare in der XR-Richtung (Figur 46). Da die Längserstreckung der Antriebsraupen-Paare derart ausgeführt ist, dass die Förderriemen 735 und 736 eines einzelnen Antriebsraupen-Paars jeweils nicht gleichzeitig an zwei in der XR-Richtung benachbarten Stützteilen S_{i,j} und S_{(i+1),j} anliegt, sind die Zusatz-Antriebsraupen 637, 638, 647, 648 vorgesehen. Diese sind in der ZW-Richtung gesehen derart angeordnet, dass diese mit ihrer in der ZW-Richtung gesehen Unterseite auf jeweils einem Stützteil S_{i,j} zeitweise aufliegt, wenn das Bedienfahrzeug 600 eine Horizontalbahn BH fährt. Die Zusatz-Antriebsraupen 637, 638, 647, 648 können insbesondere vom Ursprung der XW-Richtung aus gesehen mit ihrer vollständigen Erstreckung hinter dem. Fahrzeugrahmen 110 gelegen sein. Dabei haben die Zusatz-Antriebsraupen 637, 638, 647, 648 eine derartige Länge DLZ zwischen den Drehachsen 681a, und 682a und sind die Zusatz-Antriebsraupen 637, 638, 647, 648 in der Längsrichtung XW derart angeordnet, dass eine Zusatz-Antriebsraupe (in der Figur 46 die Zusatz-Antriebsraupe 637 und 647) auf einem Stützteil S_{i,j} liegt, wenn in der Fahrtrichtung des Bedienfahrzeugs 600 in der XR-Richtung - ein Stützteil S_{i,(j+1)} nicht mehr zwischen einander zugewandten Oberflächen der Förderriemen 735, 736 von Antriebsraupen-Paare (im Beispiel die Antriebsraupen-Paare 631, 641) anliegt.

Der Übergang von dem Horizontalbahn-Fahrbetrieb in den Vertikalbahn-Fahrbetrieb oder umgekehrt ist in den Figuren 22, 23, 24 gezeigt. Dabei erfolgt die Drehung der Antriebsraupen-Paar, wenn sich die jeweiligen Stützteile S_{i,j} und S_{(i+1),j} - in der YR-Richtung gesehen - in den Drehachsen 631a, 632a, 641a, 642a jeweils der Drehgelenke befindet. Das Bedienfahrzeug 600 muss für diesen Vorgang also entsprechend positioniert werden: Insbesondere zu diesem Zweck kann das Bedienfahrzeug 600 in zumindest einer der Drehachsen 631a, 632a, 641a, 642a einen Sensor aufweisen, die in der Lage sind zu erkennen, dass sich ein Stützteil S_{i,j} in der jeweiligen Drehachse 631a, 632a, 641a, 642a befindet. Diese Sensoren sind jeweils mit der Steuerungsvorrichtung 501 verbunden, so dass diese das Bedienfahrzeug 600 entsprechend kommandieren kann, um das Bedienfahrzeug 600 in die Zustand relativ zu den Lagerregalen zu bringen, bei denen ein Schwenken der Antriebsraupen-Paars und insbesondere ein Übergang vom Diagonalbahn-Fahrbetrieb oder Horizontalbahn-Fahrbetrieb in den Vertikalbahn-Fahrbetrieb und umgekehrt möglich ist. Der zumindest eine Sensor kann insbesondere ein Erkennungssensor sein, der auf optische Weise ein solches Übereinanderliegen eines Stützteil S_{i,j} und eines Drehgelenks erfassen kann.

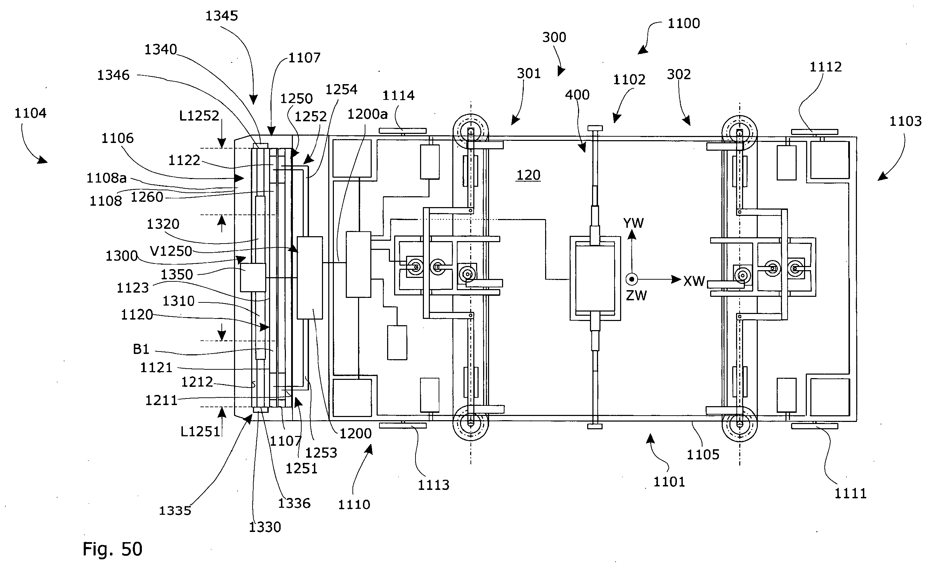

Nach einem weiteren Aspekt ist ein Bedienfahrzeug 1100 vorgesehen, das entlang einer Längsrichtung XR desselben auf einem Fahrboden bewegbar ist. Das Fahrzeug 1100 ist nach einer der hierin z.B. mit den Bezugszeichen 100 oder 600 beschriebenen Ausführungsformen eines erfindungsgemäßen Bedienfahrzeugs ausgeführt. Das Fahrzeug 1100 weist generell eine Bewegungsvorrichtung auf, mit der das Fahrzeug 1100 auf dem Fahrboden fahrbar und in definierten Richtungen bewegbar und steuerbar ist. In der Figur 50 ist ein dem Fahrzeug 1100 körperfest zugeordnetes Koordinatensystem eingetragen, das eine Längsrichtung XW, eine Querrichtung YW und eine Höhenrichtung oder Hochachse ZW bezeichnet. Die Längsrichtung XW kann derart definiert sein, dass diese in die neutrale Lenkstellung des Fahrzeugs 1100 weist uns insbesondere eine Symmetrieachse des Fahrzeugs 1100 bildet. Die Hochachse ZW kann derart definiert sein, dass diese senkrecht auf einer von den Drehachsen der Bewegungsvorrichtung aufgespannten Ebene steht.

Bei der Gestaltung der Bewegungsvorrichtung mit Laufrädern zum Bewegen des Fahrzeugs 1100, welche nicht Teil der Erfindung ist, kann das Fahrzeug 1100 insbesondere zumindest drei Laufräder aufweisen. Bei der in der Figur 50 dargestellten Ausführungsform des Fahrzeugs 1100, welche nicht Teil der Erfindung ist, weist das Fahrzeug 1100 vier Laufräder 1111, 1112, 1113, 1114 (Figur 5) auf, deren Drehachsen entlang der YW-Achse oder insbesondere parallel zur XW-Achse des Fahrzeugs 1100 verläuft. Bei einer Ausführungsform, welche nicht Teil der Erfindung ist und bei der solche Laufräder 1111, 1112, 1113, 1114 am Fahrzeugrahmen 1105 angeordnet und dabei zumindest -zwei an zueinander entgegen gesetzten Seiten des Fahrzeugs 1100 und an derselben Stelle der XW-Achse angeordnete Räder 1111, 1112 bzw. 1113, 1114 zur Ausführung von Lenkbewegungen des Fahrzeugs 1100 angeordnet sind, ist eine Ausrichtung der Drehachsen der Laufräder 1111, 1112, 1113, 1114 in dieser Weise möglich. In den dargestellten Ausführungsformen des Bedienfahrzeugs 100 sind die Laufräder 1111, 1112 an der Längsseite 1101 und die Laufräder 1113, 1114 an der entgegen gesetzt zu der Längsseite 1101 gelegenen Längsseite 1102 angelenkt. An jeder Längsseite 1101, 1102 sind Drehachsen an der jeweiligen Längsseite angeordneten Laufrädern gelegen, die gegebenenfalls in ihrer neutralen Lenkstellung zumindest in der Höhenrichtung oder entgegen der Hochachse ZW gesehen senkrecht zur Längsrichtung XW des Fahrzeugs 1100 verlaufen.

Alternativ oder zusätzlich zu den Laufrädern 1111, 1112, 1113, 1114 weist das Fahrzeug 1100 die z.B. in der Figur 5 gezeigten Antriebsraupen 131, 132, 141, 142 oder die in den Figuren 42 bis 45 gezeigten Antriebsraupen auf. Dabei werden die Merkmale des hier behandelten Aspekts der Erfindung auf die hierin beschriebenen Ausführungsformen des Fahrzeugs 100, 600 oder auf ein Fahrzeug angewendet , das wie die Ausführungsformen des Fahrzeugs 100, 600 gestaltet ist. In der Figur 50 weist das Fahrzeug 1100 keine derartigen Antriebsraupen auf und stellt somit keinen Teil der Erfindung dar.

In Bezug auf die Komponenten des Fahrzeugs basiert die in der Figur 50 dargestellte Ausführungsform des Fahrzeugs 1100 auf der Ausführungsform des Fahrzeugs 100 nach der Figur 30, so dass die Komponenten des Fahrzeugs 1100 nur teilweise mit Bezugszeichen versehen sind und den jeweiligen Komponenten ansonsten die in der Figur 30 angegebenen Bezugszeichen zugeordnet sind.

Das in der Figur 50 dargestellte Fahrzeug 1100 weist einen Aufnahmeraum 120, eine Fördervorrichtung 300 mit Antriebsriemen 301, 302 und eine Greifvorrichtung 400, jeweils gemäß der Ausführungsform des Fahrzeugs nach der Figur 30 auf. Das Fahrzeug 1100 kann auch nur eine Vorrichtung aus der Kombination der Fördervorrichtung 300 und der Greifvorrichtung 400 aufweisen. Die gegebenenfalls vorgesehene Fördervorrichtung zur Einführung eines Lagerbehälters in den Aufnahmeraum 120 kann auch auf andere Weise ausgeführt sein. Auch die -gegebenenfalls vorgesehene Greifvorrichtung kann auf andere Weise ausgeführt sein.

Der Fahrzeugrahmen 1105 des Fahrzeugs 1100 weist eine Ausnehmung 1106 auf, die der Fahrzeugrahmen 1105 an einer in die Längsrichtung XR weisenden-Fahrzeug-Seite 1104 ausbildet. Die Ausnehmung 1106 weist einen Batterie-Aufnahmebereich 1107 zur Aufnahme einer Batterie B1 für die elektrische Versorgung von elektrischen Komponenten des Fahrzeugs bildet. Die Ausnehmung 1106 kann zur Fahrzeugseite 1106 hin offen gestaltet sein, so dass der Batterie-Aufnahmebereich 1107 von der Fahrzeug-Seite 1104 aus zugänglich ist. Dabei kann die Ausnehmung 1106 durch ein sich in Richtung zur Fahrzeugseite 1106 hin flächig erstreckendes Trägerteil 1108 oder eine Platte des Fahrzeugrahmens 1105 gebildet sein. Weiterhin kann dabei oder davon unabhängig der Fahrzeugrahmen 1105 eine in die Hochachse ZW weisende Oberfläche 1108a aufweisen, in Bezug auf die Hochachse ZW oberhalb der die Ausnehmung 1106 und der Batterie-Aufnahmebereich 1107 gelegen ist. Die Oberfläche 1108a kann die Oberfläche eines sich flächig in Richtung zur Fahrzeugseite 1106 hin erstreckendes Trägerteil 1108 des Fahrzeugrahmens 1105 sein. Die Ausnehmung 1106 kann in Bezug auf die Hochachse ZW nach oben hin offen sein. Alternativ dazu kann diese tunnelförmig gebildet sein, wobei der Fahrzeugrahmen 1105 eine oder mehrere Ausnehmungen aufweisen kann, durch die sich eine solche tunnelförmige Ausnehmung 1106 zur Fahrzeugseite 1104 hin öffnet. Auch bei einer derartigen tunnelförmigen Ausnehmung 1106 kann deren Bodenfläche durch die Oberfläche 1108a durch die Oberfläche eines sich flächig in Richtung zur Fahrzeugseite 1106 hin erstreckenden Trägerteils 1108 des Fahrzeugrahmens 1105 gebildet sein.

Das Fahrzeug 1100 weist weiterhin eine Führungsvorrichtung 1200 mit einer Batterie-Führungsbahn 1120 auf, die quer zur Längsrichtung XR verläuft, so dass eine in die Batterie-Führungsbahn 1120 eingesetzte Batterie B1 in derselben quer zur Längsrichtung XR des Fahrzeugs 1100 bewegbar ist. Die Batterie-Führungsbahn 1120 kann insbesondere in der Ausnehmung 1102 angeordnet sein.

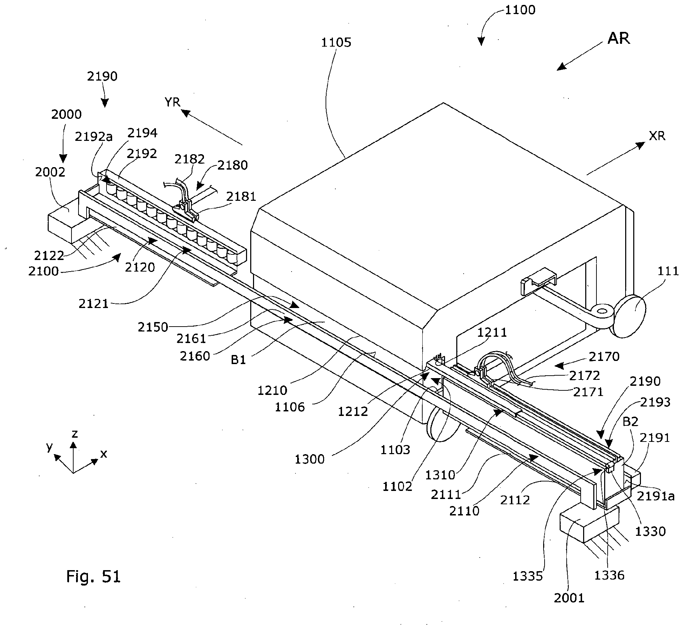

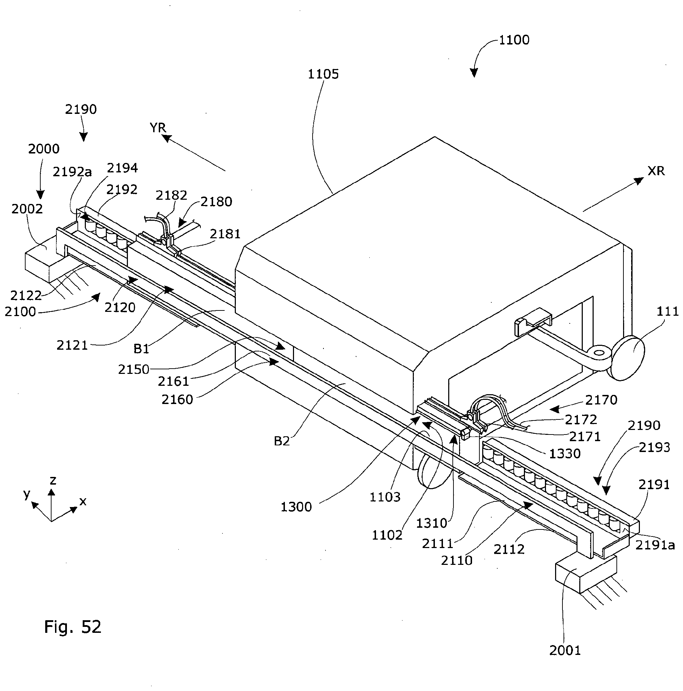

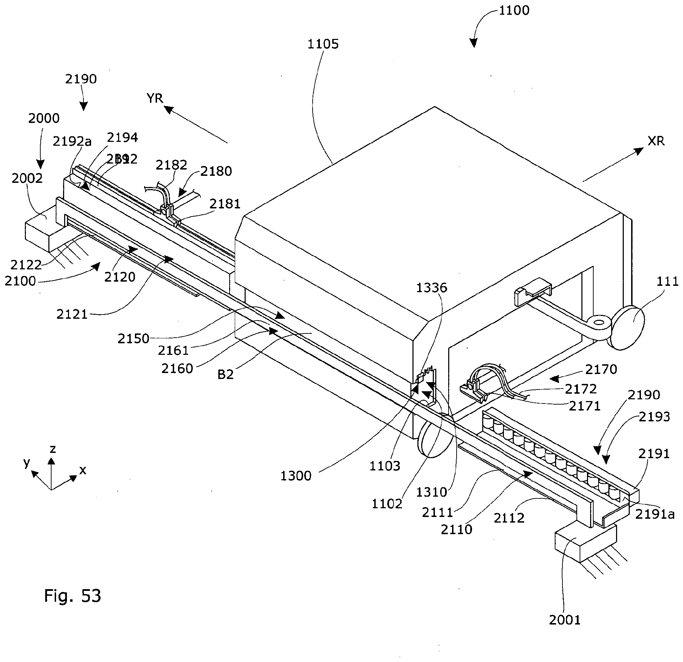

Weiterhin kann das Fahrzeug 1100 eine an dem Fahrzeugrahmen 1105 befestigte Haltevorrichtung 1210 zum Halten der Batterie B1 an dem Fahrzeugrahmen 1105 aufweisen. Die Haltevorrichtung 1210 gibt ein Widerlager gegen ein Bewegen einer Batterie B1 zur Fahrzeugseite 1104 hin. Die Haltevorrichtung 1210 kann deshalb, wie es in der Figur 51 dargestellt ist, als Wandungsteil des Fahrzeugrahmens 1105 ausgebildet sein, das eine in Bezug auf die Hochachse ZW obere und an der Fahrzeugseite 1104 gelegene Begrenzung der Ausnehmung 1102 darstellt. Die Haltevorrichtung 1210 kann insbesondere derart ausgeführt sein, dass die an dem Fahrzeugrahmen 1105 befestigte Haltevorrichtung 1210 zum Halten der Batterie B1 an dem Fahrzeugrahmen 1105 derart ausgeführt ist, dass die Batterie entlang der Batterie-Führungsbahn 1120 bewegbar ist und von der Haltevorrichtung 1210 quer zu dieser gehalten wird. Bei der Ausführungsform des Fahrzeugs 1100 nach der Figur 50 ist die Haltevorrichtung 1210 als sich in der YW-Richtung erstreckenden und einander gegenüberliegenden Oberflächen 1211, 1212 gebildet, die einander zugewandt gelegen sind und die die Batterie-Führungsbahn 1110 ausbilden. Auf diese Weise ist die an dem Fahrzeugrahmen 1105 befestigte Ausführungsform der Haltevorrichtung 1210 zum Halten der Batterie B1 an dem Fahrzeugrahmen 1105 derart ausgeführt, dass die Batterie zwischen den Oberflächen 1211 und 1212 entlang der Batterie-Führungsbahn 1120 bewegbar ist und von der Haltevorrichtung 1210 bzw. den Oberflächen 1211, 1212 quer zu dieser gehalten wird. Die Haltevorrichtung 1210 kann auch als ein pinförmiges oder hakenförmiges Teil, das von oben vom R absteht, ausgebildet sein. Das Fahrzeug 1100 weist auch eine Kontaktierungsvorrichtung 1250 auf, die zwei Anschlussvorrichtungen 1251, 1252 und zumindest eine Kontakt-Haltevorrichtung 1255, 1256 zum Halten der Anschlussvorrichtungen 1251, 1252 aufweist. Dabei sind die Anschlussvorrichtungen 1251, 1252 derart ausgeführt, dass diese jeweils in einen Kontaktierungsabschnitt 1260 eines Kontaktstreifens oder einer Kontaktschleife einer in die Batterie-Führungsbahn 1120 eingesetzten Batterie B1 in Kontakt gebracht werden können. Der Kontaktierungsabschnitt 1260 verläuft in der Längsrichtung der Batterie B1, die im eingesetzten Zustand derselben in Richtung der Batterie-Führungsbahn 1120 verläuft. Dabei kann der Kontaktierungsabschnitt 1260 auch eine streifenförmige Kontaktoberfläche sein, die die Oberseite der Batterie B1, die in ihrem eingesetzten Zustand in die ZW-Richtung weist, in der Längserstreckung der Batterie-Oberseite durchläuft. Alternativ adazu kann vorgesehen sein, dass Randabschnitte den Kontaktierungsabschnitt 1260 an dessen Enden begrenzen, so dass der Kontaktierungsabschnitt 1260 die Längserstreckung der Batterie-Oberseite nicht ganz durchläuft. Dabei kann vorgesehen sein, dass der Kontaktierungsabschnitt 1260 die Längserstreckung der Batterie B1 an dessen Batterie-Oberseite, die im eingesetzten Zustand derselben in die ZW-Richtung weist, zumindest 75% durchläuft.

Die zwei Anschlussvorrichtungen 1251, 1252 sind entlang der Batterie-Führungsbahn 1110 oder in der YW-Richtung gesehen hintereinander angeordnet. Dabei kann vorgesehen sein, dass diese an ihren einander zugewandten Rändern in einem in der YW-Richtung gesehen kürzesten Abstand voneinander entfernt gelegen sind, der zumindest die Hälfte der in Bezug auf die Längsrichtung XR kleinsten Breite der Führungsbahn 1110, in die die Batterie B1 einsetzbar ist, beträgt.

Die Batterie-Führungsbahn 1110 kann generell als längliche oder nutförmige Vertiefung in dem Fahrzeugrahmen 1105 oder gegebenenfalls als eine sich flächig in Richtung zur Fahrzeugseite 1106 hin erstreckenden Trägerteil 1108 des Fahrzeugrahmens 1105 ausgebildet sein. Die Batterie-Führungsbahn 1110 weist seitliche Endabschnitte 1111, 1112, die an der jeweiligen Fahrzeug-Längsseite 1101, 1102 gelegen sind und die jeweils ein seitliches Ende der Batterie-Führungsbahn 1120 bilden, und einen zwischen den seitlichen Endabschnitten 1111, 1112 gelegenen Mittelabschnitt 1113 auf. Die seitlichen Endabschnitte 1111, 1112 münden an den Fahrzeugseiten 1101 bzw. 1102 aus, so dass eine Batterie B1 an den Fahrzeugseiten 1101 bzw. 1102 in die Batterie-Führungsbahn 1120 einschiebbar ist. Auch kann vorgesehen sein, dass die Anschlussvorrichtungen 1251, 1252 der Kontaktierungsvorrichtung 1250 jeweils in einem seitlichen, jeweils an einem der an den Fahrzeugseiten 1101 bzw. 1102 gelegenen Endabschnitt der Batterie-Führungsbahn 1120 gelegen sind, der sich jeweils über maximal einem Viertel der Gesamtlänge der Batterie-Führungsbahn 1120 erstreckt.

Das Fahrzeug 1100 kann eine Energieversorgungs-Vorrichtung 1200 aufweisen, die mit elektrisch betriebenen Komponenten des Fahrzeugs 1100 elektrisch verbunden ist, um diese mit Energie zu versorgen. Die Energieversorgungs-Vorrichtung 1200 kann ein Verteilermodul aufweisen, mit dem die von der Energieversorgungs-Vorrichtung 1200 bereitgestellte Energie an die verschiedenen elektrisch betriebenen Komponenten bereitgestellt wird. Mit den Anschlussvorrichtungen 1251, 1252 ist jeweils eine Leitung 1253 bzw. 1254 verbunden, die jeweils die Anschlussvorrichtungen 1251, 1252 mit der Energieversorgungs-Vorrichtung 1200 des Fahrzeugs 1100 elektrisch verbinden.

Bei der in der Figuren 50 und 51 gezeigten Ausführungsform des Fahrzeugs 1100 ist an dem Fahrzeugrahmen 1105 eine Austausch-Stellvorrichtung 1300 befestigt. Die in den Figuren 50 und 51 gezeigte Austausch-Stellvorrichtung 1300 weist zwei teleskopisch ein- und ausfahrbare Greifstangen 1310, 1320 auf, die sich von einer Antriebsvorrichtung 1350 aus in zueinander entgegen gesetzten Richtungen und entlang jeweils der Batterie-Führungsbahn 1120 erstrecken. Die Antriebsvorrichtung 1350 ist am Fahrzeugrahmen 1105 befestigt und in der Längserstreckung der Batterie-Führungsbahn 1120 in der Längsrichtung XR des Fahrzeugs 1100 gesehen mittig oder in einem mittleren Bereich der Führungsbahn 1120 gelegen.

An den an den jeweiligen Fahrzeugseiten 1101, 1102 gelegenen und zu diesen weisenden Enden der Greifstangen 1310, 1320 ist jeweils eine Mitnehmer-Vorrichtung 1330 bzw. 1340 ausgebildet. Diese weist jeweils einen Mitnehmer oder eine Hakenvorrichtung 1335 bzw. 1336 und eine Kopplungsvorrichtung 1345 bzw. 1346 auf, mit der der jeweilige Mitnehmer oder die Hakenvorrichtung 1335 bzw. 1336 an das äußere Ende der jeweiligen Greifstangen 1310, 1320 angekoppelt ist. Die Kopplungsvorrichtung 1345 bzw. 1346 kann jeweils eine Stellvorrichtung
aufweisen oder mit einer Stellvorrichtung gekoppelt sein, die von der mit dieser funktional verbundenen Steuerungsvorrichtung 510 angesteuert werden kann. Dadurch kann die Mitnehmer-Vorrichtung 1330, 1340 in eine Mitnehmerstellung bewegt werden, bei der eine Hakenvorrichtung 1335 bzw. 1336 an eine von der Antriebsvorrichtung 1350 aus gesehen äußere oder abgewandte Oberfläche einer in der Führungsbahn 1120 gelegene Batterie B1 anlegt werden kann, um diese heranzuziehen. Auch kann in dieser Stellung die Hakenvorrichtung 1335 bzw. 1336 an einer der Antriebsvorrichtung 1350 zugewandten Oberfläche der Batterie B1 anlegt werden, um diese von der Antriebsvorrichtung 1350 aus gesehen wegzuschieben. Auch kann vorgesehen sein, dass, gesteuert durch die Steuerungsvorrichtung 510, jede der Kopplungsvorrichtungen 1345 bzw. 1346 die Hakenvorrichtung 1335 bzw. 1336 in eine Entkopplungsstellung gebracht werden, bei der die beschriebene Mitnehmerfunktion nicht gegeben ist, da die Hakenvorrichtung 1335 bzw. 1336 außerhalb des Umfangs der Batterie B1 gelegen ist. Auf diese Weise kann - bei einer jeweils entsprechenden Stellung der jeweiligen Hakenvorrichtung 1335 bzw. 1336 - eine in der Führungsbahn 1120 gelegene Batterie B1 in beiden zueinander entgegen gesetzten Richtungen der Führungsbahn 1120 aus dieser herausbewegt oder in diese hineinbewegt werden.

Gemäß der Lagerregal-Anordnung nach Anspruch 11 ist eine Batterie-Austauschstation 2000 vorgesehen, die zum Andocken eines Fahrzeugs 1100 mit einer Batterie B1 ausgebildet ist, um die in dem Fahrzeug 1100 befindliche Batterie B1 aufzunehmen und eine in der Batterie-Austauschstation 2000 befindliche Batterie B2 in das Fahrzeug 1100 einzusetzen.

Eine Ausführungsform der Batterie-Austauschstation 2000 ist in der Figur 51 dargestellt, die eine Austauschvorrichtung 2100 aufweist. Die Ausführungsform der Austauschvorrichtung 2100 ist zusammen mit einem Fahrzeug 1100 dargestellt, das an die Austauschvorrichtung 2100 angedockt ist.

Die Austauschvorrichtung 2100 weist eine erste Führungsbahn-Vorrichtung 2110 mit einer ersten Führungsbahn 2111 und eine zweite Führungsbahn-Vorrichtung 2120 mit einer zweiten Führungsbahn 2121 auf, wobei die Führungsbahnen 2111, 2121 jeweils von einem jeweiligen Führungsbahn-Abschnitt 2110 bzw. 2120 gebildet ist. Die Austausch-Führungsvorrichtung 2100 ist derart gestaltet, dass die Führungsbahnen 2113, 2114 in ihrer jeweiligen Verlängerung zueinander verlaufen und derart zueinander ausgerichtet sind, dass eine zumindest abschnittsweise in einer ersten der Führungsbahnen 2113, 2114 gelegene Batterie B2 von dieser in die jeweils zweite der Führungsbahnen 2113, 2114 bewegt werden kann, ohne die jeweils erste der Führungsbahnen 2113, 2114 zu verlassen.

Die erste Führungsbahn-Vorrichtung 2110 und die zweite Führungsbahn-Vorrichtung 2120 können jeweils als sich länglich.erstreckendes Trägerteil oder generell als ein Führungsbahn-Grundkörper 2112 bzw. 2122 ausgebildet sein, das in der Ausführungsform der Figur 51 als Platte ausgeführt ist. Das sich länglich erstreckende Trägerteil kann eine sich in dessen Längsrichtung erstreckende Vertiefung zur Ausbildung der jeweiligen Führungsbahn aufweisen, die auf ihren entgegen gesetzt zueinander gelegenen Endabschnitten in der Längsrichtung nach außen ausmündet.

Alternativ kann die Verbindungsvorrichtung, wie es in der Figur 51 dargestellt ist, eine durchgehende, entgegen gesetzt zu der Andockrichtung AR weisende und sich über den Andockbereich 2150 und optional auch die Längserstreckung der Führungsbahnen 2113, 2114 erstreckende Oberfläche aufweisen, die eine in Bezug auf die Andockrichtung AR hintere Begrenzungswand für eine im Fahrzeug 1100 befindliche Batterie B1 bildet, insbesondere wenn die Batterie B1 aus dem Fahrzeug 1100 heraus und in eine der Führungsbahn-Vorrichtungen 2110, 2120 hineinbewegt wird. Die Batterie-Austauschstation 2000 weist eine Verbindungsvorrichtung 2160 auf, die die zwei Führungsbahn-Vorrichtungen 2110, 2120 aneinander befestigt. Bei der Ausführungsform der Figur 51 ist die Verbindungsvorrichtung 2160 als Verbindungsstange ausgeführt.

Weiterhin kann dabei oder unabhängig von diesen Varianten die Batterie-Austauschstation 2000 eine in Bezug auf die Andockrichtung AR vordere Begrenzungsvorrichtung 2190 aufweisen. Diese kann aus einer ersten Begrenzungswand 2191 und einer zweiten Begrenzungswand 2192 gebildet sein, wobei die erste Begrenzungswand 2191 die erste Führungsbahn 2113entgegen die Andockrichtung AR und zweite Begrenzungswand 2192 die zweite Führungsbahn 2114 entgegen die Andockrichtung AR begrenzt. Bei dieser Ausführungsform bilden die vordere Begrenzungsvorrichtung 2190, die Führungsbahn-Grundkörper 2112 bzw. 2122 und die Verbindungsvorrichtung 2160 das Innere der jeweiligen Führungsbahn-Vorrichtungen 2110, 2120 bzw. Führungsbahnen 2113, 2114.

Zwischen den Führungsbahnen 2113, 2114 ist ein Andockbereich 2150 ausgebildet, in den ein Endabschnitt 1104a des Fahrzeugs 1100, in dem eine in die Batterie-Austauschstation 2000 aufzunehmende Batterie B1 gelegen ist, einfahrbar ist.

Weiterhin weist die Batterie-Austauschstation 2000 eine Austausch-Stellvorrichtung 2200 zum Bewegen einer in der Austausch-Führungsvorrichtung 2110 befindlichen Batterie B2 entlang der zwei Führungsbahn-Abschnitte 2111, 2112 auf.

Die Batterie-Austauschstation 2000 weist auch eine Kontaktierungsvorrichtung 1250 auf, die zwei Anschlussvorrichtungen 1251, 1252 und zumindest eine Kontakt-Haltevorrichtung 1255, 1256 zum Halten der Anschlussvorrichtungen 1251, 1252 aufweist. Dabei sind die Anschlussvorrichtungen 1251, 1252 derart ausgeführt, dass diese jeweils in einen Kontaktierungsabschnitt 1260 eines Kontaktstreifens oder einer Kontaktschleife einer in die Batterie-Führungsbahn 1120 eingesetzten Batterie B1 in Kontakt gebracht werden.

Die Batterie-Austauschstation 2000 weist eine erste elektrische Anschlussvorrichtung mit einer Kontaktierungskomponente, die seitlich oder oberhalb der jeweiligen Führungsbahn gelegen ist, zur Kontaktierung eines elektrischen Anschlusses einer in der Führungsbahn befindlichen Batterie und eine Haltevorrichtung auf, an der die Kontaktierungskomponente angeordnet ist.

Die Batterie-Austauschstation 2000 weist eine zweite elektrische Anschlussvorrichtung mit einer Kontaktierungskomponente, die seitlich oder oberhalb der jeweiligen Führungsbahn gelegen ist, zur Kontaktierung eines elektrischen Anschlusses einer in der Führungsbahn befindlichen Batterie und einer Haltevorrichtung, an der die Kontaktierungskomponente angeordnet ist.

Die Batterie-Austauschstation 2000 weist einen zwischen den zwei Führungsbahn-Abschnitten 2111, 2112 gelegenen und als Ausnehmung 2191 ausgebildeten Andockabschnitt 2190 mit einer Andockwand, die eine entgegen einer Andockrichtung gerichtete Andockfläche aufweist, an der das Fahrzeug mit einer Fahrzeugseite, an der eine an der Andockstation auszutauschende Batterie angeordnet ist, die das anzudockende Fahrzeug zur Anlage gebracht werden kann.

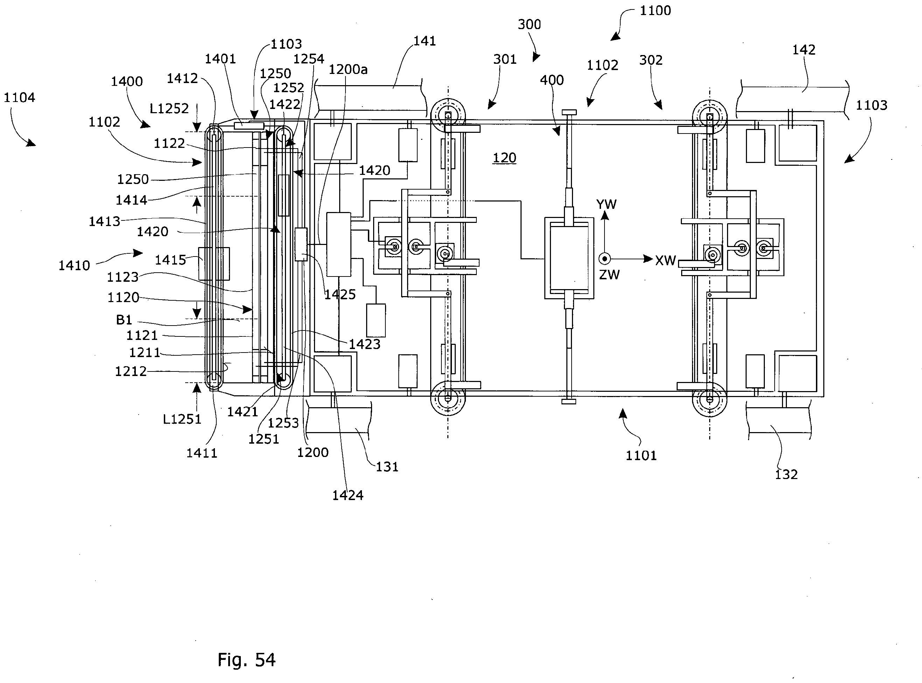

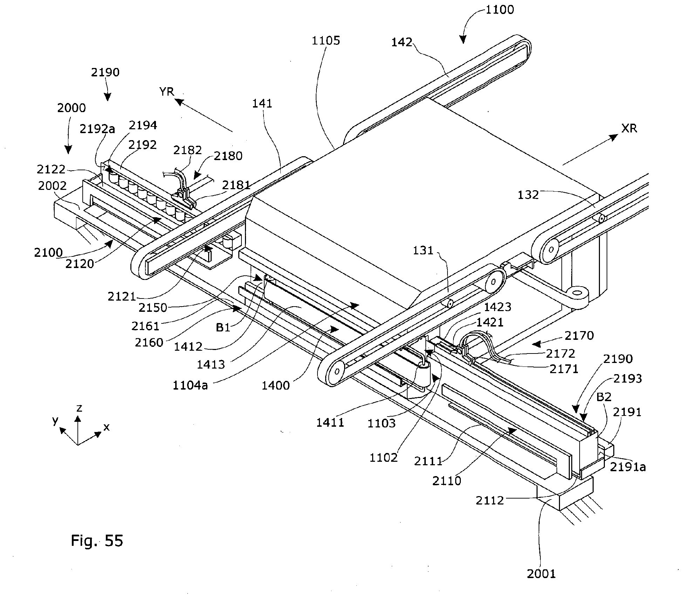

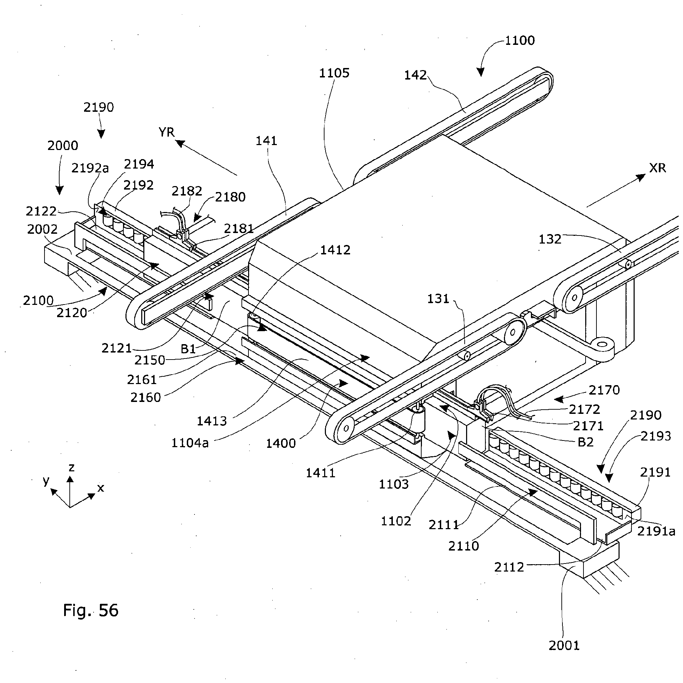

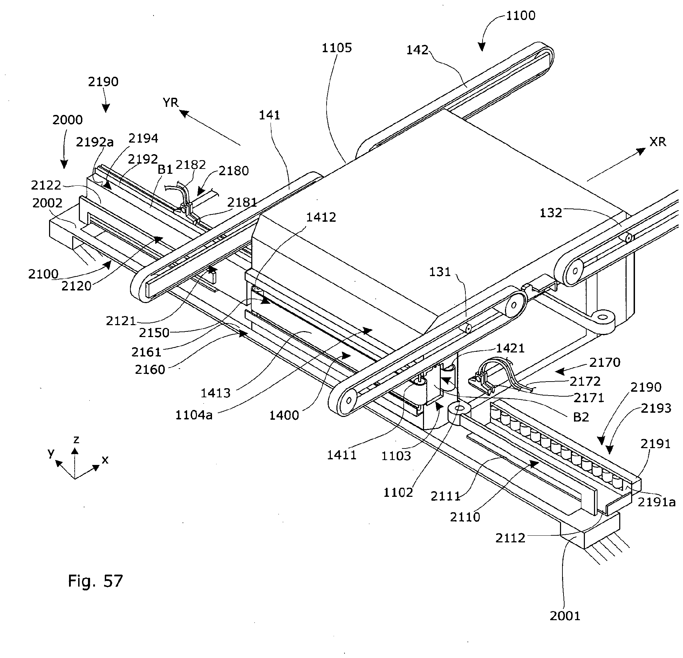

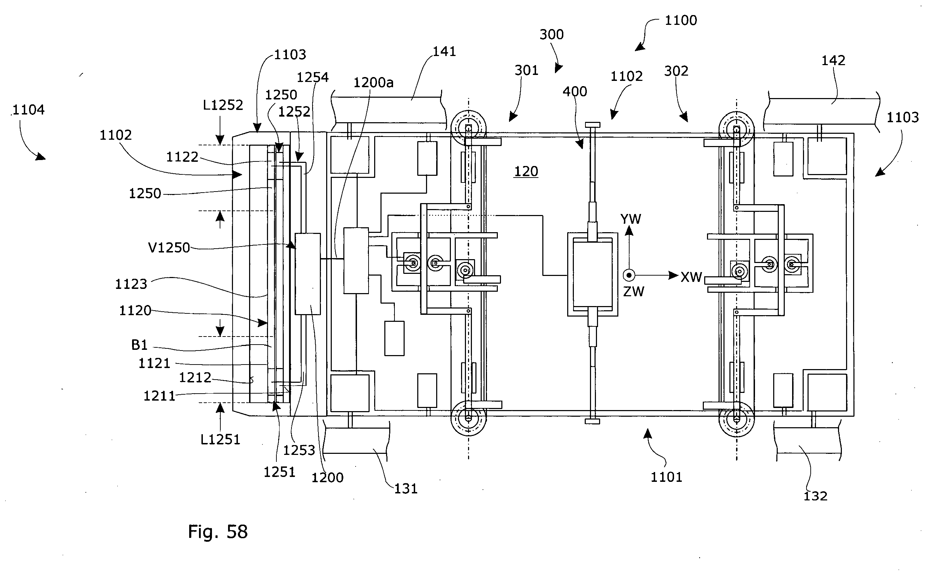

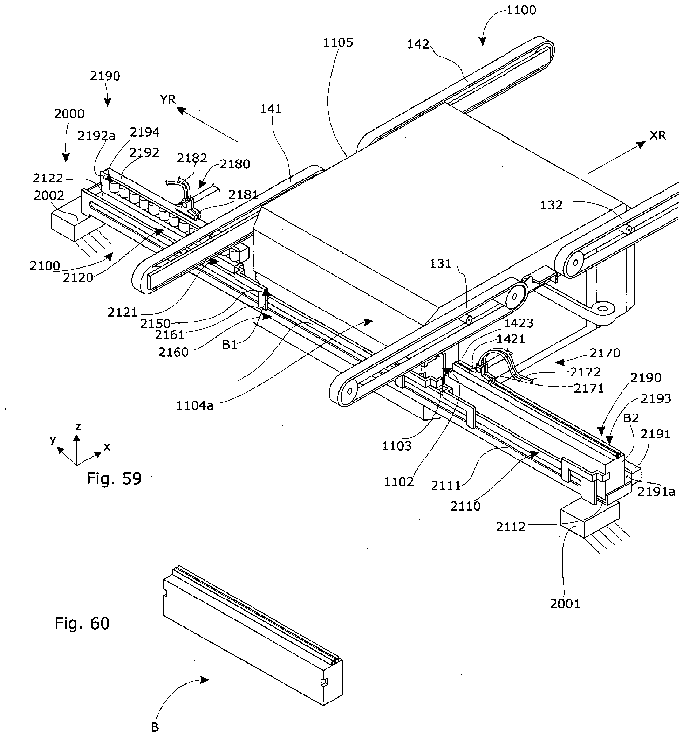

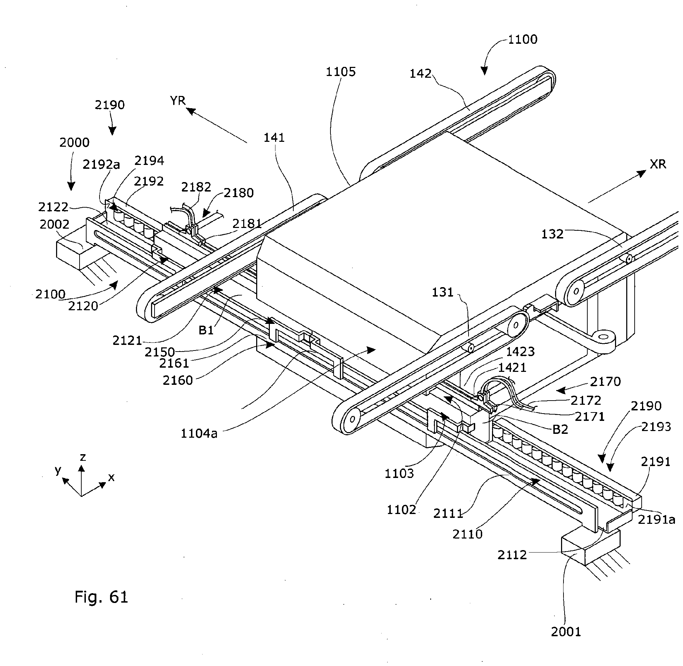

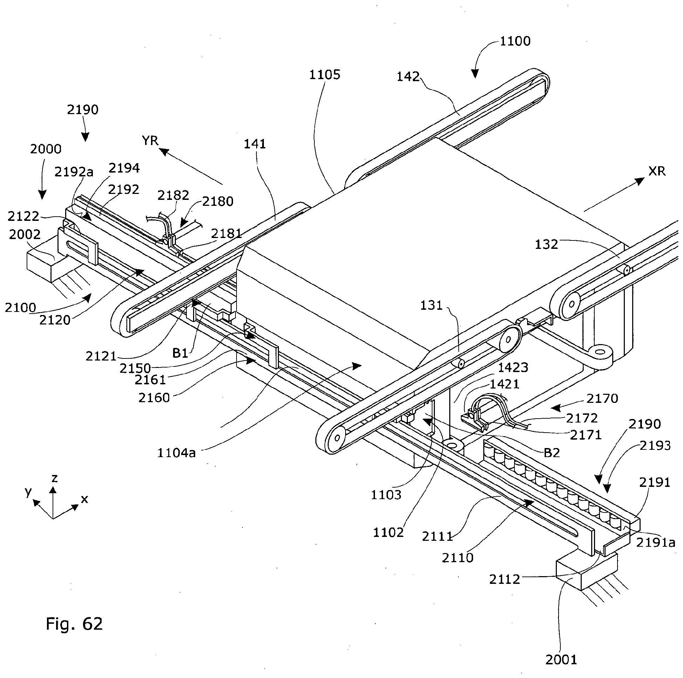

In der Figur 54 ist eine weitere Ausführungsform einer Fahrzeug-Stellvorrichtung an einem Fahrzeug 1100 dargestellt, das mit dem Bezugszeichen 1400 bezeichnet ist. Bei dieser Ausführungsform ist die Fahrzeug-Stellvorrichtung 1400 als Riementrieb 1410 mit einem Stellriemen 1413 ausgebildet, der sich entlang der Batterie-Führungsbahn 1120 erstreckt. Dabei ist der Riementrieb 1410 derart gelegen, dass dieser die Batterie B1, die in der Batterie-Führungsbahn 1120 gelegen ist, gegen die dem Stellriemen 1411 zugewandte Führungsfläche 1211 (Ausführungsform der Figur 50) drückt. Auf diese Weise kann durch Bewegung des Stellriemens 1411 des Riementriebs 1410 die Batterie B1 entlang der Batterie-Führungsbahn 1120 bewegt werden. Insbesondere kann dadurch eine von dem Riementrieb 1410 erfasste und in der Batterie-Austauschstation 2000 gelegene Batterie B1 in die Batterie-Führungsbahn 1120 z.B. von einer hierin beschriebenen Ausführungsform einer Batterie-Austauschstation 2000 oder einer anderen Batterie-Austauschstation aufgenommen werden.

Alternativ kann die Fahrzeug-Stellvorrichtung 1400 einen weiteren Stellriemen 1421 eines zweiten Riementriebs 1420 aufweisen, der derart angeordnet ist, dass die Batterie-Führungsbahn 1120 zwischen den Riementrieben 1410 und 1420 gelegen ist und eine in der gelegene Batterie B1 von beiden angedrückt wird, so dass dieser zusammen die Batterie entlang der Batterie-Führungsbahn 1120 verschieben können.

Dabei kann insbesondere weiterhin vorgesehen sein, dass die Riementriebe 1410 und 1420 zusammen und mit derselben Geschwindigkeit mittels einer mit der Steuerungsvorrichtung 510 verbunden Antriebsvorrichtung entlang der Batterie-Führungsbahn 1120 bewegt werden könne. In diesem Fall muss die Batterie-Austauschstation 2000 keine Stellvorrichtung aufweisen, weil die Fahrzeug-Stellvorrichtung 1400 eigenständig eine Batterie B2 aus der Batterie-Austauschstation 2000 entnehmen kann, wenn die Fahrzeug-Stellvorrichtung 1400 zu der betreffenden Seite des Fahrzeugs 1100 ausgefahren ist.

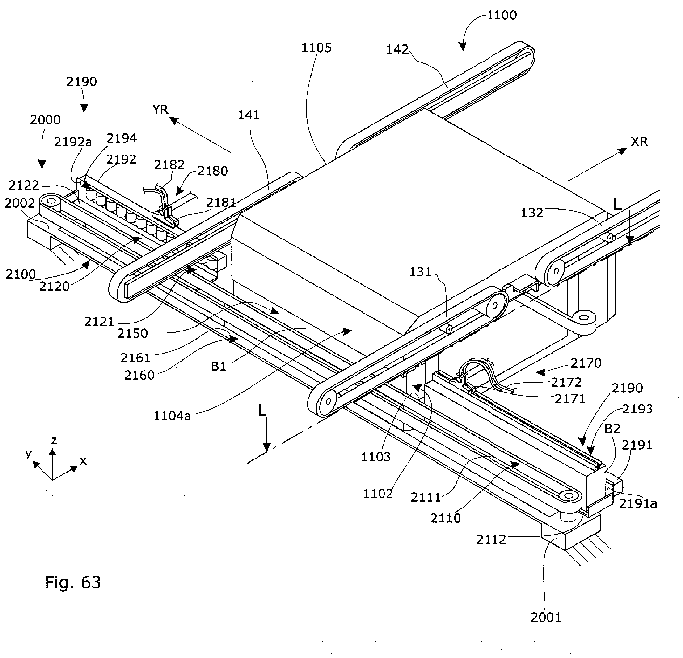

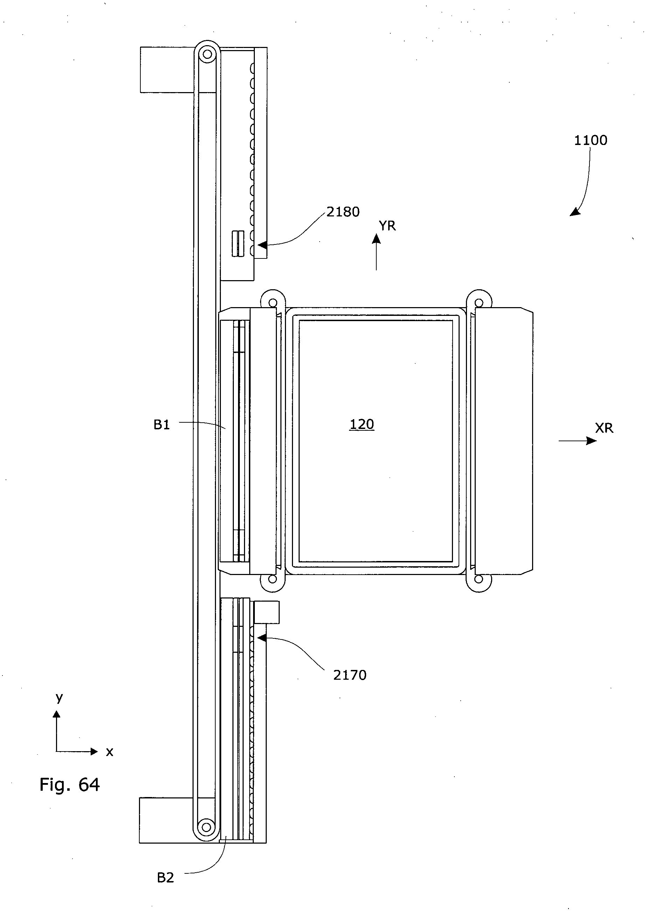

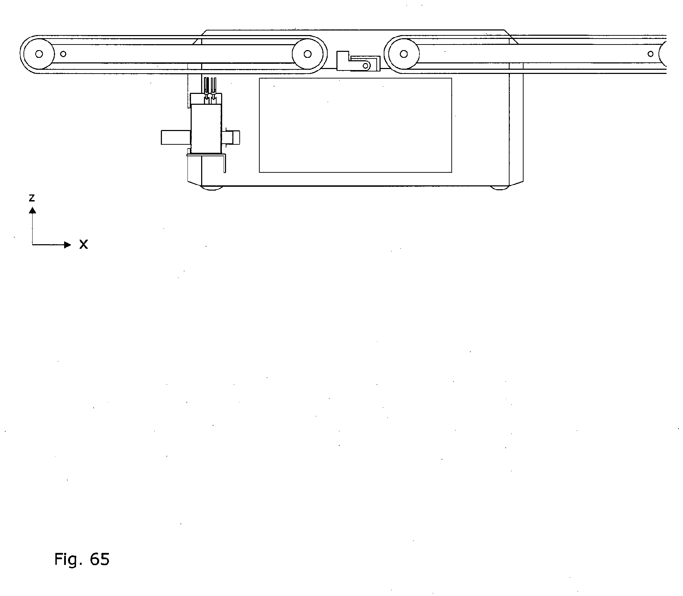

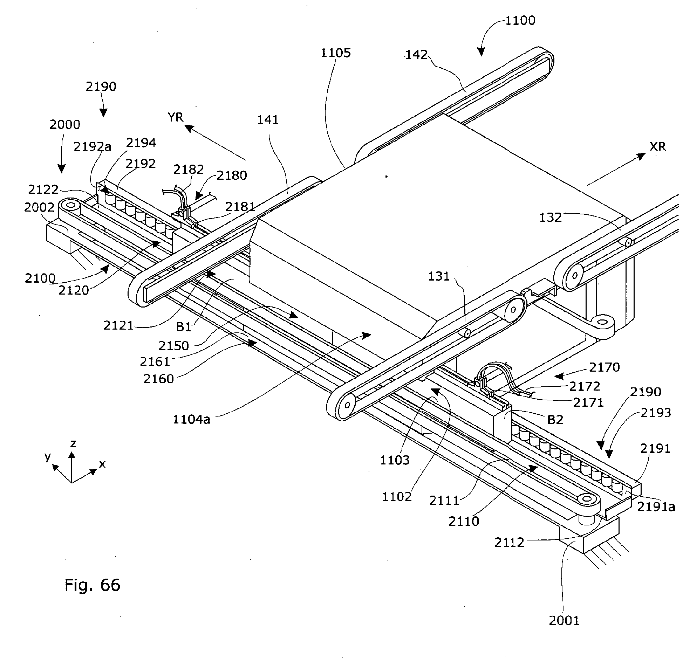

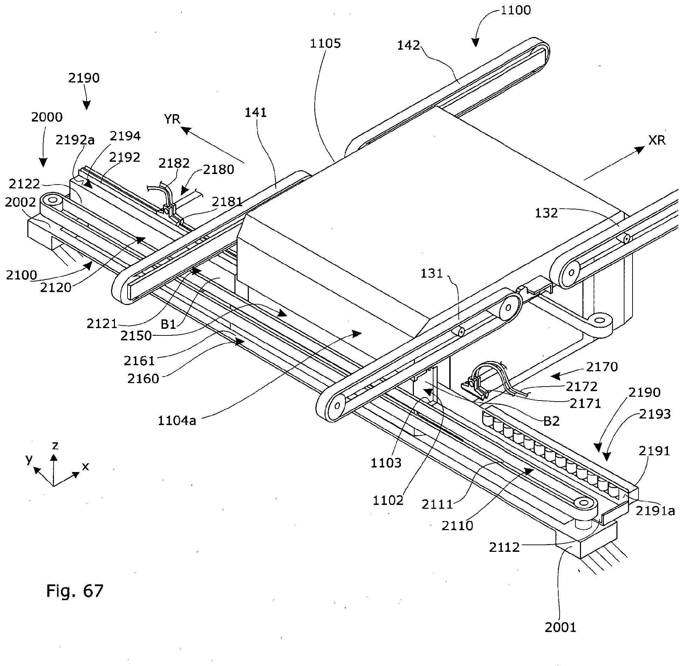

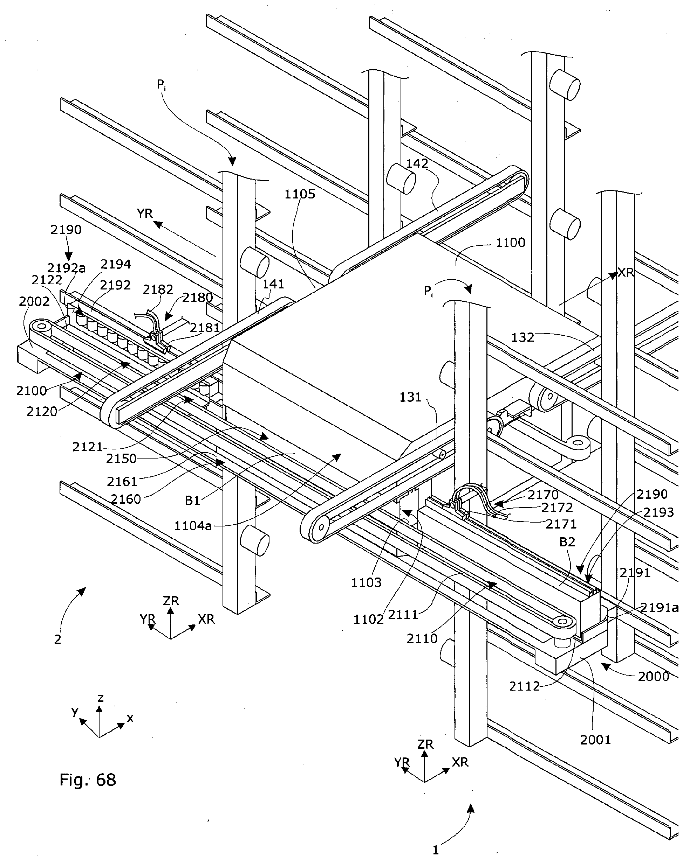

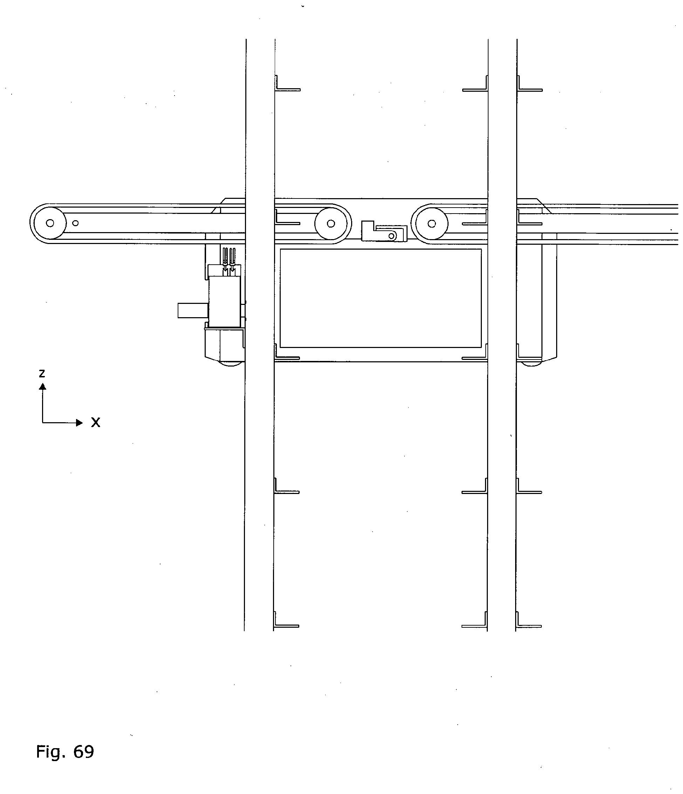

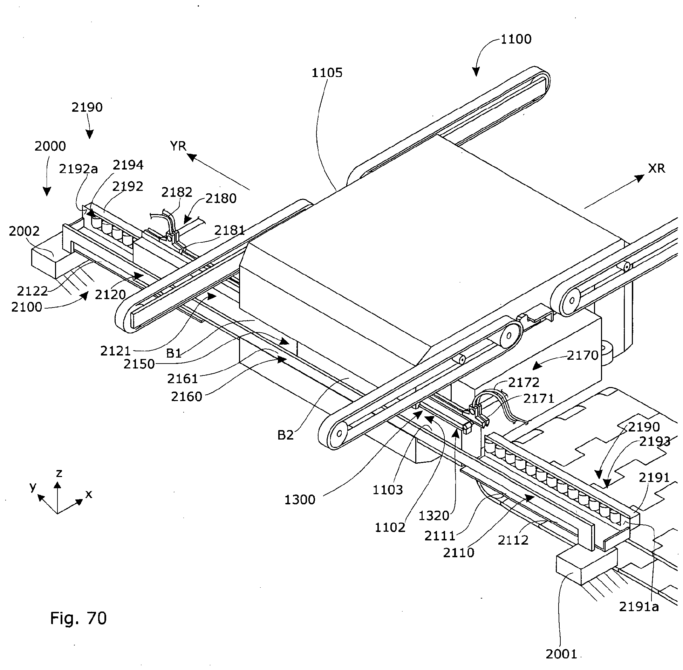

Bei der Ausführungsform der Batterie-Austauschstation 2000 nach der Figur 63 weist die Batterie-Austauschstation eine Austausch-Stellvorrichtung in Form eines Riementriebs 2200 auf. Zwischen dem Riementrieb 2200 und der ersten Begrenzungswand 2191 bzw. der zweiten Begrenzungswand 2192 ist die zu bewegende Batterie gelegen.

Generell kann die Batterie-Austauschstation seitlich über Befestigungsvorrichtungen 2001, 2002 an einem Boden oder einer Träger befestigt sein.

## Patentansprüche

1. Bedienfahrzeug (100; 1100) zum Transport eines Lagerbehälters (LB) entlang eines Lagerregals (1, 2) mit einem Fahrzeugrahmen (110; 1110), der zwei zueinander entgegen gesetzt gelegene Längsseiten (101, 102), quer dazu verlaufende Querseiten (103, 104), einen Aufnahmeraum (120) zur Aufnahme des Lagerbehälters (LB) sowie jeweils eine an zumindest einer der Längsseiten (101, 102) gelegene Durchgangsöffnung (121, 122) ausbildet, durch die ein Lagerbehälter (LB) in den Aufnahmeraum (120) in einer Aufnahmeraum-Einführungsrichtung eingeführt und diesem in einer Aufnahmeraum-Entnahmerichtung entnommen werden kann,
**dadurch gekennzeichnet, dass** das Bedienfahrzeug (100; 1110) zwei Paare (130, 140) von sich entlang der Längsseiten (101, 102) erstreckenden Antriebsraupen (131, 132, 141, 142) zur Abstützung des Bedienfahrzeugs (100; 1110) auf an dem Lagerregal angebrachten Abstützvorrichtungen aufweist, von denen jeweils ein Paar von Antriebsraupen (131, 132, 141, 142) an jeder Längsseite (101, 102) des Bedienfahrzeugs (100) gelenkig angeordnet ist, wobei von jedem Paar (130, 140) jeweils eine Antriebsraupe (131, 141) an einer Querseite (103) und jeweils eine Antriebsraupe (132, 142) an einer zweiten Querseite (104) gelegen ist,
wobei die Antriebsraupen (131, 132, 141, 142) jedes Paars von Antriebsraupen (131, 132, 141, 142) mit jeweils einer Drehvorrichtung mit einer Drehachse angelenkt sind und die Drehachsen entlang der Längsseiten (101, 102) gesehen seitlich des Aufnahmeraums (120) und/oder oberhalb oder unterhalb der Durchgangsöffnung (121, 122) gelegen sind.

2. Bedienfahrzeug (100; 1100) nach dem Anspruch 1, wobei das Bedienfahrzeug (100) eine Fördervorrichtung (300) mit zumindest einem mit einem Antriebsmotor gekoppelten Stellteil aufweist, das derart im Aufnahmeraum (120) gelegen ist, dass dieses an einem im Aufnahmeraum (120) gelegenen Lagerbehälter (LB) anliegt oder zur Anlage gebracht werden kann und das, wenn dieses von dem Antriebsmotor angetrieben ist, den im Aufnahmeraum (120) gelegenen Lagerbehälter (LB) in der Aufnahmeraum-Einführungs- oder Entnahme-Richtung aus dem Aufnahmeraum (120) heraus bewegt.

3. Bedienfahrzeug (100; 1100) nach dem Anspruch 2, wobei die Fördervorrichtung (300) zwei Fördervorrichtungen aufweist, von denen jeweils eine auf jeder Seite des Aufnahmeraums (120) gelegen ist und die derart ausgebildet sind, dass ein Lagerbehälter (LB) von diesen auf entgegen gesetzt zueinander gelegenen Seiten durch die Durchgangsöffnungen in den Aufnahmeraum (120) eingeführt und diesem entnommen werden kann.

4. Bedienfahrzeug (100; 1100) nach einem der vorstehenden Ansprüche, wobei das Bedienfahrzeug (100; 1100) eine Greifvorrichtung (400) zum formschlüssigen Ergreifen eines Lagerbehälters (LB) aufweist, wobei die Greifvorrichtung (400) eine Stellvorrichtung aufweist, mit der der Lagerbehälter (LB) relativ zum Aufnahmeraum (120) verschoben werden kann.

5. Verfahren zum Bewegen eines Bedienfahrzeugs (100; 1100) nach einem der Ansprüche 1 bis 4, 9 und 10 an einer Lagerregal-Anordnung (LA) in Richtung einer Längsrichtung (XW) des Bedienfahrzeugs (100; 1100), wobei das Verfahren alternativ zueinander eines der nachfolgenden Schrittkombinationen A, B oder C aufweist:
Schrittkombination A:
- Ausrichtung von Antriebsraupen (131, 132, 141, 142) des Bedienfahrzeugs (100; 1100) in die Längsrichtung (XW) des Bedienfahrzeugs (100; 1100), wobei jede der Antriebsraupen (131, 132, 141, 142) auf zumindest einem Stützteil (S_{i,j} ) einer Lagerregal-Anordnung (LA) aufliegt und wobei die Antriebsraupen (131, 132, 141, 142) des Bedienfahrzeugs (100; 1100) auf jeder Längsseite (101, 102) auf Stützteilen (S_{i,j} ) verschiedener Lagerregale (1, 2) der Lagerregal-Anordnung (LA) aufliegt,
- Antreiben jeweils eines Antriebsriemen (300) jeder der Antriebsraupen (131, 132, 141, 142) und dadurch Fortbewegen des Bedienfahrzeugs (100) in die Längsrichtung (XW) desselben auf den Stützteilen (S_{i,j} ) zwischen den Lagerregalen (1, 2);
Schrittkombination B:
das Bedienfahrzeug (100; 1100) wechselt zwischen folgenden Betriebszuständen:
- einem Regalbetrieb-Zustand, bei dem das Fortbewegen des Bedienfahrzeugs (100; 1100) in die Längsrichtung (XW) desselben auf Stützteilen (S_{i,j}) zwischen den Lagerregalen (1, 2) erfolgt, wobei die Antriebsraupen (131, 132, 141, 142) auf Stützteilen (Si,ⱼ ) gelegen sind, und
- einem Raupen-Bodenbetriebszustand, bei dem das Bedienfahrzeug (100; 1100) auf den Antriebsraupen (131, 132, 141, 142) auf einem Boden (G) fährt, auf dem die Lagerregale (1, 2) stehen, nachdem die Antriebsraupen (131, 132, 141, 142) in eine Boden-Fahrstellung unter Anheben des Fahrzeugrahmens (110) vom Boden (G) gedreht worden sind,
wobei sich das Bedienfahrzeug (100; 1100) im Übergang vom Regalbetrieb-Zustand zum Raupen-Bodenbetriebszustand oder vom Raupen-Bodenbetriebszustand zum Regalbetrieb-Zustand in einem dritten Übergangs-Betriebszustand befindet, in dem ein an einer ersten Querseite (103) des Bedienfahrzeugs (100; 1100) angelenkte Antriebsraupen (131, 141) auf Stützteilen (S_{i,j} ) der Lagerregale (1, 2) gelegen sind und
gleichzeitig an einer zweiten Querseite (104) des Bedienfahrzeugs (100; 1100) angelenkte Antriebsraupen (132, 142) auf dem Boden aufliegen und dabei den Fahrzeugrahmen (110) relativ zum Boden (G) positioniert;
Schrittkombination C:
- in einem ersten Schritt Fahren des Bedienfahrzeugs (100; 1100) auf dem Boden (G) in einem Fahrwerk-Bodenbetriebszustand auf einem am Fahrzeugrahmen (110) angeordneten Bodenbetrieb-Fahrwerk in einer Richtung, die quer zu sich in einer Längsrichtung (XR) erstreckenden Frontflächen (C_{i,j} ) der Lagerregale (1, 2) verläuft, während sich die Antriebsraupen (131, 132, 141, 142) in einer Drehstellung befinden, bei der diese den Boden (G) nicht berühren,
- anschließend in einem zweiten Schritt Fahren des Bedienfahrzeugs (100; 1100) entlang der Längsrichtung (XR) der Lagerregale (1, 2) und zwischen den Lagerregalen (1, 2) in einem Raupen-Bodenbetriebszustand, bei dem das Bedienfahrzeug (100; 1100) auf den Antriebsraupen (131, 132, 141, 142) auf einem Boden (G) fährt, auf dem die Lagerregale (1, 2) stehen, nachdem die Antriebsraupen (131, 132, 141, 142) in eine Boden-Fahrstellung unter Anheben des Fahrzeugrahmens (110) vom Boden (G) gedreht worden sind.

6. Verfahren nach dem Anspruch 5, wobei die Schrittkombination A die folgenden Schritte aufweist:
- ausgehend von einer Horizontalbetriebs-Stellung der Antriebsraupen (131, 132, 141, 142), bei der sich diese in der Längsrichtung (XW) des Bedienfahrzeugs (100; 1100) erstrecken und das Bedienfahrzeugs (100) auf den Stützteilen (S_{i,j} ) entlang einer Horizontalbahn (BH) bewegt werden kann, gleichsinniges und gleichzeitiges Schwenken der Antriebsraupen (131, 132, 141, 142) um ihre jeweilige Drehachse (131a bzw. 132a bzw. 141a bzw. 142a) in die Richtung einer Diagonalbahn (BD) des jeweiligen Lagerregals (1, 2),
- Antreiben des jeweils einen Antriebsriemens (300) jeder der Antriebsraupen (131, 132, 141, 142) und dadurch Bewegen des Bedienfahrzeug (100; 1100) auf einer Diagonalbahn (BD).

7. Verfahren nach dem Anspruch 6, wobei das gleichsinnige und gleichzeitige Schwenken der Antriebsraupen (131, 132, 141, 142) während der Bewegung des Bedienfahrzeugs (100; 1100) auf den Stützteilen (S_{i,j} ) erfolgt.

8. Lagerregal-Anordnung (LA) mit zwei Lagerregalen (1, 2) und einem mit den Lagerregalen (1, 2) interagierenden Bedienfahrzeug (100; 1100) nach einem der Ansprüche 1 bis 4, wobei jedes der Lagerregale (1, 2) eine Mehrzahl von in einer Längsrichtung (XR) des Lagerregals (1, 2) hintereinander angeordneten Gestellrahmen (Qᵢ ) umfasst, wobei der Gestellrahmen (Qᵢ ) aufweist:
- eine vordere, sich in seiner Längsrichtung vertikal erstreckende Vertikalstange (Rᵢ ), wobei die Vertikalstange (Rᵢ ) zwei zueinander entgegen gesetzt gelegene Seitenflächen oder Außenflächen (Aᵢ ) und (Bᵢ ) aufweist, die jeweils einer Vertikalstange (Rᵢ ) eines in der Längsrichtung (XR) des Lagerregals (1, 2) jeweils benachbarten Gestellrahmens zugewandt ist, und wobei die Vertikalstange (Rᵢ ) eine entgegen der Tiefenrichtung (TR) des Lagerregals (1, 2) orientierte Frontfläche (C_{i,j} ) aufweist;
- eine hintere, sich vertikal erstreckende Vertikalstange (Tᵢ ), die parallel zu der vorderen Vertikalstange (Rᵢ ) desselben Gestellrahmens (Pᵢ ) verläuft;
- eine Mehrzahl von an der Frontfläche (C_{i,j} ) der vorderen Vertikalstange (Sᵢ ) angeordneten Stützteilen (S_{i,j} ) zur Aufnahme von Antriebsraupen (131, 132, 141, 142) des Bedienfahrzeugs (100; 1100), wobei die Stützteile (S_{i,j} ) in der Längsrichtung der jeweiligen vorderen Vertikalstange (Sᵢ ) oder der Höhenrichtung (ZR) des Lagerregals (1, 2) in zueinander identischen Abständen angeordnet sind;
- eine Regalboden-Vorrichtung (U_{i,j} ), die sich flächig horizontal erstreckt und in der Tiefenrichtung (YR) des Lagerregals (1, 2) verläuft, wobei insbesondere vorgesehen sein kann, dass dabei die Regalboden-Vorrichtung (U_{i,j} ) zumindest die vordere Vertikalstange (Rᵢ ) und die hintere Vertikalstange (Tᵢ ) desselben Gestellrahmens (Pᵢ) verbindet,
wobei die Lagerregale (1, 2) derart angeordnet sind, dass die Stützteile (Si,ⱼ ) der Lagerregale (1, 2) aufeinander zu gerichtet sind und sich zwischen den Stützteilen (S_{i,j} ) der beiden Lagerregale (1, 2) ein Fahrbereich (F1) für ein Bedienfahrzeug (100, 1100) ergibt.

9. Bedienfahrzeug (100; 1100) nach einem der Ansprüche 1 bis 4, das Fahrzeug (100; 1100) aufweisend:
einen Fahrzeugrahmen (110; 1110) mit einer Ausnehmung (1102) an einer in die Fahrzeug-Längsrichtung (XR) weisenden Fahrzeug-Seite, die einen Batterie-Aufnahmebereich (1103) zur Aufnahme einer Batterie (B1) für die elektrische Versorgung von elektrischen Komponenten des Fahrzeugs (100; 1100) bildet,
eine Führungsvorrichtung (1200) mit einer Batterie-Führungsbahn (1110), die quer zur Fahrzeug-Längsrichtung (XR) verläuft, so dass eine in die Batterie-Führungsbahn (1110) eingesetzte Batterie (B1) quer zur Fahrzeug-Längsrichtung (XR) bewegbar ist,
eine an dem Fahrzeugrahmen (110; 1110) befestigte Haltevorrichtung (1210) zum Halten der Batterie (B1) an dem Fahrzeugrahmen (110; 1110),
eine Kontaktierungsvorrichtung (1250), die zwei entlang der Batterie-Führungsbahn (1110) gesehen hintereinander angeordnete Anschlussvorrichtungen (1251, 1252) und zumindest eine Kontakt-Haltevorrichtung (1255, 1256) zum Halten der Anschlussvorrichtungen (1251, 1252) aufweist, wobei die Anschlussvorrichtungen (1251, 1252) derart ausgeführt sind, dass diese jeweils mit einem Kontaktierungsabschnitt (1260) einer in die Batterie-Führungsbahn (1110) eingesetzten Batterie (B1) in Kontakt gebracht werden, wobei die Anschlussvorrichtungen (1251, 1252) jeweils eine Leitung aufweist, die die Anschlussvorrichtungen (1251, 1252) mit einer Energieversorgungs-Vorrichtung des Fahrzeugs (100, 1100) elektrisch verbindet.

10. Bedienfahrzeug (100; 1100) nach dem Anspruch 9, das Fahrzeug aufweisend d, wobei die an dem Fahrzeugrahmen (1110) befestigte Haltevorrichtung (1210) zum Halten der Batterie (B1) an dem Fahrzeugrahmen (1110) derart ausgeführt ist, dass die Batterie entlang der Batterie-Führungsbahn (1110) bewegbar ist und von der Haltevorrichtung (1210) quer zu dieser gehalten wird.

11. Lagerregal-Anordnung mit zwei Lagerregalen (1, 2), die sich entlang zueinander und jeweils entlang einer Längsrichtung (XR) und einer Tiefenrichtung (TR) erstrecken, und einem mit den Lagerregalen interagierenden Bedienfahrzeug nach dem Anspruch 9 und einer Batterie-Austauschstation (2000) zum Andocken eines Bedienfahrzeugs (1100) mit einer Batterie (B1) und zum Austausch der im Bedienfahrzeug (1100) befindlichen Batterie (B1) durch eine in der Batterie-Austauschstation (2000) befindlichen Batterie (B2), wobei die Batterie-Austauschstation (2000) aufweist:
eine Austausch-Führungsvorrichtung (2100), die zwei Führungsbahn-Abschnitte (2110, 2120) mit jeweils einer Führungsbahn (2111, 2121) und eine Verbindungsvorrichtung (2160), die die zwei Führungsbahn-Abschnitte (2110, 2120) aneinander befestigt, aufweist, wobei die Führungsbahn-Abschnitte (2110, 2120) in ihrer jeweiligen Verlängerung zueinander verlaufen und zueinander ausgerichtet sind und wobei zwischen den Führungsbahn-Abschnitten (2110, 2120) ein Andockbereich (2150) ausgebildet ist, und
eine erste und eine zweite elektrische Auflade-Anschlussvorrichtung (2170, 2180) jeweils mit einer Auflade-Kontaktierungskomponente (2171, 2181) zur Kontaktierung eines Kontaktierungsabschnitts (1260) einer in einem der Führungsbahn-Abschnitte (2111, 2112) befindlichen Batterie (B2), und
einen zwischen den zwei Führungsbahn-Abschnitten (2111, 2112) gelegenen und als Ausnehmung (2191) ausgebildeten Andockabschnitt (2190), den ein Endabschnitt (1104a) eines Fahrzeugs (1100) mit einer Fahrzeugseite (1104), an der eine in die Batterie-Austauschstation (2000) einzusetzende Batterie (B1) angeordnet ist,
wobei die Batterie-Austauschstation (2000) derart an den Lagerregalen (1, 2) befestigt ist, dass die Führungsbahnen sich quer zur Längsrichtung (XR) der Lagerregale (1, 2) erstrecken, wobei der als Ausnehmung ausgebildete Andockbereich (2150) zwischen den Lagerregalen (1, 2) gelegen ist.

## Claims

1. An operating vehicle (100) for transporting a storage container (LB) along a storage rack (1, 2) comprising a vehicle frame (110) which forms two longitudinal sides (101, 102) located opposite one another, transverse sides (103, 104) extending transversely thereto, a receiving space (120) for receiving the storage container (LB) and a passage (121, 122) each located at at least one of the longitudinal sides (101, 102), through which a storage container (LB) can be inserted into the receiving space (120) in a receiving space insertion direction and from which the storage container can be removed in a receiving space removal direction,
**characterized in that** the operating vehicle (100) further comprises: two pairs (130, 140) of drive crawlers (131, 132, 141, 142) extending along the longitudinal sides (101, 102) for supporting the operating vehicle (100) on support devices mounted on the storage rack, of which one pair each of the drive crawlers (131, 132, 141, 142) is disposed in an articulated manner on each longitudinal side (101, 102) of the operating vehicle (100), wherein of each pair (130, 140) a respective one drive crawler (131, 141) is disposed at a transverse side (103) and a respective one drive crawler (132, 142) is disposed at a second transverse side (104),
wherein the drive crawlers (131, 132, 141, 142) of each pair of drive crawlers (131, 132, 141, 142) are each articulated by means of a rotational device having a rotational axis and viewed along the longitudinal sides (101, 102), the rotational axes are located laterally of the receiving space (120).

2. The operating vehicle (100) according to claim 1, wherein the operating vehicle (100) comprises a conveying device (300) with at least one adjustment part coupled to a drive motor, which is located in the receiving space (120) in such a manner that this abuts against a storage container (LB) located in the receiving space (120) or can be brought into abutment and which, when the same is driven by the drive motor, moves the storage container (LB) located in the receiving space (120) out from the receiving space (120) in the receiving space insertion or removal direction.

3. The operating vehicle (100) according to claim 2, wherein the conveying device (300) comprises two conveying devices of which one each is located on each side of the receiving space (120) and which are configured in such a manner that a storage container (LB) can be inserted into the receiving space (120) and removed from this receiving space by these conveying devices on these sides located opposite one another through the passages.

4. The operating vehicle (100) according to any one of the preceding claims, wherein the operating vehicle (100) comprises a gripping device (400) for positive gripping of a storage container (LB), wherein the gripping device (400) comprises an adjustment device by means of which the storage container (LB) can be displaced relative to the receiving space (120).

5. A method for moving an operating vehicle (100) according to one of the claims 1 to 4, 9 and 10 at a storage rack arrangement (LA) in the direction of a longitudinal direction (XW) of the operating vehicle (100), wherein the method comprises the one of the following step combinations A, B or C:
step combination A:
- alignment of drive crawlers (131, 132, 141, 142) of the operating vehicle (100; 1100) in the longitudinal direction (XW) of the operating vehicle (100; 1100), wherein each of the drive crawlers (131, 132, 141, 142) rests on a support part (S_{i,j} ) of a storage rack arrangement (LA) and wherein the drive crawlers (131, 132, 141, 142) of the operating vehicle (100; 1100) on each longitudinal side (101, 102) rest on support parts (S_{i,j} ) of different storage racks (1, 2) of the storage rack arrangement (LA),
- driving respectively one drive belt (300) of each of the drive crawlers (131, 132, 141, 142) and thereby advancing the operating vehicle (100) in the longitudinal direction (XW) of the same on the support parts (Si,ⱼ ) between the storage racks (1, 2);
step combination B:
the operating vehicle (100; 1100) changes between the following operating states:
- a rack operating state in which the advancement of the operating vehicle (100; 1100) in the longitudinal direction (XW) of the same takes place on the support parts (Si,j) between the storage racks (1, 2), wherein the drive crawlers (131, 132, 141, 142) are located on support parts (S_{i,j} ) and
- a crawler ground operating state in which the operating vehicle (100; 1100) travels on the drive crawlers (131, 132, 141, 142) on a ground (G) on which the storage racks (1, 2) stand after the drive crawlers (131, 132, 141, 142) have been rotated into a ground travelling position by raising the vehicle frame (110) from the ground (G),
wherein in the transition from the rack operating state to the crawler ground operating state or from the crawler ground operating state to the rack operating state, the operating vehicle (100; 1100) is in a third transition operating state in which drive crawlers (131, 141) articulated at a first transverse side (103) of the operating vehicle (100; 1100) are located on support parts (S_{i,j} ) of the storage racks (1, 2) and at the same time drive crawlers (132, 142) articulated at a second transverse side (104) of the operating vehicle (100; 1100) rest on the ground and thereby position the vehicle frame (110) relative to the ground (G).
step combination C:
- in a first step driving the operating vehicle (100; 1100) on the ground (G) in a chassis ground operating state on a ground operating chassis disposed on the vehicle frame (110) in a direction running transversely to the longitudinal direction (XR) of the storage racks (1, 2) whilst the drive crawlers (131, 132, 141, 142) are located in a rotational position in which these do not touch the ground (G),
- then in a second step driving the operating vehicle (100; 1100) along a longitudinal direction (XR) of the storage racks (1, 2) and between the storage racks (1, 2) in a crawler ground operating state in which the operating vehicle (100; 1100) on the drive crawlers (131, 132, 141, 142) travels on a ground (G) on which the storage racks (1, 2) stand, after the drive crawlers (131, 132, 141, 142) have been rotated into a ground driving state by raising the vehicle frame (110) from the ground (G).

6. The method according to claim 5, wherein the step combination A comprises the following steps:
- starting from a horizontal operating position of the drive crawlers (131, 132, 141, 142), in which these extend in the longitudinal direction (XW) of the operating vehicle (100; 1100) and the operating vehicle (100; 1100) can be moved on the support parts (S_{i,j}) along a horizontal path (BH), simultaneous pivoting of the drive crawlers (131, 132, 141, 142) in the same direction about their respective rotational axis (131a or 132a or 141a or 142a) in the direction of a diagonal path (BD) of the respective storage rack (1, 2),
- driving the respectively one drive belt (300) of each of the drive crawlers (131, 132, 141, 142) and thereby moving the operating vehicle (100; 1100) on a diagonal path (BD).

7. The method according to claim 6, wherein the simultaneous pivoting of the drive crawlers (131, 132, 141, 142) in the same direction takes place during the movement of the operating vehicle (100; 1100) on the support parts (Si,ⱼ ).

8. A storage rack arrangement comprising two storage racks (1, 2) and an operating vehicle (100; 1100) according to one of claims 1 to 4 which is interacting with the storage racks (1, 2), wherein each of the storage racks (1, 2) comprises a plurality of rack frames ( Qᵢ ) arranged one behind the other in a longitudinal direction (XR) of the storage rack (1, 2), wherein the rack frame ( Qᵢ ) comprises:
- a front vertical rod (Rᵢ) extending vertically in its longitudinal direction, wherein the vertical rod (Rᵢ) comprises two lateral surfaces or outer surfaces (Aᵢ) and (Bᵢ) located opposite one another, which each face a vertical rod (Rᵢ) of a respectively adjacent rack frame in the longitudinal direction (XR) of the storage rack (1, 2), and wherein the vertical rod (Rᵢ) comprises a front surface (C_{i,j}) which is oriented opposite the depth direction (TR) of the storage rack (1, 2),
- a rear, vertically extending vertical rod (Tᵢ ), which runs parallel to the front vertical rod (Rᵢ) of the same rack frame (Pᵢ );
- a plurality of support parts (S_{i,j} ) disposed on a front surface (C_{i,j}) of the front vertical rod (Sᵢ) for receiving drive crawlers (131, 132, 141, 142) of the operating vehicle (100; 1100), wherein the support parts (S_{i,j} ) are arranged at identical distances from one another in the longitudinal direction of the respective front vertical rod (Sᵢ) or the height direction (ZR) of the storage rack (1, 2);
- a shelf device (U_{i,j} ), which extends flat horizontally and extends in the depth direction (YR) of the storage rack (1, 2), wherein in particular it can be provided that the and at the same time the shelf device (U_{i,j} ) connects at least the front vertical rod (Rᵢ) and the rear vertical rod (Tᵢ ) of the same rack frame (Pᵢ ),
wherein the storage racks (1, 2) are arranged in such a manner that the support parts (S_{i,j}) of the storage racks (1, 2) are directed onto one another and a travel region (F1) for an operating device (100; 1100) is obtained between the support parts (S_{i,j}) of the two storage racks (1, 2).

9. The operating vehicle (100; 1100) according to one of claims 1 to 4, the vehicle (100; 1100) comprising:
a vehicle frame (110; 1110) having a recess (1102) on a vehicle side pointing in the longitudinal direction (XR) which forms a battery receiving region (1103) for receiving a battery (B1) for the electrical supply of electrical components of the vehicle (100; 1100),
a guide device (1200) with a battery guide path (1110) which runs transversely to the vehicle longitudinal direction (XR) so that a battery (B1) inserted into the battery guide path (1110) is movable transversely to the vehicle longitudinal direction (XR),
a holding device (1210) fastened to the vehicle frame (1110) for holding the battery (B1) on the vehicle frame (1110),
a contacting device (1250) which comprises two connection devices (1251, 1252) arranged one behind the other when viewed along the battery guide path (1110) and at least one contact holding device (1255, 1256) for holding the connection devices (1251, 1252), wherein the connection devices (1251, 1252) are designed in such a manner that these can each be brought in contact with a contacting section (1260) of a battery (B1) inserted into the battery guide path (1110), wherein the connection devices (1251, 1252) each have a line which electrically connects the connection devices (1251, 1252) to a power supply device of the vehicle (1100).

10. The operating vehicle (100; 1100) according to claim 9, wherein the holding device (1210) fastened to the vehicle frame (1100) is designed for holding the battery (B1) on the vehicle frame (1110) in such a manner that the battery is movable along the battery guide path (1110) and is held by the holding device (1210) transversely to this.

11. A storage rack arrangement with two storage racks (1, 2), which extend along one another and which each extend along a longitudinal direction (XR) and a depth direction (TR), and with an operating vehicle according to claim 9 which is interacting with the storage racks and with a battery exchange station (2000) for docking an operating vehicle (1100) with a battery (B1) and for exchanging the battery (B1) located in the operating vehicle (1100) by a battery (B2) located in the battery docking station (2000),
an exchange guide device (2100) which comprises two guide path sections (2110, 2120) with respectively one guide path (2111, 2121) and a connecting device (2160), which fastens the two guide path sections (2110, 2120) to one another, wherein the guide path sections (2110, 2120) run in their respective extension to one another and are aligned with respect to one another and wherein a docking region (2150) is formed between the guide path sections (2110, 2120) and
a first and a second electrical charge connection device (2170, 2180) each comprising a charge contacting component (2171, 2181) for contacting a contacting section (1260) of a battery (B2) located in one of the guide path sections (2111, 2112),
a docking section (2190) located between the two guide path sections (2111, 2112) and configured as a recess (2191) at an end section (1104a) of a vehicle (1100) with a vehicle side (1104), on which a battery (B1) to be inserted in the battery exchange station (2000) is disposed,
wherein the battery exchange station (2000) is fastened to the storage racks (1, 2) in such a manner that the guide paths extend transversely to the longitudinal direction (XR) of the storage racks (1, 2), wherein the docking section (2190) configured as a recess (2191) is located between the storage racks (1, 2).

## Revendications

1. Véhicule de commande (100 ; 1100) pour le transport d'un conteneur de stockage (LB) le long d'une étagère de stockage (1, 2) avec un châssis de véhicule (110 ; 1110) formant deux côtés longitudinaux (101, 102) mutuellement opposés, des côtés transversaux (103, 104) s'étendant transversalement à ceux-ci, un espace de réception (120) destiné à recevoir le conteneur de stockage (LB) ainsi qu'une ouverture de passage (121, 122) respective située sur l'un au moins des côtés longitudinaux (101, 102), à travers laquelle un conteneur de stockage (LB) peut être introduit dans l'espace de réception (120) dans une direction d'introduction d'espace de réception et retiré de celui-ci dans une direction de retrait d'espace de réception,
**caractérisé en ce que** le véhicule de commande (100 ; 1100) présente deux paires (130, 140) de chenilles d'entraînement (131, 132, 141, 142) s'étendant le long des côtés longitudinaux (101, 102) pour l'appui du véhicule de commande (100 ; 1100) sur des dispositifs d'appui fixés à l'étagère de stockage, parmi lesquelles une paire de chenilles d'entraînement (131, 132, 141, 142) est respectivement disposée de façon articulée sur chaque côté longitudinal (101, 102) du véhicule de commande (100), dans lequel, dans chaque paire (130, 140), une chenille d'entraînement (131, 141) se situe respectivement sur un côté transversal (103) et une chenilles d'entraînement (132, 142) se situe respectivement sur un deuxième côté transversal (104),
dans lequel les chenilles d'entraînement (131, 132, 141, 142) de chaque paire de chenilles d'entraînement (131, 132, 141, 142) est articulée respectivement avec un dispositif de rotation avec un axe de rotation et les axes de rotation se situent le long des côtés longitudinaux (101, 102) dans une vue latérale de l'espace de réception (120) et/ou au-dessus ou en dessous de l'ouverture de passage (121, 122).

2. Véhicule de commande (100 ; 1100) selon la revendication 1, dans lequel le véhicule de commande (100 ; 1100) présente un dispositif de transport (300) avec au moins une partie de réglage accouplée à un moteur d'entraînement, laquelle est placée de telle façon dans l'espace de réception (120), qu'elle s'applique ou peut être appliquée sur un conteneur de stockage (LB) placé dans l'espace de réception (120) et laquelle, lorsqu'elle est entraînée par le moteur d'entraînement, déplace le conteneur de stockage (LB) situé dans l'espace de réception (120) hors de l'espace de réception (120) dans la direction d'introduction d'espace de réception ou dans la direction de retrait d'espace de réception.

3. Véhicule de commande (100 ; 1100) selon la revendication 2, dans lequel le dispositif de transport (300) présente deux dispositifs de transport, respectivement disposés de part et d'autre de l'espace de réception (120) et conçus de telle façon qu'un conteneur de stockage (LB) peut être introduit par ceux-ci dans l'espace de réception (120) et retiré de celui-ci par des côtés opposés à travers les ouvertures de passage.

4. Véhicule de commande (100 ; 1100) selon l'une des revendications précédentes, dans lequel le véhicule de commande (100 ; 1100) présente un dispositif de préhension (400) pour la saisie d'un conteneur de stockage (LB) par complémentarité de forme, dans lequel le un dispositif de préhension (400) présente un dispositif de réglage permettant de décaler le conteneur de stockage (LB) par rapport à l'espace de réception (120).

5. Procédé de déplacement d'un véhicule de commande (100 ; 1100) selon l'une des revendications 1 à 4, 9 et 10 sur un ensemble d'étagères de stockage (LA) dans une direction longitudinale (XW) du véhicule de commande (100 ; 1100), dans lequel le procédé présente alternativement l'une des combinaisons d'étapes A, B ou C suivantes :
Combinaison d'étapes A :
- orientation de chenilles d'entraînement (131, 132, 141, 142) du véhicule de commande (100 ; 1100) dans la direction longitudinale (XW) du véhicule de commande (100 ; 1100), où chacune des chenilles d'entraînement (131, 132, 141, 142) s'applique sur au moins une partie d'appui (S_{i,j}) d'un ensemble d'étagères de stockage (LA) et dans lequel les chenilles d'entraînement (131, 132, 141, 142) du véhicule de commande (100 ; 1100) s'appliquent sur chaque côté longitudinal (101, 102) sur des parties d'appui (S_{i,j}) de différentes étagère de stockage (1, 2) de l'ensemble d'étagères de stockage (LA),
- entraînement respectif d'une courroie d'entraînement (300) de chaque chenille d'entraînement (131, 132, 141, 142) et par conséquent, déplacement du véhicule de commande (100) vers l'avant dans la direction longitudinale (XW) de celui-ci sur les parties d'appui (S_{i,j}) entre les étagères de stockage (1, 2) ;
Combinaison d'étapes B :
le véhicule de commande (100 ; 1100) alterne entre les états de fonctionnement suivants :
- un état de fonctionnement d'étagères, dans lequel le déplacement du véhicule de commande (100 ; 1100) vers l'avant dans la direction longitudinale (XW) de celui-ci s'effectue sur des parties d'appui (S_{i,j}) entre les étagères de stockage (1, 2), où les chenilles d'entraînement (131, 132, 141, 142) sont placées sur des parties d'appui (S_{i,j}), et
- un état de fonctionnement de chenilles au sol, dans lequel le véhicule de commande (100 ; 1100) se déplace sur les chenilles d'entraînement (131, 132, 141, 142) sur un sol (G) sur lequel les étagères de stockage (1, 2) sont placées, après la rotation des chenilles d'entraînement (131, 132, 141, 142) vers une position de conduite au sol par relèvement du châssis de véhicule (110) par rapport au sol (G),
dans lequel le véhicule de commande (100 ; 1100) passe à un troisième état de fonctionnement de transition, dans la transition entre l'état de fonctionnement d'étagères et l'état de fonctionnement des chenilles au sol ou entre l'état de fonctionnement des chenilles au sol et l'état de fonctionnement d'étagères, dans lequel des chenilles d'entraînement (131, 141) articulées sur un premier côté transversal (103) du véhicule de commande (100 ; 1100) se situent sur des parties d'appui (S_{i,j}) des étagères de stockage (1, 2) et des chenilles d'entraînement (132, 142) articulées sur un deuxième côté transversal (104) du véhicule de commande (100 ; 1100) s'appliquent simultanément sur le sol, positionnant ainsi le châssis de véhicule (110 ; 1110) par rapport au sol (G) ;
Combinaison d'étapes C :
- dans une première étape, déplacement du véhicule de commande (100 ; 1100) sur le sol (G) dans un état de fonctionnement du train de roulement au sol sur un train de roulement pour fonctionnement au sol disposé sur le châssis de véhicule (110), dans une direction, laquelle s'étend transversalement à des surfaces avant (C_{i,j}) des étagères de stockage (1, 2) s'étendant dans une direction longitudinale (XR), tandis que les chenilles d'entraînement (131, 132, 141, 142) se trouvent dans une position de rotation dans laquelle elles ne touchent pas le sol (G),
- puis, dans une deuxième étape, déplacement du véhicule de commande (100 ; 1100) le long de la direction longitudinale (XR) des étagères de stockage (1, 2) et entre les étagères de stockage (1, 2) dans un état de fonctionnement des chenilles au sol, dans lequel le véhicule de commande (100 ; 1100) se déplace sur les chenilles d'entraînement (131, 132, 141, 142) sur un sol (G), sur lequel se situent les étagères de stockage (1, 2), après rotation des chenilles d'entraînement (131, 132, 141, 142) vers une position de conduite au sol par relèvement du châssis de véhicule (110) par rapport au sol (G).

6. Procédé selon la revendication 5, dans lequel la combinaison d'étapes A présente les étapes suivantes :
- à partir d'une position de fonctionnement horizontale des chenilles d'entraînement (131, 132, 141, 142), dans laquelle celles-ci s'étendent dans la direction longitudinale (XW) du véhicule de commande (100 ; 1100) et le véhicule de commande (100) peut être déplacé sur les parties d'appui (S_{i,j}) le long d'une voie horizontale (BH), pivotement simultané des chenilles d'entraînement (131, 132, 141, 142) dans le même sens autour de leur axe de rotation (131a ou 132a ou 141a ou 142a) respectif dans la direction d'une voie diagonale (BD) de l'étagères de stockage (1, 2) respective,
- entraînement de la courroie d'entraînement (300) respective de chacune des chenilles d'entraînement (131, 132, 141, 142) et, par conséquent, déplacement du véhicule de commande (100 ; 1100) sur une voie diagonale (BD).

7. Procédé selon la revendication 6, dans lequel le pivotement simultané des chenilles d'entraînement (131, 132, 141, 142) dans le même sens s'effectue pendant le déplacement du véhicule de commande (100 ; 1100) sur les parties d'appui (S_{i,j}).

8. Ensemble d'étagères de stockage (LA) comprenant deux étagères de stockage (1, 2) et un véhicule de commande (100 ; 1100) selon l'une des revendications 1 à 4 interagissant avec les étagères de stockage (1, 2), dans lequel chacune des étagères de stockage (1, 2) comporte une pluralité de bâtis (Qᵢ) disposés les uns à la suite des autres dans une direction longitudinale (XR) de l'étagère de stockage (1, 2), dans lequel le bâti (Qᵢ) présente :
- une barre verticale avant (Rᵢ) s'étendant verticalement dans la direction longitudinale de celui-ci, la barre verticale (Rᵢ) présentant deux surfaces latérales ou surfaces extérieures (Aᵢ) et (Bᵢ) opposées l'une à l'autre, lesquelles sont tournées respectivement vers une barre verticale (Rᵢ) d'un bâti respectivement adjacent dans la direction longitudinale (XR) de l'étagère de stockage (1, 2), et la barre verticale (Rᵢ) présentant une surface avant (C_{i,j}) orientée dans la direction opposée à la direction de profondeur (TR) de l'étagère de stockage (1, 2) ;
- une barre verticale arrière (Tᵢ) s'étendant verticalement, évoluant parallèlement à la barre verticale avant (Rᵢ) du même bâtis (Pᵢ) ;
- une pluralité de parties d'appui (S_{i,j}) disposées sur la surface avant (C_{i,j}) de la barre verticale avant (Sᵢ) pour la réception de chenilles d'entraînement (131, 132, 141, 142) du véhicule de commande (100 ; 1100), les parties d'appui (S_{i,j}) étant disposées à des distances identiques les unes par rapport aux autres dans la direction longitudinale de la barre verticale avant (Sᵢ) respective ou dans la direction de la hauteur (ZR) de l'étagère de stockage (1, 2) ;
- un dispositif de fond d'étagère (U_{i,j}), lequel s'étend horizontalement de façon planaire et évolue dans la direction de profondeur (YR) de l'étagère de stockage (1, 2), où il peut en particulier être prévu que le dispositif de fond d'étagère (U_{i,j}) relie au moins la barre verticale avant (Rᵢ) et la barre verticale arrière (Tᵢ) du même bâti (Pᵢ),
dans lequel les étagères de stockage (1, 2) sont disposées de telle façon que les parties d'appui (S_{i,j}) des étagères de stockage (1, 2) sont orientées les unes vers les autres et qu'une zone de conduite (F1) pour un véhicule de commande (100 ; 1100) est créée entre les parties d'appui (S_{i,j}) des deux étagères de stockage (1, 2).

9. Véhicule de commande (100 ; 1100) selon l'une des revendications 1 à 4, le véhicule (100 ; 1100) présentant :
un châssis de véhicule (110 ; 1110) avec un évidement (1102) sur un côté de véhicule tourné dans la direction longitudinale du véhicule (XR), lequel forme une zone de réception de batterie (1103) destinée à recevoir une batterie (B1) pour l'alimentation électrique de composants électriques du véhicule (100 ; 1100),
un dispositif de guidage (1200) avec une piste de guidage de batterie (1110) s'étendant transversalement à la direction longitudinale du véhicule (XR), de sorte qu'une batterie (B1) introduite dans la piste de guidage de batterie (1110) peut être déplacée transversalement à la direction longitudinale du véhicule (XR),
un dispositif de maintien (1210) fixée au châssis de véhicule (110 ; 1110) pour le maintien de la batterie (B1) sur le châssis de véhicule (110 ; 1110),
un dispositif de mise en contact (1250) présentant deux dispositifs de raccordement (1251, 1252) disposés l'un à la suite de l'autre vus le long de la piste de guidage de batterie (1110) et au moins un dispositif de maintien de contact (1255, 1256) pour le maintien des dispositifs de raccordement (1251, 1252), les dispositifs de raccordement (1251, 1252) étant conçus de manière à être mis en contact respectivement avec une section de mise en contact (1260) d'une batterie (B1) introduite dans la piste de guidage de batterie (1110), les dispositifs de raccordement (1251, 1252) présentant respectivement une ligne reliant électriquement les dispositifs de raccordement (1251, 1252) à un dispositif d'alimentation en énergie du véhicule (100 ; 1100).

10. Véhicule de commande (100 ; 1100) selon la revendication 9, présentant le véhicule d, dans lequel le dispositif de maintien (1210) fixé au châssis de véhicule (1110) pour le maintien de la batterie (B1) sur le châssis de véhicule (1110) est conçu de telle façon que la batterie peut être déplacée le long de la piste de guidage de batterie (1110) et maintenue transversalement à celle-ci par le dispositif de maintien (1210).

11. Ensemble d'étagères de stockage comprenant deux étagères de stockage (1, 2) s'étendant l'une le long de l'autre et respectivement le long d'une direction longitudinale (XR) et d'une direction de profondeur (TR), et un véhicule de commande selon la revendication 9 interagissant avec les étagères de stockage et une station de remplacement de batterie (2000) pour l'accouplement d'un véhicule de commande (1100) avec une batterie (B1) et pour le remplacement de la batterie (B1) située dans le véhicule de commande (1100) par une batterie (B2) située dans la station de remplacement de batterie (2000), la station de remplacement de batterie (2000) présentant :
un dispositif de guidage de remplacement (2100) présentant deux sections de piste de guidage (2110, 2120) comportant respectivement une piste de guidage (2111, 2121) et un dispositif d'assemblage (2160) fixant les deux sections de piste de guidage (2110, 2120) l'une à l'autre, les sections de piste de guidage (2110, 2120) évoluant l'une vers l'autre dans leur extension et étant orientées l'une vers l'autre et une zone d'accouplement (2150) étant formée entre les sections de piste de guidage (2110, 2120), et
un premier et un deuxième dispositif de raccordement de charge électrique (2170, 2180) comportant respectivement un composant de mise en contact de charge (2171, 2181) pour la mise en contact d'une section de mise en contact (1260) d'une batterie (B2) située dans l'une des sections de piste de guidage (2111, 2112), et
une section d'accouplement (2190) située entre les deux sections de piste de guidage (2111, 2112) et conçue comme un évidement (2191), laquelle accouple une section d'extrémité (1104a) d'un véhicule (1100) avec un côté véhicule (1104) sur lequel est disposée une batterie (B1) à introduire dans la station de remplacement de batterie (2000),
dans lequel la station de remplacement de batterie (2000) est fixée de telle façon aux étagères de stockage (1, 2), que les pistes de guidage s'étendent transversalement à la direction longitudinale (XR) des étagères de stockage (1, 2), la zone d'accouplement (2150) conçue comme un évidement étant disposée entre les étagères de stockage (1, 2).
